# EUROPEAN PATENT SPECIFICATION

(11) **EP 4 119 381 B1**
(45) Date of publication and mention of the grant of the patent: **30.04.2025**
(21) Application number: 22180557.5
(22) Date of filing: 22.06.2022
(51) Int. Cl.: B60K 37/10, A01B 59/00, E02F 9/20

(54) **WORK MACHINE**
ARBEITSMASCHINE
MACHINE DE TRAVAIL

(30) Priority: 29.06.2021 JP 2021107869
(43) Date of publication of application: 18.01.2023
(73) Proprietor: Kubota Corporation, Osaka-shi, Osaka 556-8601 (JP)
(72) Inventor: Kosaki, Takashi, Osaka (JP)
(74) Representative: Osha BWB

(56) References cited:
- EP-A1- 3 214 229
- EP-A1- 3 674 834
- EP-A2- 3 581 720
- WO-A1-2015/019943
- JP-A- 2016 034 238

## Description

### BACKGROUND

### [Technical Field]

The present invention relates to a work machine such as a tractor.

### [Description of Related Art]

Conventionally, as art whereby settings relating to a work machine such as a tractor can be configured, that illustrated in patent literature 1 is known. In the work machine disclosed in patent literature 1, a plurality of setting items is displayed on a display disposed near a driver seat, and a plurality of buttons is displayed that changes a setting value or the like for each setting item.

### [Patent Literature]

[Patent Literature 1] JP 2016-34237 A
[Patent Literature 2] EP 3 581 720 A2
[Patent Literature 3] EP 3 214 229 A1

### [Summary of Invention]

### [Problem to Be Solved by Invention]

In the work machine of patent literature 1, due to the plurality of setting items displayed on the display and the plurality of buttons being displayed, in a screen of the display, a ratio occupied by the plurality of buttons is high, and the reality is that setting items displayed on the screen are limited. Moreover, in the work machine, when changing a setting value of a predetermined setting item from among the plurality of setting items, a button corresponding to the predetermined setting item must be found from among the plurality of buttons, which is very cumbersome.

Patent literature 2 relates to a working machine such as a tractor and provides a working machine and a display device for the working machine configured to display many setting items and to easily change setting information corresponding to the setting items. The display device includes a plurality of setting boxes, each including: an item display portion representing a setting item relating to the working machine; and a setting display portion representing setting information of the setting item. The plurality of setting boxes are displayed on a screen, and a setting input portion to input the setting information corresponding to the setting item of each of the setting boxes is displayed on the screen in addition to the plurality of setting boxes displayed on the screen.

Patent literature 3 describes a work vehicle allowing an operator to easily check the vertical position and the angle of a bucket. The work vehicle may be a tractor having a front loader that comprises a bucket. The tractor is capable of operating the bucket such that same can be freely raised, lowered, and rotated, and comprises a display in the vicinity of an operator's seat, said display displaying a loader screen. The loader screen displays graphs indicating height information for the bucket and graphs indicating angle information.

### SUMMARY

In view of the above problem, one or more embodiments of the present invention provide a work machine wherein settings relating to functions of the work machine can be easily called up.

### [Means for Solving Problem]

Technical means of the present invention for solving this technical problem have the following characteristic features.

In one aspect of the present invention, a work machine is defined as in claim 1. Embodiments of the work machine are defined in the dependent claims.

According to the present invention, a work machine comprises: a control device configured to control the work machine and: store, in a storage (i.e., storage unit), a plurality of types of setting information that are set for setting items relating to functions of the work machine; among the plurality of types of setting information, associate one or more types of selected setting information with one another, as one lower group, and store, in the storage, a plurality of the lower groups; and among the plurality of lower groups stored in the storage, associate one or more selected lower groups with one upper group, and store, in the storage, a plurality of the upper groups. The above-mentioned work machine further comprises: an upper-group selector (i.e., upper-group selection unit) that is controlled by the control device and is configured to select one of the upper groups stored in the storage; and a lower-group selector (i.e., lower-group selection unit) that is controlled by the control device and is configured to select one of the lower groups associated with the one of the upper groups, wherein the control device is configured to control the work machine based on the one or more types of selected setting information associated with one another as the one of the lower groups.

According to one or more embodiments, the above work machine may comprise or be provided with: an upper-group reader (i.e., upper-group reading unit) that is controlled by the control device and is configured to read the upper groups stored in the storage; a lower-group reader (i.e., lower-group reading unit) that is controlled by the control device and is configured to read the lower groups stored in the storage; and a display controller (i.e., display control unit) configured to display, on a display, the upper groups read by the upper-group reader or the lower groups read by the lower-group reader, based on signals output from the control device.

According to one or more embodiments, the above work machine may comprise or be provided with: an upper-group reading switch configured to output, upon receiving a user operation, a signal that instructs the control device to cause the upper-group reader to operate (to read the upper groups); and a lower-group reading switch configured to output, upon receiving a user operation, a signal that instructs the control device to cause the lower-group reader to operate (to read the lower groups).

According to one or more embodiments, the above work machine may comprise or be provided with: an upper-group selection switch configured to output, upon receiving a user operation, a signal that instructs the control device to cause the upper-group selector to operate (to select the one of the upper groups); and a lower-group selection switch configured to output, upon receiving a user operation, a signal that instructs the control device to cause the lower-group selector to operate (to select the one of the lower groups).

According to one or more embodiments, while the work machine is traveling, the control device may disable the signals output by the upper-group selection switch and the lower-group selection switch.

According to one or more embodiments, the upper-group reading switch, the lower-group reading switch, the upper-group selection switch, and the lower-group selection switch may be physical switches. The lower-group selection switch may be disposed in a position adjacent to the upper-group selection switch.

According to one or more embodiments, the upper-group reading switch and the lower-group reading switch may be disposed in positions opposite of the lower-group selection switch relative to the upper-group selection switch.

According to one or more embodiments, the upper-group selection switch may be configured as a rotary selector.

According to one or more embodiments, the above work machine may comprise or provided with: a driver seat; and an arm rest disposed at a side of the driver seat. The upper-group reading switch, the lower-group reading switch, the upper-group selection switch, and the lower-group selection switch may be disposed in the arm rest.

According to one or more embodiments, the work machine may comprise an operation panel configured to display preset buttons and receive a user operation to: select one or more of the setting items, and specify one of the preset buttons. Once the one of the preset buttons is specified by the user operation, the control device determines the one or more of the setting items as a preset corresponding to the one of the preset buttons. Upon receiving a user operation on the one of the preset buttons, the operation panel displays the one or more of the setting items determined as the preset. Once the operation panel receives a user operation to add or remove a setting item to or from the one or more of the setting items, the control device adds or removes the setting item to or from the preset.

According to one or more embodiments, the operation panel may be further configured to display patch buttons and receive a user operation to: select one or more of presets each corresponding to the one or more of the setting items, and specify one of the patch buttons. Once the one of the patch buttons is specified by the user operation, the control device determines the one or more of presets as a patch corresponding to the one of the patch buttons.

According to one or more embodiments, the work machine may further comprise: a driver seat; and an arm rest disposed at a side of the driver seat and comprising a control panel disposed between a front end and a center in a longitudinal direction of the arm rest. The control panel may comprise: a physical preset reading button configured to output, upon being operated, a preset reading command causing the control device to read the presets stored as the lower groups; and a physical patch reading button configured to output, upon being operated, a patch reading command causing the control device to read the patches stored as the upper groups.

According to one or more embodiments of the present invention, settings relating to functions of a work machine can be easily called up.

### [Brief Description of Drawings]

FIG. 1A is a configuration view of a gearshift apparatus.
FIG. 1B is a perspective view of a raising and lowering apparatus.
FIG. 1C is a diagram illustrating a control block diagram of a work machine.
FIG. 2 is a diagram illustrating one example of a settings viewing screen M1.
FIG. 3A is a diagram illustrating a list of a plurality of setting boxes.
FIG. 3B illustrates a list of a plurality of viewing boxes.
FIG. 4A is a diagram illustrating the settings viewing screen M1 in a state wherein a setting input portion is in an active state.
FIG. 4B is a diagram illustrating the settings viewing screen M1 in a state wherein the setting input portion is in an inactive state.
FIG. 4C is a diagram illustrating another settings viewing screen M1 in the state wherein the setting input portion is in the inactive state.
FIG. 5 is a diagram illustrating one example of a brightness settings screen M2.
FIG. 6 is a diagram illustrating one example wherein a brightness of the setting input portion (region) is changed.
FIG. 7A is a diagram illustrating a registration screen M3 of when a label of a setting item is selected.
FIG. 7B is a diagram illustrating the registration screen M3 of when a label of a viewing item is selected.
FIG. 8A is a first diagram illustrating a state of when an icon is selected in the registration screen M3.
FIG. 8B is a second diagram illustrating a state of when an icon is selected in the registration screen M3.
FIG. 9 is a diagram illustrating the settings viewing screen M1 of when an icon is selected in the registration screen M3 of FIG. 8B.
FIG. 10 is a diagram illustrating one example of a conditions setting screen M4.
FIG. 11 is a diagram illustrating one example of an attitude setting screen M5.
FIG. 12 is a diagram illustrating a positional relationship between the setting input portion and a tractor (machine body)
FIG. 13A is a diagram illustrating a state wherein the tractor is lowered to the right.
FIG. 13B is a diagram illustrating a state wherein the tractor is lowered to the left.
FIG. 14A is a diagram illustrating the setting input portion in the state wherein the tractor is lowered to the right.
FIG. 14B is a diagram illustrating the setting input portion in the state wherein the tractor is lowered to the left.
FIG. 15 is a diagram illustrating one example of a raising settings screen M6.
FIG. 16 is a diagram illustrating one example of a PTO settings screen M7.
FIG. 17 is a diagram illustrating one example of a raising and lowering settings screen M8.
FIG. 18A is a diagram illustrating a state wherein motor icons and velocity icons are displayed.
FIG. 18B is an explanatory diagram for describing that a velocity icon is in an inactive state.
FIG. 18C is an explanatory diagram for describing that the motor icons and the velocity icons are in an active state.
FIG. 18D is an explanatory diagram for describing that a velocity icon is in an inactive state.
FIG. 19 is a diagram illustrating one example of a one-touch settings screen M9.
FIG. 20 is a diagram illustrating a plurality of setting items stored in a storage unit.
FIG. 21 is a diagram illustrating one example of a box settings screen M10.
FIG. 22A illustrates the box settings screen M10 wherein a plurality of candidate boxes is aligned.
FIG. 22B is a diagram illustrating a state wherein a first candidate box is selected as a display box.
FIG. 22C is a diagram illustrating a state wherein a second candidate box is selected as the display box.
FIG. 22D is a diagram illustrating a state wherein an eighth candidate box is selected as the display box.
FIG. 22E is a diagram illustrating a state wherein a seventh candidate box is selected as the display box.
FIG. 22F is a diagram illustrating a state wherein candidate boxes (display boxes) are set by being lined up in one row.
FIG. 23 is a diagram representing a preset settings screen.
FIG. 24 is a diagram illustrating a database representing relationships between patches, which are an upper group, and presets, which are a lower group.
FIG. 25 is a diagram illustrating a patch settings screen.
FIG. 26 is a diagram illustrating a patches list.
FIG. 27 is a diagram illustrating a presets list.
FIG. 28 is a diagram illustrating dispositions of a driver seat, an arm rest, and a work memory registration controller provided in a cabin.
FIG. 29 is a diagram illustrating details of the arm rest illustrated in the lower part of FIG. 28.
FIG. 30 is a diagram illustrating an upper face of the work memory registration controller.
FIG. 31 is a side view of a jog dial.
FIG. 32 is an overall view of the tractor according to one or more embodiments.

### [Detailed Description of Embodiments]

Embodiments of the present invention is described below based on the drawings.

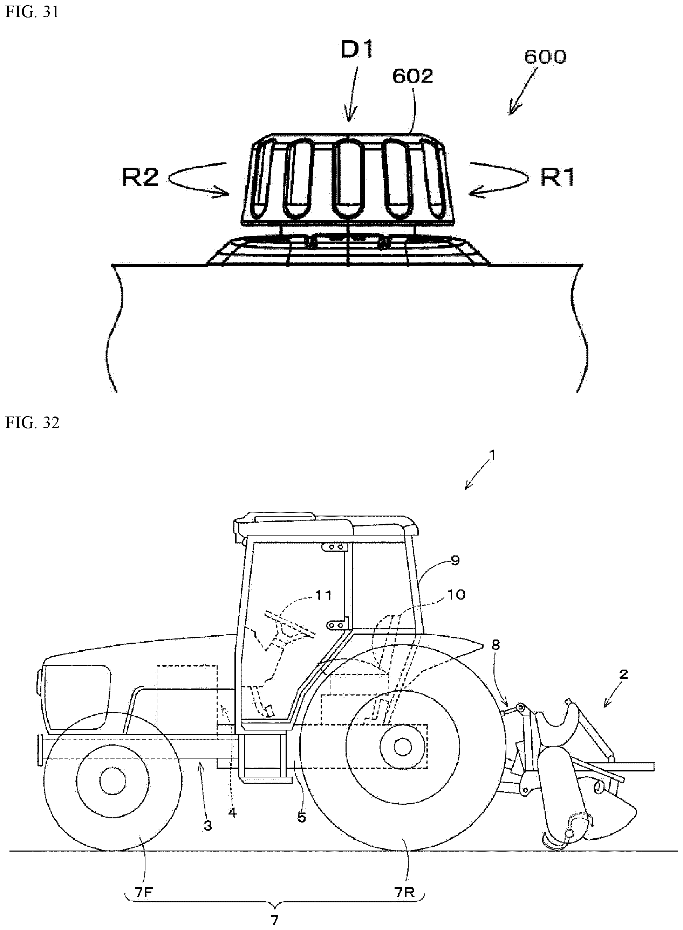

FIG. 32 illustrates a tractor 1 that is one example of a work machine. Although the tractor 1 is described as an example, the work machine is not limited to a tractor and is an agricultural machine such as a rice planting machine.

As illustrated in FIG. 32, the tractor 1 is provided with a travel vehicle (machine body) 3, which has a travel apparatus 7; a motor 4; a gearshift apparatus 5; and a steering apparatus 11. The travel apparatus 7 is an apparatus having a front wheel 7F and a rear wheel 7R. The front wheel 7F may be of a tire type or a crawler type. Moreover, the rear wheel 7 may also be of a tire type or a crawler type. The motor 4 is an internal combustion engine, such as a gasoline engine or a diesel engine; an electric motor; or the like. In one or more embodiments, the motor 4 is a diesel engine.

The gearshift apparatus 5 can switch a driving force of the travel apparatus 7 by gear shifting and can switch between forward travel and reverse travel of the travel apparatus 7. The machine body 3 is provided with a cabin 9, and a driver seat 10 is provided in this cabin 9.

Furthermore, a raising and lowering apparatus 8 is provided to a rear portion of the machine body 3. A work apparatus 2 can be attached to and detached from the raising and lowering apparatus 8. Moreover, the raising and lowering apparatus 8 can raise and lower the mounted work apparatus 2. The work apparatus 2 is a tilling apparatus that tills, a fertilizer spreading apparatus that spreads a fertilizer, an agrochemical spreading apparatus that spreads an agrochemical, a harvesting apparatus that harvests, a mowing apparatus that mows grass or the like, a scattering apparatus that scatters grass or the like, a grass collecting apparatus that collects grass or the like, a shaping apparatus that shapes grass or the like, or the like. Note that FIG. 32 illustrates an example wherein a tilling apparatus is installed as the work apparatus 2.

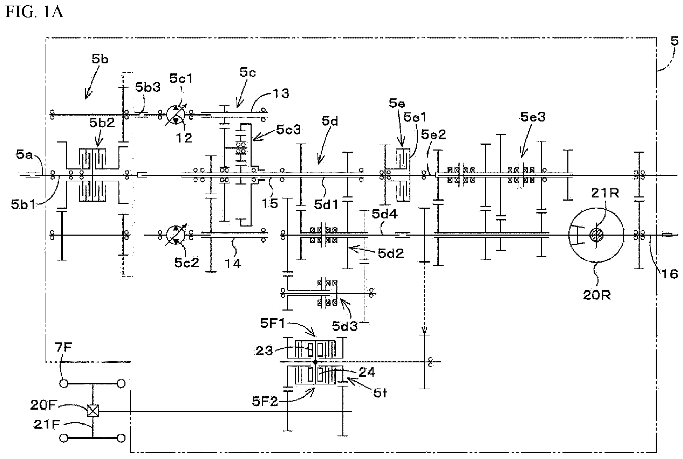

As illustrated in FIG. 1A, the gearshift apparatus 5 is provided with a main shaft (driveshaft) 5a, a shuttle unit 5b, a main gearshift unit 5c, an auxiliary gearshift unit 5d, a PTO power transmission unit 5e, and a front gearshift unit 5f. The driveshaft 5a is rotatably supported in a housing case of the gearshift apparatus 5, and power from a crankshaft of the motor 4 is transmitted to this driveshaft 5a.

The shuttle unit 5b has a shuttle shaft 5b1 and a forward-reverse switching unit 5b2. Power from the driveshaft 5a is transmitted to the shuttle shaft 5b1. The forward-reverse switching unit 5b2 is constituted by, for example, a hydraulic clutch, and engaging and disengaging the hydraulic clutch switches a rotation direction of the shuttle shaft 5b1-that is, switches the tractor 1 between forward travel and reverse travel.

The main gearshift unit 5c is a stepless gearshift mechanism that steplessly changes input power. The stepless gearshift mechanism has a hydraulic pump 5c1, a hydraulic motor 5c2, and a planetary gear mechanism 5c3. The hydraulic pump 5c1 rotates due to power from an output shaft 5b3 of the shuttle unit 5b. The hydraulic pump 5c1 is, for example, a variable displacement pump having a swash plate 12, and changing an angle of the swash plate 12 (swash-plate angle) can change a flow rate of a hydraulic fluid discharged from this hydraulic pump 5c1. The hydraulic motor 5c2 is a motor that rotates due to a hydraulic fluid discharged from the hydraulic pump 5c1 via an oil-channel circuit such as piping. A rotation speed of the hydraulic motor 5c2 can be changed by changing the swash-plate angle of the hydraulic pump 5c1 or changing the power input to the hydraulic pump 5c1.

The planetary gear mechanism 5c3 is a mechanism configured by a plurality of gears (gears) and power transmission shafts such as an input shaft and an output shaft. It includes an input shaft 13, whereto power of the hydraulic pump 5c1 is input; an input shaft 14, whereto power of the hydraulic motor 5c2 is input; and an output shaft 15 that outputs power. The planetary gear mechanism 5c3 synthesizes the power of the hydraulic pump 5c1 and the power of the hydraulic motor 5c2 and transmits the synthesized power to the output shaft 15.

Therefore, according to the main gearshift unit 5c, changing the swash-plate angle of the swash plate 12 of the hydraulic pump 5c1, a rotation speed of the motor 4, and the like can change power output to the auxiliary gearshift unit 5d. Note that the main gearshift unit 5c is configured as a stepless gearshift mechanism but may be a stepped gearshift mechanism that performs shifting according to gears.

The auxiliary gearshift unit 5d is a gearshift mechanism having a stepped plurality of gears (gears) that shifts power. It changes and outputs (shifts) the power input from the output shaft 15 of the planetary gear mechanism 5c3 to this auxiliary gearshift unit 5d by appropriately changing a connection (meshing) between the plurality of gears. The auxiliary gearshift unit 5d includes an input shaft 5d1, a first gearshift clutch 5d2, a second gearshift clutch 5d3, and an output shaft 5d4. The input shaft 5d1 is a shaft whereto the power of the output shaft 15 of the planetary gear mechanism 5c3 is input and inputs the input power to the first gearshift clutch 5d2 and the second gearshift clutch 5d3 via a gear or the like. Switching between respectively engaging and disengaging the first gearshift clutch 5d2 and the second gearshift clutch 5d3 changes the input power and outputs this to the output shaft 5d4. The power output to the output shaft 5d4 is transmitted to a rear-wheel differential apparatus 20R. The rear-wheel differential apparatus 20R rotatably supports a rear axle 21R whereon the rear wheel 7R is installed.

The PTO power transmission unit 5e has a PTO clutch 5e1, a PTO driveshaft 5e2, and a PTO gearshift unit Se3. The PTO clutch 5e1 is constituted by, for example, a hydraulic clutch, and engaging and disengaging the hydraulic clutch switches between a state wherein the power of the driveshaft 5a is transmitted to the PTO driveshaft 5e2 and a state wherein the power of the driveshaft 5a is not transmitted to the PTO driveshaft 5e2. The PTO gearshift unit 5e3 includes a gearshift clutch, a plurality of gears, and the like. It changes and outputs power (a rotation speed) input from the PTO driveshaft 5e2 to the PTO gearshift unit 5e3.

Power of the PTO gearshift unit 5e3 is transmitted to a PTO shaft 16 via a gear or the like.

The front gearshift unit 5f has a first front gearshift clutch 5f1 and a second front gearshift clutch 5f2. The first front gearshift clutch 5f1 and the second front gearshift clutch 5f2 can transmit power from the auxiliary gearshift unit 5d. For example, power of the output shaft 5d4 is transmitted via a gear and a transmission shaft. Power from the first front gearshift clutch 5f1 and the second front gearshift clutch 5f2 can be transmitted to a front axle 21F via a front transmission shaft 22. Specifically, the front transmission shaft 22 is connected to a front-wheel differential apparatus 20F, and the front-wheel differential apparatus 20F rotatably supports the front axle 21F, whereon the front wheel 7F is installed.

The first front gearshift clutch 5f1 and the second front gearshift clutch 5f2 are constituted by a hydraulic clutch or the like. An oil channel is connected to the first front gearshift clutch 5f1, and this oil channel is connected to a control valve 23 whereto a hydraulic fluid discharged from a hydraulic pump is supplied. The first front gearshift clutch 5f1 switches between an engaged state and a disengaged state according to an opening degree of the control valve 23. An oil channel is connected to the second front gearshift clutch 5f2, and this oil channel is connected to a control valve 24. The second front gearshift clutch 5f2 switches between an engaged state and a disengaged state according to an opening degree of the control valve 24. The control valve 23 and the control valve 24 are, for example, a two-way selector valve including an electromagnetic valve and switch to the engaged state or the disengaged state by magnetizing or demagnetizing a solenoid of the electromagnetic valve.

When the first front gearshift clutch 5f1 is in the disengaged state and the second front gearshift clutch 5f2 is in the engaged state, the power of the auxiliary gearshift unit 5d is transmitted to the front wheel 7F through the second front gearshift clutch 5f2. This engages four-wheel drive (4WD), wherein front wheels and rear wheels are driven by power, and rotation speeds of the front wheels and the rear wheels become substantially the same (4WD equal-speed state). Meanwhile, when the first front gearshift clutch 5f1 is in the engaged state and the second front gearshift clutch 5f2 is in the disengaged state, four-wheel drive is engaged, and the rotation speed of the front wheels becomes faster than the rotation speed of the rear wheels (4WD increased-speed state). Moreover, when the first front gearshift clutch 5f1 and the second front gearshift clutch 5f2 are in the engaged state, the power of the auxiliary gearshift unit 5d is not front wheel 7F. As such, two-wheel drive (2WD) is engaged, wherein the rear wheels are driven by power.

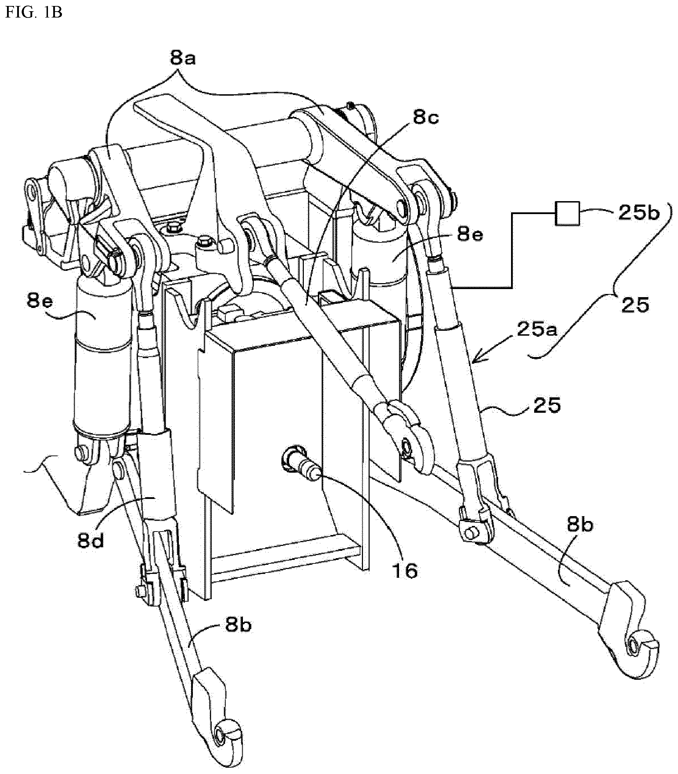

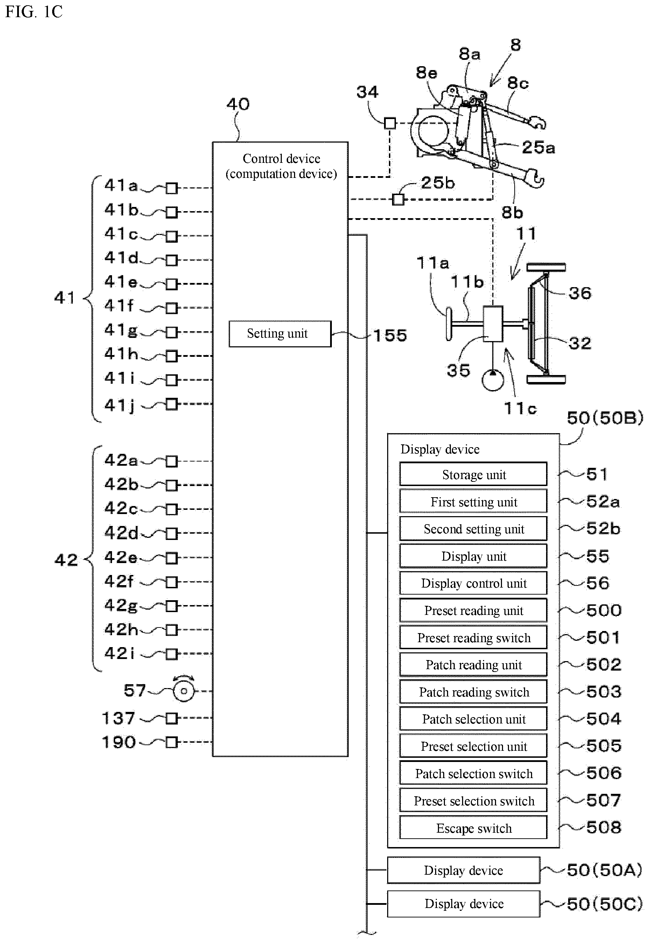

As illustrated in FIG. 1B and FIG. 1C, the raising and lowering apparatus 8 has a lift arm 8a, a lower link 8b, a top link 8c, a lift rod 8d, and a lift cylinder 8e. A front end portion of the lift arm 8a is supported, so as to be able to swing up and down, by an upper-rear portion of a case (transmission case) housing the gearshift apparatus 5. The lift arm 8a swings (is raised and lowered) by being driven by the lift cylinder 8e. The lift cylinder 8e is constituted by a hydraulic cylinder. The lift cylinder 8e is connected to a hydraulic pump via a control valve 34. The control valve 34 is an electromagnetic valve or the like and extends and retracts the lift cylinder 8e.

A front end portion of the lower link 8b is supported, so as to be able to swing up and down, by a lower-rear portion of the gearshift apparatus 5. A front end portion of the top link 8c is supported, so as to be able to swing up and down, by a rear portion of the gearshift apparatus 5, above the lower link 8b. The lift rod 8d couples the lift arm 8a and the lower link 8b. The work apparatus 2 is coupled to a rear portion of the lower link 8b and a rear portion of the top link 8c. When the lift cylinder 8e is driven (extended or retracted), the lift arm 8a is raised or lowered, and the lower link 8b coupled to the lift arm 8a via the lift rod 8d is raised or lowered. This causes the work apparatus 2 to swing up or down (be raised or lowered) with a front portion of the lower link 8b as a fulcrum.

The raising and lowering apparatus 8 is provided with an attitude changing apparatus 25. The attitude changing apparatus 25 is an apparatus that changes an attitude of the work apparatus 2 mounted to the machine body 3. The attitude changing apparatus 25 has a changing cylinder 25a, constituted by a hydraulic cylinder, and a control valve 25b. The changing cylinder 25a is connected to a hydraulic pump via the control valve 25b. The control valve 25b is an electromagnetic valve or the like and extends and retracts the changing cylinder 25a. The changing cylinder 25a couples the lift arm 8a and the lower link 8b.

As illustrated in FIG. 1C, the steering apparatus 11 has a handle (steering wheel) 11a, rotation shaft (steering shaft) 11b that rotates in conjunction with rotation of the handle 11a, and an assisting mechanism (power steering mechanism) 11c that assists steering of the handle 11a. The assisting mechanism 11c includes a control valve 35 and a steering cylinder 32. The control valve 35 is a three-way selector valve that can be switched by movement of, for example, a spool. Moreover, the control valve 35 can also be switched by steering of the steering shaft 11b. The steering cylinder 32 is connected to an arm (knuckle arm) 36 that changes an orientation of the front wheel 7F. Therefore, operating the handle 11a switches a switching position and opening degree of the control valve 35 according to this handle 11a, and the steering cylinder 32 extending or retracting to the left or right according to the switching position and opening degree of this control valve 35 can change a steering direction of the front wheel 7F. Note that the above steering mechanism 11 is one example and is not limited to the above configuration.

As illustrated in FIG. 1C, the tractor 1 is provided with a control device 40 that comprises a central processing unit (CPU) and controls an entire display device 50 described later. The control device 40 is a device that performs various controls of the tractor 1. A plurality of detection devices 41 is connected to the control device 40. The plurality of detection devices 41 is devices that detect a state of the tractor 1 and is, for example, a water-temperature sensor 41a that detects a water temperature, a fuel sensor 41b that detects a remaining amount of fuel, a motor rotation sensor (rotation sensor) 41c that detects the rotation speed of the motor 4, an acceleration-pedal sensor 41d that detects an operation amount of an acceleration pedal, a steering-angle sensor 41e that detects a steering angle of the steering mechanism 11, an angle sensor 41f that detects an angle of the lift arm 8a, an incline detection sensor 41g that detects a width-direction (rightward or leftward) incline of the machine body 3, a velocity sensor 41h that detects a vehicle velocity (velocity) of the machine body 3, a PTO rotation sensor (rotation sensor) 41i that detects a rotation speed of the PTO shaft, and a battery sensor 41j that detects a voltage of a storage battery such as a battery. Note that the velocity sensor 41h detects the vehicle velocity by converting, for example, a rotation speed of the front axle 21F, a rotation speed of the rear axle 21R, a rotation speed of the front wheel 7F, and a rotation speed of the rear wheel 7R into the vehicle velocity. Moreover, the velocity sensor 41h can also detect a rotation direction of any among the front axle 21F, the rear axle 21R, the front wheel 7F, and the rear wheel 7R and can also detect whether the tractor 1 (machine body 3) is traveling forward or traveling in reverse. The above detection devices 41 are one example and are not limited to the above sensors.

Furthermore, a plurality of operation members (operation apparatuses) 42 is connected to the control device 40. The plurality of operation members 42 is a shuttle lever 42a that switches the machine body 3 between forward travel and reverse travel; an ignition switch 42b that, for example, starts the motor 4; a PTO gearshift lever 42c that sets the rotation speed of the PTO shaft; a gearshift switching switch 42d that switches either among automatic gear shifting and manual gear shifting; a gearshift lever 42e that manually switches a gearshift level (gearshift level) of the gearshift apparatus 5; an accelerator 42f that increases or decreases the vehicle velocity; a pumper switch 42g that operates raising and lowering of the raising and lowering apparatus 8; an upper-limit setting dial 42h that sets an upper limit of the raising and lowering apparatus 8; a vehicle velocity lever 42i that sets the vehicle velocity; and the like. Note that the above detection devices 41 are one example and are not limited to the above sensors.

When the shuttle lever 42a is operated to forward travel, the control device 40 switches the forward-reverse switching unit 5b2 of the shuttle unit 5b to forward travel and thereby causes the machine body 3 to travel forward. Moreover, when the shuttle lever 42a is operated to reverse travel, the control device 40 switches the forward-reverse switching unit 5b2 of the shuttle unit 5b to reverse travel and thereby causes the machine body 3 to travel in reverse. When the ignition switch 42b is operated to ON, the control device 40 starts the motor 4 via a predetermined process. When the ignition switch 42b is operated to OFF, the control device 40 stops driving of the motor 4. When the PTO gearshift lever 42c is operated, the control device 40 switches a PTO gearshift gear built into the gearshift apparatus 5 and thereby changes the rotation speed of the PTO shaft (referred to as "PTO rotation speed"). When the gearshift switching switch 42d is switched to automatic gear shifting, the control device 40 automatically switches either among the main gearshift unit 5c and the auxiliary gearshift unit 5d according to the state of the tractor 1 and automatically changes the gearshift level (gearshift level) of the gearshift apparatus 5 to a preestablished gearshift level (gearshift level). When the gearshift switching switch 42d is switched to manual gear shifting, the control device 40 automatically switches either among the main gearshift unit 5c and the auxiliary gearshift unit 5d according to the gearshift level (gearshift level) set by the gearshift lever 42e and changes the gearshift level of the gearshift apparatus 5.

When the accelerator 42f is operated, the control device 40 changes the rotation speed of the motor 4 (referred to as "motor rotation speed") according to an operation amount of this accelerator 42f and thereby changes the vehicle velocity (velocity) of the machine body 3. When the pumper switch 42g is operated in a raising direction (to a raising side), the control device 40 extends the lift cylinder 8e by controlling the control valve 34 and raises a rear end portion (work-apparatus 2 side end portion) of the lift arm 8a. When the pumper switch 42g is operated in a lowering direction (to a lowering side), the control device 40 retracts the lift cylinder 8e by controlling the control valve 34 and lowers the rear end portion (work-apparatus 2 side end portion) of the lift arm 8a. Note that when the work apparatus 2 is being raised by the raising and lowering apparatus 8, the control device 40 stops the raising operation of the raising and lowering apparatus 8 when a position of this work apparatus 2-that is, the angle of the lift arm 8a-reaches the upper limit (height upper-limit value) set by the upper-limit setting dial 42h.

The tractor 1 is provided with a plurality of display devices 50. The plurality of display device 50 is devices that display various information relating to the tractor 1. The plurality of display devices 50 is set around the driver seat 10 and enables an operator (operator) seated in this driver seat 10 to confirm the displayed information. The plurality of display devices 50 comprises displays such as touch/operation panels and is a meter display device 50A, a terminal display device 50B, and an authentication display device 50C. The meter display device 50A is a display device disposed in front of the driver seat 10 and in front of the handle 11a and displays driving (driving information) relating at least to driving. The terminal display device 50B is a display device that differs from the meter display device 50A and is, for example, disposed in front of or to the side of the driver seat 10. The terminal display device 50B displays information relating at least to settings of the tractor 1. The authentication display device 50C is disposed around the driver seat 10 and is a display device that displays authentication information. Note that for convenience in description, the meter display device 50A may be referred to as a "display device 50A", the terminal display device 50B may be referred to as a "display device 50B", and the authentication display device 50C may be referred to as a "display device 50C". The tractor 1 does not need to have all of these display devices 50A, 50B, and 50C, and a number of display devices can be freely changed.

The display device 50B can be operated by a touch operation using a finger or by an operation-tool operation using an operation tool 57. The operation tool 57 is, for example, a pressable rotary selector switch.

The display device 50B has a display unit 55 that displays information and a display control unit (or display controller) 56 that controls display. The display unit 55 is constituted by a liquid-crystal panel, an organic EL panel, or the like. The display control unit 56 is constituted by a central processing unit (CPU), electrical and electronic components, and the like. The display control unit 56 is a device that performs various processes in the display device 50B. For example, by controlling the display unit 55 that is the panel or the like, it displays various information on the display unit 55. Hereinbelow, display of the display unit 55 is described as being controlled by the display control unit 56.

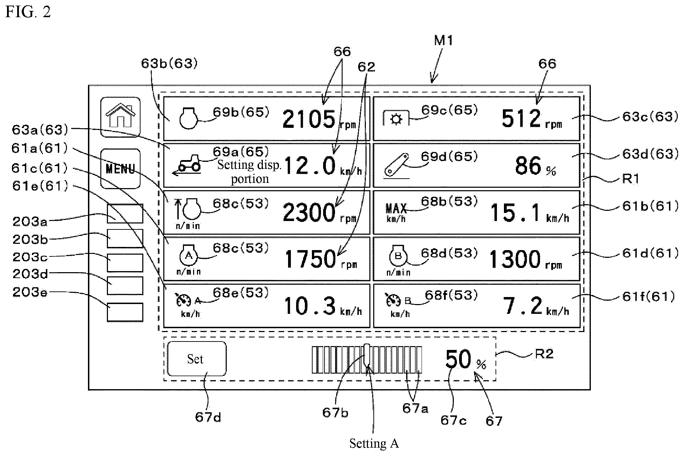

FIG. 2 is a screen after start-up of the display device 50B and illustrates a settings viewing screen (first screen) M1 wherein a predetermined operation is performed on the display device 50B after start-up. The display device 50B displays a plurality of setting boxes 61 in the settings viewing screen M1.

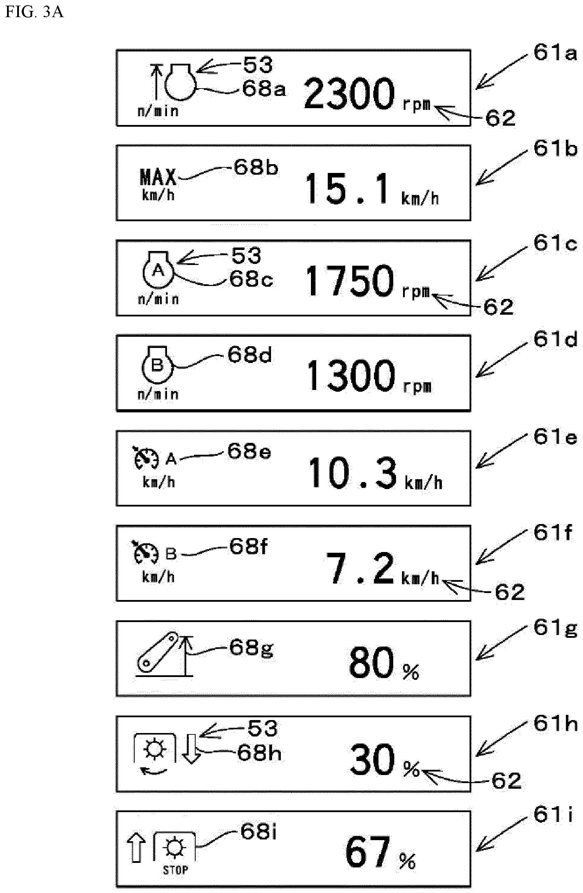

FIG. 3A illustrates a list of the plurality of setting boxes 61 that can be displayed on the settings viewing screen M1. First, the setting boxes 61 are described in detail. As illustrated in FIG. 3A, the plurality of setting boxes 61 is each a box that displays setting information relating to a setting of the tractor 1, and the plurality of setting boxes 61 includes a first setting box 61a, a second setting box 61b, a third setting box 61c, a fourth setting box 61d, a fifth setting box 61e, a sixth setting box 61f, a seventh setting box 61g, an eighth setting box 61h, and a ninth setting box 61i.

The first setting box 61a is a box indicating setting information of an upper-limit value of the motor rotation speed (upper-limit rotation speed). The second setting box 61b is a box indicating setting information of an upper-limit value of the vehicle velocity. The third setting box 61c is a box indicating setting information of a first motor rotation speed. The fourth setting box 61d is a box indicating setting information of a second motor rotation speed. The fifth setting box 61e is a box indicating setting information of a first vehicle velocity. The sixth setting box 61f is a box indicating setting information of a second vehicle velocity. The seventh setting box 61g is a box indicating setting information of the upper-limit position (height upper-limit value) of the work apparatus 2. The eighth setting box 61h is a box indicating a height of the work apparatus 2 at rotation starting of the PTO shaft during lowering of the work apparatus 2 (rotation starting height). The ninth setting box 61i is a box indicating a height of the work apparatus 2 at rotation stopping of the PTO shaft during raising of the work apparatus 2 (rotation stopping height).

Each of the plurality of setting boxes 61 includes an item display portion 53, which displays a setting item, and a setting display portion 62, which displays setting information corresponding to the item display portion 53.

The item display portion 53 of the first setting box 61a displays an icon (first setting icon) 68a indicating that the upper-limit value of the motor rotation speed is the setting item. The setting display portion 62 of the first setting box 61a displays the upper-limit rotation speed as a number (in characters).

The item display portion 53 of the second setting box 61b displays an icon (second setting icon) 68b indicating that the upper-limit value of the vehicle velocity is the setting item. The setting display portion 62 of the second setting box 61b displays the upper-limit value of the vehicle velocity as a number. The item display portion 53 of the third setting box 61c displays an icon (third setting icon) 68c indicating that the first motor rotation speed is the setting item. The setting display portion 62 of the third setting box 61c displays the first motor rotation speed as a number. The item display portion 53 of the fourth setting box 61d displays an icon (fourth setting icon) 68d indicating that the second motor rotation speed is the setting item. The setting display portion 62 of the fourth setting box 61d displays the second motor rotation speed as a number. The item display portion 53 of the fifth setting box 61e displays an icon (fifth setting icon) 68e indicating that the first vehicle velocity is the setting item. The setting display portion 62 of the fifth setting box 61e displays the first vehicle velocity as a number. The item display portion 53 of the sixth setting box 61f displays an icon (sixth setting icon) 68f indicating that the second vehicle velocity is the setting item. The setting display portion 62 of the sixth setting box 61f displays the second vehicle velocity as a number.

The item display portion 53 of the seventh setting box 61g displays an icon (seventh setting icon) 68g indicating that the height upper-limit value of the work apparatus 2 is the setting item. The setting display portion 62 of the seventh setting box 61g displays the height upper-limit value of the work apparatus 2 as a number. The item display portion 53 of the eighth setting box 61h displays an icon (eighth setting icon) 68h indicating that the rotation starting height is the setting item. The setting display portion 62 of the eighth setting box 61h displays the rotation starting height as a number. The item display portion 53 of the ninth setting box 61i displays an icon (ninth setting icon) 68i indicating that the rotation stopping height is the setting item. The setting display portion 62 of the ninth setting box 61i displays the rotation stopping height as a number.

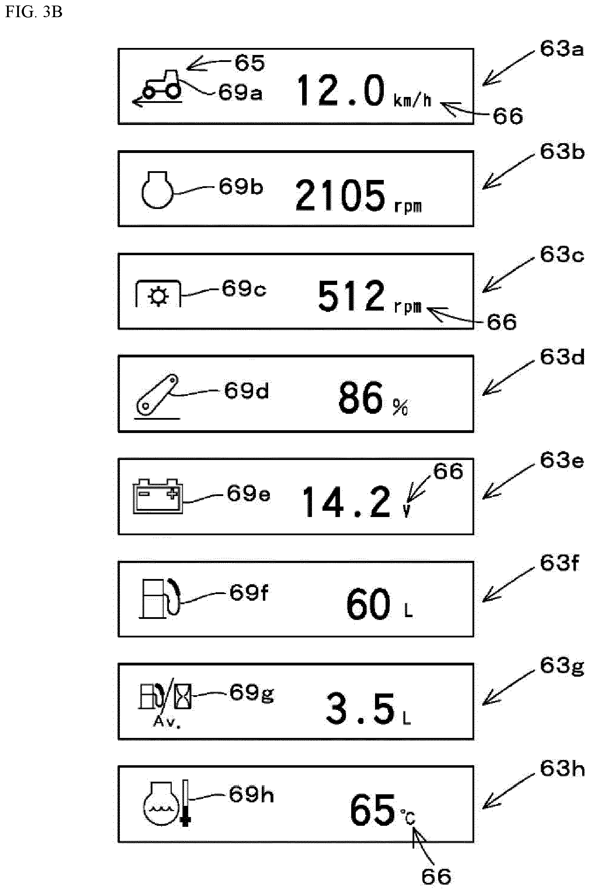

The display device 50B displays a plurality of viewing boxes 63 in the settings viewing screen M1. FIG. 3B illustrates a list of the plurality of viewing boxes 63 that can be displayed on the settings viewing screen M1. First, the setting boxes 63 are described in detail. As illustrated in FIG. 3B, the plurality of viewing boxes 61 is each a box displaying status information relating to the state of the tractor 1, and the plurality of viewing boxes 61 includes a first viewing box 63a, a second viewing box 63b, a third viewing box 63c, a fourth viewing box 63d, a fifth viewing box 63e, a sixth viewing box 63f, a seventh viewing box 63g, and an eighth viewing box 63h.

The first viewing box 63a is a box indicating status information of a current vehicle velocity. The second viewing box 63b is a box indicating status information of a current motor rotation speed. The third viewing box 63c is a box indicating status information of a current PTO rotation speed. The fourth viewing box 63d is a box indicating status information of the height of the work apparatus 2. The fifth viewing box 63e is a box indicating status information of a voltage of a storage battery. The sixth viewing box 63f is a box indicating status information of a remaining amount of fuel. The seventh viewing box 63g is a box indicating status information of fuel consumed per unit of time. The eighth viewing box 63h is a box indicating a current water temperature.

Each of the plurality of viewing boxes 63 includes an item display portion 65, which displays a viewing item, and a status display portion 66, which displays status information corresponding to the item display portion 65.

The item display portion 65 of the first viewing box 63a displays an icon (first viewing icon) 69a indicating that the current vehicle velocity is the viewing item. The status display portion 66 of the first viewing box 63a displays the vehicle velocity detected by the velocity sensor 41h as the current vehicle velocity, displaying such as a number.

The item display portion 65 of the second viewing box 63b displays an icon (second viewing icon) 69b indicating that the current motor rotation speed is the viewing item. The status display portion 66 of the second viewing box 63b displays the rotation speed detected by the motor rotation sensor (rotation sensor) 41c as the current motor rotation speed, displaying such as a number.

The item display portion 65 of the third viewing box 63c displays an icon (third viewing icon) 69c indicating that the current PTO rotation speed is the viewing item. The status display portion 66 of the third viewing box 63c displays the rotation speed detected by the PTO rotation sensor (rotation sensor) 41i as the current PTO rotation speed, displaying such as a number. The item display portion 65 of the fourth viewing box 63d displays an icon (fourth viewing icon) 69d indicating that the height of the work apparatus 2 is the viewing item. The status display portion 66 of the fourth viewing box 63d displays the angle (height) detected by the angle sensor 41f, displaying such as a number.

The item display portion 65 of the fifth viewing box 63e displays an icon (fifth viewing icon) 69e indicating that the voltage of the storage battery is the viewing item. The status display portion 66 of the fifth viewing box 63e displays the voltage detected by the battery sensor 41j as a number. The item display portion 65 of the sixth viewing box 63f displays an icon (sixth viewing icon) 69f indicating that the remaining amount of fuel is the viewing item. The status display portion 66 of the sixth viewing box 63f displays the remaining amount of fuel detected by the fuel sensor 41b as a number.

The item display portion 65 of the seventh viewing box 63g displays an icon (seventh viewing icon) 69g indicating that the fuel consumed per unit of time is the viewing item. The status display portion 66 of the seventh viewing box 63g displays the fuel consumed per unit of time as a number. The item display portion 65 of the eighth viewing box 63h displays an icon (eighth viewing icon) 69h indicating that the current water temperature is the viewing item. The status display portion 66 of the eighth viewing box 63h displays the water temperature detected by the water-temperature sensor 41a as the current water temperature, displaying such as a number.

Now, as illustrated in FIG. 2, the display device 50B (display control unit 56) sets a region R1 displaying boxes (setting boxes 61, viewing boxes 63) in the settings viewing screen M1 and displays n boxes vertically and m boxes horizontally in the region R1. In one or more embodiments, the display device 50B displays fives boxes vertically and two boxes horizontally for a total of ten boxes in the settings viewing screen M1. The setting boxes 61 displayed in the settings viewing screen M1 are selectable. For example, the setting boxes 61 of the settings viewing screen M1 can be touched using a finger, or the setting boxes 61 can be selected by performing a rotating operation and pressing operation of the operation tool 57.

Furthermore, the display device 50B (display control unit 56) displays in the settings viewing screen M1 a setting input portion 67 in a region R2 that differs from the region R1. That is, the display device 50B displays in the settings viewing screen M1 the setting input portion 67 separately from the setting boxes 61.

The setting input portion 67 is a portion wherein setting information corresponding to the setting items indicated in the item display portions 53 of the plurality of setting boxes 61 is input. The setting input portion 67 includes a graduation portion 67a, an indicator portion 67b, and a number-value display portion 67c. The graduation portion 67a, the indicator portion 67b, and the number-value display portion 67c are lined up in one row in a horizontal direction.

The graduation portion 67a is a graduation indicating a magnitude of a setting value (number value) in the setting information and is configured by, for example, lining up a plurality of vertical bars (gauges) in the horizontal direction. In the graduation portion 67a, one side in a lining-up direction of the vertical bars-for example, a left side-is a minimum value, and another direction in the lining-up direction-for example, a right side-is a maximum value. The indicator portion 67b is a portion indicating the setting information-that is, the setting value-on the graduation portion 67a and can move along the lining-up direction of the vertical bars. The indicator portion 67b can be moved along the graduation portion 67a by touching on the graduation portion 67a using a finger (touch operation) or by a rotation operation and pressing operation of the operation tool 57. As illustrated in FIG. 2, when a current setting value is "setting A", moving the indicator portion 67b to the left of "setting A" can decrease the setting value, and moving the indicator portion 67b to the right of "setting value A" can increase the setting value.

The number-value display portion 67c is a portion displaying the value indicated by the indicator portion 67b (setting value) as a number. Note that the setting input portion 67 may include a setting determination button 67d in one or more embodiments. When the setting input portion 67 includes the setting determination button 67d, the setting determination button 67d being selected determines the value indicated by the indicator portion 67b as the setting value.

Now, in the setting input portion 67, the setting information in the plurality of setting boxes 61 displayed in the settings viewing screen M1 can be input. When any setting box 61 is selected from among the plurality of setting boxes 61 displayed in the settings viewing screen M1, the setting input portion 67 enables input of setting information corresponding to a selection box that is the selected setting box 61. As illustrated in FIG. 2, when the first setting box 61a is selected under conditions wherein the first setting box 61a, the second setting box 61b, the third setting box 61c, the fourth setting box 61d, the fifth setting box 61e, and the sixth setting box 61f are displayed in the settings viewing screen M1, the first setting box 61a is recognized as the selection box, and the upper-limit value of the motor rotation speed that is the setting item of the first setting box 61a can be input via the setting input portion 67. When any among the second setting box 61b, the third setting box 61c, the fourth setting box 61d, the fifth setting box 61e, and the sixth setting box 61f is selected in the settings viewing screen M1, the setting information of the selected selection box (any among the second setting box 61b, the third setting box 61c, the fourth setting box 61d, and the fifth setting box 61) can be input. That is, the setting input portion 67 is a portion that is a shared input interface for each of the plurality of setting boxes 61 displayed in the settings viewing screen M1.

According to the above, when a setting value is input to the setting input portion 67 after the second setting box 61b is selected, the upper-limit value of the vehicle velocity can be set. When a setting value is input to the setting input portion 67 after the third setting box 61c is selected, the first-motor rotation speed can be set. When a setting value is input to the setting input portion 67 after the fourth setting box 61d is selected, the second-motor rotation speed can be set. When a setting value is input to the setting input portion 67 after the fifth selection box 61e is selected, the first vehicle velocity can be set. When a setting value is input to the setting input portion 67 after the sixth setting box 61f is selected, the second vehicle velocity can be set. When a setting value is input to the setting input portion 67 after the seventh setting box 61g is selected, the height upper-limit value can be set. When a setting value is input to the setting input portion 67 after the eighth setting box 61g is selected, the rotation starting height can be set. When a setting value is input to the setting input portion 67 after the ninth setting box 61i is selected, the rotation stopping height can be set. Note that as described below, the rotation starting height and the rotation stopping height can also be set on another screen.

As above, the setting values set in the settings viewing screen M1 (the upper-limit value of the motor rotation speed, the upper-limit value of the vehicle velocity, the first-motor rotation speed, the second-motor rotation speed, the first vehicle velocity, the second vehicle velocity, the height upper-limit value, the rotation starting height, and the rotation stopping height) are, as illustrated in FIG. 1C, stored in a storage unit 51 constituted by a nonvolatile memory or the like. Note that although in one or more embodiments the storage unit 51 is provided in the display device 50B, the storage unit 51 may be provided in the control device 40 or in both the display device 50B and the control device 40.

Now, when no input (acceptance) of setting information in the selected selection box among the plurality of setting boxes 61 can be performed, the setting input portion 67 enters an inactive state wherein no input (acceptance) of setting information can be performed.

For example, when either among the control device 40 and the display device 50B does not permit changing the setting information in a setting box 61-for example, when the tractor 1 is being driven and no input (acceptance) of setting information of a selection box is permitted unless the tractor 1 is stopped or when changing the setting information of a selection box is not permitted under predetermined conditions-the setting input portion 67 enters the inactive state. In the inactive state, the setting input portion 67 is, at the least, unable to move the indicator portion 67b relative to the graduation portion 67a.

Meanwhile, when acceptance (input) of setting information in a selected selection box among the plurality of setting boxes 61 is possible, the setting input portion 67 enters an active state wherein input (acceptance) of setting information can be performed. In the active state, the setting input portion 67 can move the indicator portion 67b relative to the graduation portion 67a.

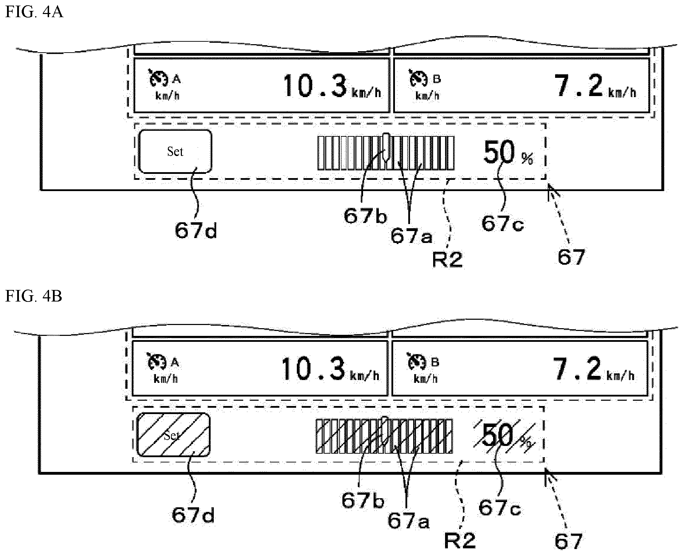

The display device 50B has different display forms for when the setting input portion 67 is in the active state and for when this is in the inactive state. FIG. 4A to FIG. 4C illustrate states wherein the display forms have different brightnesses. In FIG. 4A to FIG. 4C, the hatching intervals indicate a magnitude of brightness; the smaller the intervals, the lower the brightness.

As illustrated in FIG. 4A, for example, when placing the setting input portion 67 in the active state, the display device 50B sets a brightness of this setting input portion 67 to be the same as the setting boxes 61 displayed in the settings viewing screen M1 (no hatching). As illustrated in FIG. 4B, when placing the setting input portion 67 in the inactive state, the display device 50B makes the brightness of this setting input portion 67 lower than the setting boxes 61 displayed in the settings viewing screen M1 (hatching added). That is, the setting input portion 67 has a higher brightness in the active state than in the inactive state.

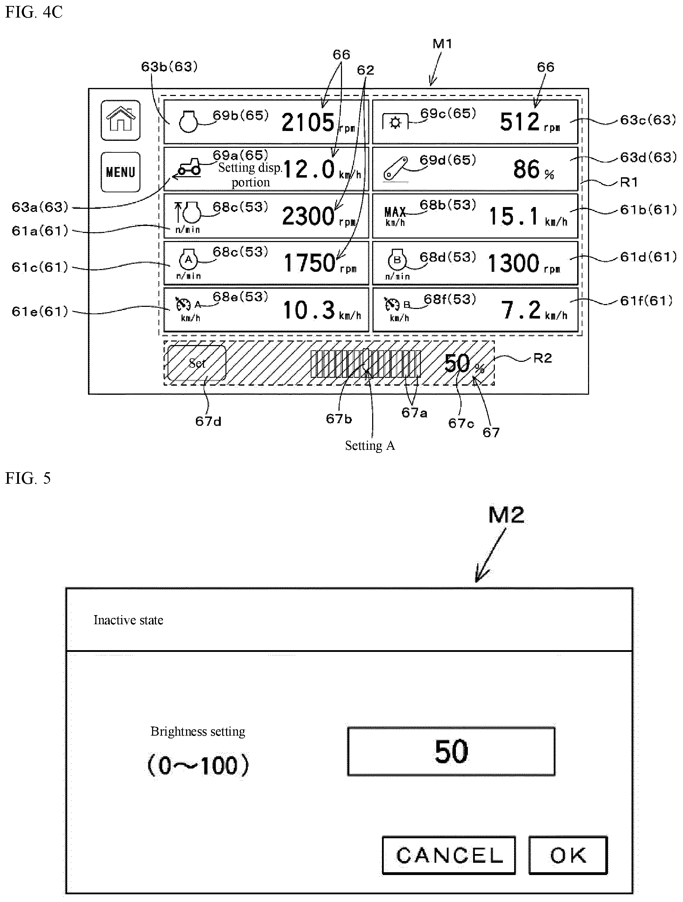

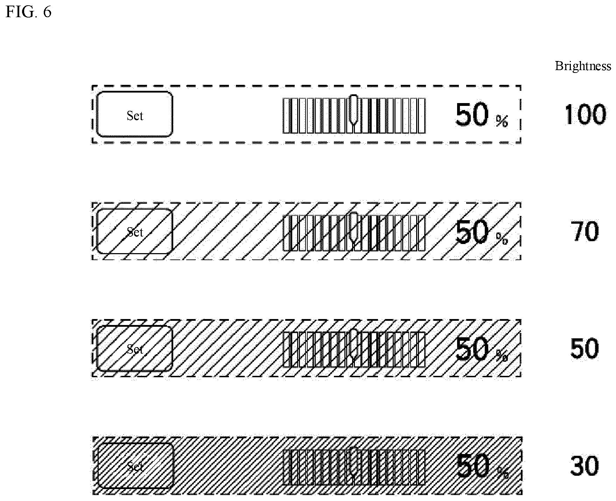

As illustrated in FIG. 4C, when placing the setting input portion 67 in the inactive state, the display device 50B sets a brightness of the region R2 displaying the graduation portion 67a, the indicator portion 67b, and the number-value display portion 67c to be lower than a brightness of the region R1 (hatching added). When placing the setting input portion 67 in the active state, the display device 50B sets the brightness of the region R2 to be substantially the same as the brightness of the region R1 (no hatching). At this time, current setting information (setting value of the number-value display portion 67c) can be confirmed even when the setting input portion 67 is in the inactive state. Here, the brightness of the setting input portion 67-that is, the brightness of the region R2-can be changed. As illustrated in FIG. 5, a predetermined operation is performed to display a brightness setting screen (second screen) M2 on the display device 50B. In the brightness setting screen M2, at least the brightness of the setting input portion 67 (region R2) can be set. As illustrated in FIG. 6, changing the brightness of the setting input portion 67 (region R2) can change the display form of the inactive state of the setting input portion 67.

The display device 50B of the work machine is provided with the plurality of setting boxes 61 displayed on the screen, each setting box 61 including the item display portion 53, which displays a setting item relating to the work machine 1, and the setting display portion 62, which displays the setting information of the setting item. It is also provided with, separately from the plurality of setting boxes 61, the setting input portion 67 that performs input of setting information corresponding to the setting items of the plurality of setting boxes 61 is performed. Accordingly, because the setting input portion 67 is provided that corresponds to the plurality of setting boxes 61, a space (ratio) of the setting input portion 67, for inputting the setting information, relative to the screen can be decreased, enabling a greater number of setting boxes 61 to be displayed on the screen.

The setting input portion 67 inputs setting information corresponding to a selection box that is a selected setting box 61 among the plurality of setting boxes 61. Accordingly, inputting setting information to the setting input portion 67 after a setting box 61 is selected enables setting information corresponding to the setting box 61 selected from among the plurality of setting boxes 61 to be changed.

When acceptance of setting information of a selection box 61 is possible, the setting input portion 67 enters the active state wherein setting information can be accepted. When acceptance of setting information of a selection box 61 is not possible, the setting input portion 67 enters the inactive state wherein no setting information can be accepted. Accordingly, because the active state is entered into only in a state wherein a setting can be configured-that is, a state wherein setting information can be accepted-careless setting configuration can be prevented.

The setting input portion 67 has different display forms for the active state and the inactive state. Simply viewing a state of the setting input portion 67 enables the operator (operator) or the like to easily grasp whether setting information of a setting box 61 can be set.

As the display forms, the setting input portion 67 has a brighter display for the active state than the inactive state. Accordingly, whether the setting input portion 67 is in the active state or the inactive state can be easily grasped according to the display brightness.

The setting input portion 67 displays the current setting information when in the inactive state. Accordingly, even in a predetermined selection box 61 whose setting cannot be configured due to the inactive state, the current setting information of this predetermined selection box 61 can be confirmed.

The setting input portion 67 includes the graduation portion 67a, which indicates a graduation of setting information, and an indicator portion 67b, which indicates set setting information in correspondence with the graduation portion 67a. Accordingly, a value of setting information is easily set according to a relationship between the graduation portion 67a and the indicator portion 67b.

Now, the display device 50B can change the plurality of boxes (setting boxes 61, viewing boxes 63) displayed in the settings viewing screen M1. Setting the plurality of boxes displayed in the settings viewing screen M1 is described in detail below.

Setting the plurality of boxes displayed in the settings viewing screen M1 is performed by selecting first identification information that identifies the setting boxes 61 and by selecting second identification information that identifies the viewing boxes 63.

As illustrated in FIG. 1B, the storage unit 51 of the display device 50B stores a plurality of units of first identification information, which identifies each of the plurality of setting boxes 61, and a plurality of units of second identification information, which identifies each of the plurality of viewing boxes 63.

As illustrated in FIG. 3A and FIG. 3B, the storage unit 51 stores, as the first identification information of the plurality of setting boxes 61, icons (symbol marks) indicating each setting box 61. For example, the storage unit 51 stores, as the first identification information, the first setting icon 68a identifying the first setting box 61a, the second setting icon 68b identifying the second setting box 61b, the third setting icon 68c identifying the third setting box 61c, the fourth setting icon 68d identifying the fourth setting box 61d, the fifth setting icon 68e identifying the fifth setting box 61e, the sixth setting icon 68f identifying the sixth setting box 61f, the seventh setting icon 68g identifying the seventh setting box 61g, the eighth setting icon 68h identifying the eighth setting box 61h, and the ninth setting icon 68i identifying the ninth setting box 61i.

Furthermore, the storage unit 51 stores, as the second identification information of the plurality of viewing boxes 63, icons (symbol marks) indicating each viewing box 63. For example, the storage unit 51 stores, as the second identification information, the first viewing icon 69a identifying the first viewing box 63a, the second viewing icon 69b identifying the second viewing box 63b, the third viewing icon 69c identifying the third viewing box 63c, the fourth viewing icon 69d identifying the fourth viewing box 63d, the fifth viewing icon 69e identifying the fifth viewing box 63e, the sixth viewing icon 69f identifying the sixth viewing box 63f, the seventh viewing icon 69g identifying the seventh viewing box 63g, and the eighth viewing icon 69h identifying the eighth viewing box 63h.

The display device 50B has a first setting unit 52a and a second setting unit 52b. The first setting unit 52a and the second setting unit 52b are constituted by a program, electrical and electronic components, and the like stored in the display device 50B (display control unit 56). The first setting unit 52a causes any unit of first identification information (icon) to be selected from among the plurality of units of first identification information-that is, the plurality of setting icons (the first setting icon 68a, the second setting icon 68b, the third setting icon 68c, the fourth setting icon 68d, the fifth setting icon 68e, the sixth setting icon 68f, the seventh setting icon 68g, the eighth setting icon 68h, and the ninth setting icon 68i).

The second setting unit 52b causes any unit of second identification information (icon) to be selected from among the plurality of units of second identification information-that is, the plurality of setting icons (the first viewing icon 69a, the second viewing icon 69b, the third viewing icon 69c, the fourth viewing icon 69d, the fifth viewing icon 69e, the sixth viewing icon 69f, the seventh viewing icon 69g, and the eighth viewing icon 69h).

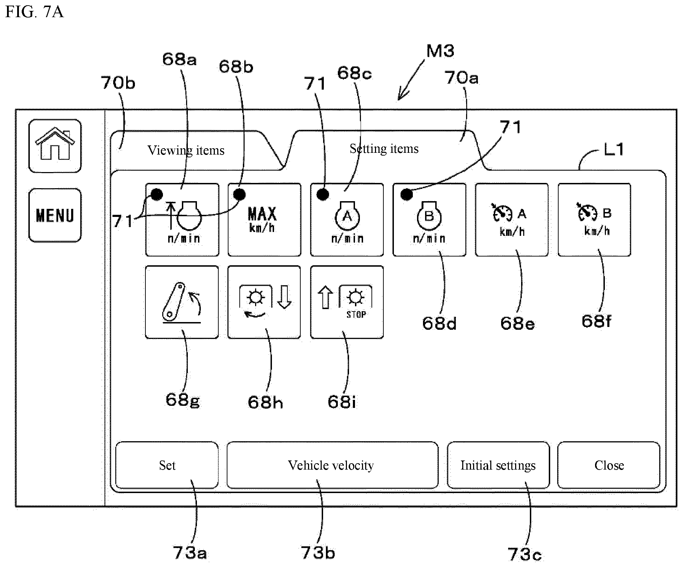

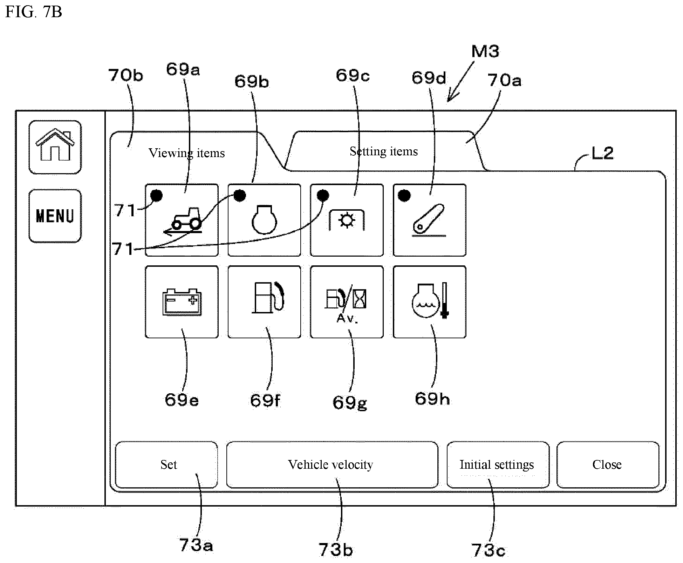

As illustrated in FIG. 7A and FIG. 7B, when a predetermined operation is performed on the display device 50B, this display device 50B displays a registration screen (third screen) M3. A setting-items label 70a and a viewing-items label 70b are displayed on the registration screen M3. As illustrated in FIG. 7A, when the setting-items label 70a is selected, the first setting unit 52a references the storage unit 51 and calls up the plurality of setting icons 68a to 68i corresponding to the plurality of setting boxes 61 stored in the storage unit 51.

Furthermore, the first setting unit 52a displays, in a framework L1 under the label 70a, the called-up plurality of setting icons 68a to 68i. Moreover, the first setting unit 52a accepts any icon from among the plurality of setting icons 68a to 68i displayed in the registration screen M3 (framework L1). For example, when any among the plurality of setting icons 68a to 68i is selected on the registration screen M3, the first setting unit 52a accepts the selected setting icon.

The first setting unit 52a displays, on the setting icon accepted by this first setting unit 52a, that acceptance is completed. When the first setting unit 52a accepts selection of the first setting icon 68a, the second setting icon 68b, the third setting icon 68c, and the fourth setting icon 68d, it displays, as a display that acceptance is completed, a mark portion 71 superimposed on the selected setting icons.

Note that in the registration screen M3, a final determination after selecting the plurality of setting icons is performed using a set button 73a displayed in this registration screen M3. Moreover, when a plurality of setting icons is selected, what the setting icons mean can be displayed by a message portion 73b. Moreover, by selecting an initial settings button 73c, a plurality of predetermined default setting icons can be automatically selected.

As above, when the first setting unit 52a selects any setting icon from among the plurality of setting icons, the setting box 61 corresponding to this any selected setting icon is registered as a setting box 61 to display in the settings viewing screen M1. That is, a setting box 61 corresponding to a setting icon whose acceptance by the first setting unit 52a is completed is retained as a setting box 61 to be displayed in the settings viewing screen M1.

As illustrated in FIG. 7B, when the viewing-items label 70b is selected, the second setting unit 52b references the storage unit 51 and calls up the plurality of viewing icons 69a to 69h corresponding to the plurality of viewing boxes 63 stored in the storage unit 51. Moreover, the second setting unit 52b displays, in a framework L2 under the label 70b, the called-up plurality of viewing icons 69a to 69h. Moreover, the second setting unit 52b accepts any icon among the plurality of viewing icons 69a to 69h displayed in the registration screen M3 (framework L2). For example, when any among the plurality of viewing icons 69a to 69h is selected on the registration screen M3, the second setting unit 52b accepts the selected viewing icon.

The second setting unit 52b displays, on the viewing icon accepted by this second setting unit 52b, that acceptance is completed. When the second setting unit 52b accepts selection of the first viewing icon 69a, the second viewing icon 69b, the third viewing icon 69c, and the fourth viewing icon 69d, it displays, as a display that acceptance is completed, the mark portion 71 superimposed on the selected icons. Note that in the registration screen M3, a final determination after selecting the plurality of viewing icons is performed using the set button 73a displayed in this registration screen M3.

Furthermore, when a plurality of viewing icons is selected, what the viewing icons mean can be displayed by the message portion 73b. Moreover, by selecting the initial settings button 73c, a plurality of predetermined default viewing icons can be automatically selected.

As above, when the second setting unit 52b selects any viewing icon from among the plurality of viewing icons, the viewing box 63 corresponding to this any selected viewing icon is registered as a viewing box 63 to display in the settings viewing screen M1. That is, a viewing box 63 corresponding to a viewing icon whose acceptance by the second setting unit 52b is completed is retained as a viewing box 63 to be displayed in the settings viewing screen M1.

The display device 50B (display unit 55) displays, in the settings viewing screen M1, setting boxes 61 corresponding to any units of first identification information selected by the first setting unit 52a from among the plurality of setting boxes 61 and viewing boxes 63 corresponding to any units of second identification information selected by the second setting unit 52b from among the plurality of viewing boxes.

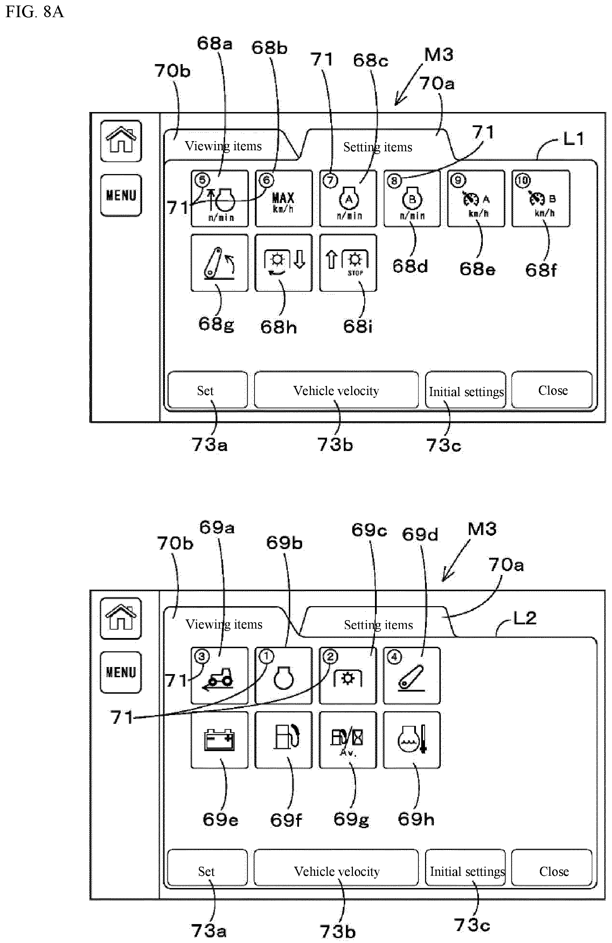

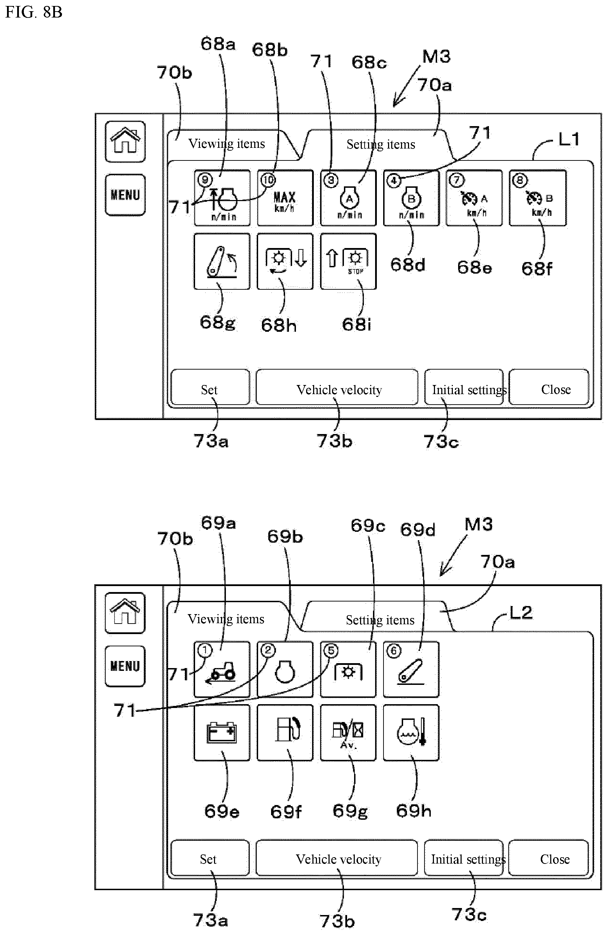

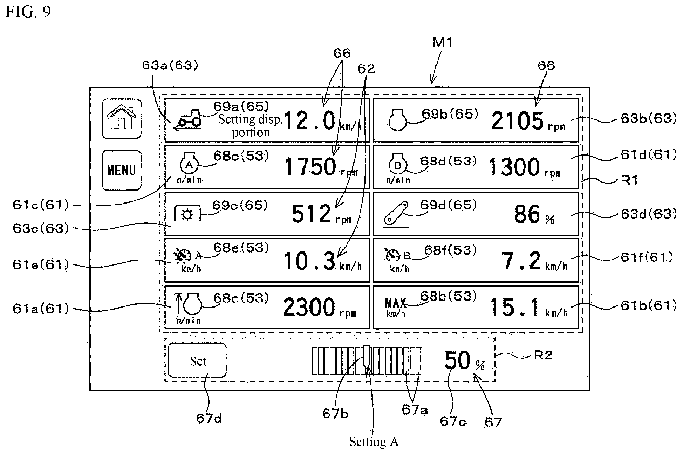

FIG. 8A and FIG. 8B illustrate states wherein icons (first identification information, second identification information) are selected in the registration screen M3. In the registration screen M3, the number values (1, 2, 3, ...) indicated in the mark portions 71 indicate an order wherein the icons are selected. FIG. 2 illustrates the settings viewing screen M1 of when icons are selected in the registration screen M3 of FIG. 8A, and FIG. 9 illustrates the settings viewing screen M1 of when icons are selected in the registration screen M3 of FIG. 8B.

As illustrated in FIG. 8A, in the registration screen M3, it is supposed that the icons are selected in an order of the second viewing icon 69b, the third viewing icon 69c, the first viewing icon 69a, the fourth viewing icon 69d, the first setting icon 68a, the second setting icon 68b, the third setting icon 68c, the fourth setting icon 68d, the fifth setting icon 68e, and the sixth setting icon 68f.

In the settings viewing screen M1, the second viewing box 63b, the third viewing box 63c, the first viewing box 63a, the fourth viewing box 63d, the first setting box 61a, the second setting box 61b, the third setting box 61c, the fourth setting box 61d, the fifth setting box 61e, and the sixth setting box 61f are displayed in the order of the icons selected in FIG. 8A.

Accordingly, as illustrated in FIG. 2, the display device 50B (display unit 55) can dispose the setting boxes 61 and the viewing boxes 63 in a divided manner in the settings viewing screen M1.

As illustrated in FIG. 8B, in the registration screen M3, the first viewing icon 69a, the second viewing icon 69b, the third setting icon 68c, the fourth setting icon 68d, the third viewing icon 69c, the second viewing icon 69d, the fifth setting icon 68e, the sixth setting icon 68f, the first setting icon 68a, and the second setting icon 68b can be selected in order. As illustrated in FIG. 9, this enables the display device 50B (display unit 55) to dispose the setting boxes 61 and the viewing boxes 63 in a mixed order in the settings viewing screen M1.

As above, the display device 50B displays, via the viewing boxes 63, detection information (detection values) detected by the detection devices 41 as status information of the tractor 1. The viewing boxes 63 may display detection values corresponding to preestablished conditions.

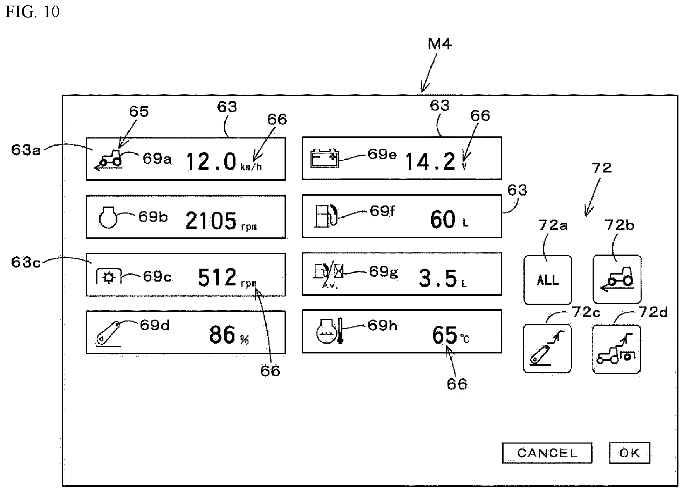

As illustrated in FIG. 10, when a predetermined operation is performed on the display device 50B, this display device 50B displays a conditions setting screen (fourth screen) M4 that sets conditions. The conditions setting screen M4 displays a plurality of viewing boxes 63 and a conditions setting portion 72. The conditions setting portion 72 is a portion that can set conditions for each of the plurality of viewing boxes 63. For example, in the conditions setting screen M4, when a viewing box 63 and the conditions setting portion 72 are selected, the selected viewing box 63 displays detection information corresponding to the condition indicated in the conditions setting portion 72 as a status of the tractor 1.

Specifically, the conditions setting portion 72 includes a first condition portion 72a, a second condition portion 72b, a third condition portion 72c, and a fourth condition portion 72d. The first condition portion 72a indicates a condition of displaying the detection values detected by the detection devices 41 in the viewing boxes 63 regardless of the status of the tractor 1. The second condition portion 72b indicates a condition of retaining the detection values detected by the detection devices 41 in a state wherein the tractor 1 is traveling (state wherein the vehicle velocity is being detected) and displaying the retained detection values in the viewing boxes 63.

The third condition portion 72c indicates a condition of retaining the detection values detected by the detection devices 41 in a state wherein the raising and lowering apparatus 8 of the tractor 1 is performing a raising or lowering operation (state wherein the work apparatus 2 is being raised or lowered) and displaying the retained detection values in the viewing boxes 63. The fourth condition portion 72d indicates a condition of retaining the detection values detected by the detection device 41 in a state wherein the PTO shaft 16 of the tractor 1 is rotating (state wherein the PTO rotation speed is being detected) and displaying the retained detection values in the viewing boxes 63. In other words, the first condition portion 72a, the second condition portion 72b, the third condition portion 72c, and the fourth condition portion 72d indicate conditions of retaining detection values.

For example, in the conditions setting screen M4, when the first viewing box 63a and the third condition portion 72c are selected, in a state wherein the raising and lowering apparatus 8 is performing a raising or lowering operation, the vehicle velocity (detection value) detected by the velocity sensor 41h is retained, and the retained vehicle velocity is displayed in the first viewing box 63a. Moreover, when the third viewing box 63c and the first condition portion 72a are selected, in a state wherein the tractor 1 is traveling, the PTO rotation speed (detection value) detected by the PTO rotation sensor 41i is retained, and this is displayed in the third viewing box 63c as a status of the tractor 1.

In the above embodiments, selecting any among a plurality of setting icons and a plurality of viewing icons in the registration screen M3 causes setting boxes 61 and viewing boxes 63 to be displayed in the settings viewing screen M1 in order of the icons selected in the registration screen M3. However, in addition thereto, a configuration may be such that positions of the boxes (setting boxes 61, viewing boxes 63) displayed in the settings viewing screen M1 can be automatically reordered after the icons are set in the registration screen M3.

As illustrated in FIG. 2, in the settings viewing screen M1, for example, sort buttons 202a, 202b, 202c, 202d, 202e are displayed. When the sort button 202a is selected, the setting boxes 61 are aligned on a left side in the settings viewing screen M1, and the viewing boxes 63 are aligned on a right side. When the sort button 202b is selected, the setting boxes 61 are aligned on the right side in the settings viewing screen M1, and the viewing boxes 63 are aligned on the left side.

When the sort button 202c is selected, the setting boxes 61 are aligned on an upper side in the settings viewing screen M1, and the viewing boxes 63 are aligned on a lower side. When the sort button 202d is selected, the setting boxes 61 are aligned on the lower side in the settings viewing screen M1, and the viewing boxes 63 are aligned on the upper side.

When the sort button 202e is selected, the setting boxes 61 and the viewing boxes 63 are disposed randomly in any position in the settings viewing screen M1. Note that when numbers of the setting boxes 61 and the viewing boxes 63 differ, predetermined boxes are made to fill empty space by, for example, shifting boxes to opposing-corner sides of the screen.

The display device 50B of the work machine is provided with the storage unit 51 that stores the plurality of units of first identification information, which identifies each of the plurality of setting boxes 61 displaying setting information relating to the work machine, and a plurality of units of second identification information, which identifies each of the plurality of viewing boxes 63 displaying a status of the work machine; the first setting unit 52a that causes any units of first identification information to be selected from among the plurality of units of first identification information; the second setting unit 52b that causes any units of second identification information to be selected from among the plurality of units of second identification information; and the display unit 55 that displays setting boxes 61 corresponding to the any units of first identification information selected by the first setting unit 52a from among the plurality of setting boxes 61 and viewing boxes 63 corresponding to the any units of second identification information selected by the second setting unit 52b from among the plurality of viewing boxes 63. The display unit 55 can display the setting boxes 61 and the viewing boxes 63. Accordingly, the first setting unit 52a can select any units of first identification information from among the plurality of units of first identification information, and the second setting unit 52b can select any units of second identification information from among the plurality of units of second identification information. As a result, the setting boxes 61 corresponding to the any selected units of first identification information and the viewing boxes 63 corresponding to the any selected units of second identification information can be displayed. That is, while having a configuration wherein setting information relating to settings of the work machine and a status of the work machine can be displayed, the setting information displayed in the display unit 55 and the status of the work can be freely changed.

**In** the registration screen M3, the first setting unit 52a displays a plurality of units of first identification information and accepts any among the plurality of units of first identification information that is displayed. **In** the registration screen M3, the second setting unit 52b displays a plurality of units of second identification information and accepts any among the plurality of units of second identification information that is displayed. The display unit 55 displays any setting boxes 61 corresponding to the first identification information accepted by the first setting unit 52a and any viewing boxes 63 corresponding to the second identification information accepted by the second setting unit 52b. Accordingly, in the registration screen M3, any among the plurality of units of first identification information and the plurality of units of second identification information can be easily accepted.

The display unit 55 displays that acceptance is completed on the first identification information accepted by the first setting unit 52a among the plurality of units of first identification information and displays that acceptance is completed on the second identification information accepted by the second setting unit 52b among the plurality of units of second identification information. Accordingly, it can be easily grasped whether setting boxes 61 and viewing boxes 63 to be displayed are accepted.

The setting box 61 includes the item display portion 53, which displays a setting item relating to the work machine, and the setting display portion 62, which displays setting information corresponding to the setting item. The viewing box 63 includes the item display portion 65, which displays a viewing item relating to the work machine, and the status display portion 66, which displays a status of the work machine corresponding to the viewing item. Accordingly, a relationship between the setting item and the setting information is easily grasped by simply viewing the setting box 61, and a relationship between the viewing item and the status of the work machine is easily grasped by simply viewing the viewing box 63.

The plurality of viewing boxes 63 displays a status of the work machine corresponding to preset conditions. Accordingly, a status of the work machine under preset conditions can be confirmed.

The display device 50B has a conditions setting portion 72 that can set conditions for each of the plurality of viewing boxes 63. Accordingly, conditions can be set for each viewing box 63-that is, each viewing item-and a status corresponding to various conditions of the work machine can be displayed.

Now, the display device 50B can display an operation status of an actuation unit (first actuation unit) that actuates based on setting information. The actuation unit is provided to the tractor 1 (travel vehicle 3). In one or more embodiments, the actuation unit (first actuation unit) is described as being the attitude changing apparatus 25.

First, setting setting information of the attitude changing apparatus 25 and operations of the attitude changing apparatus 25 are described.

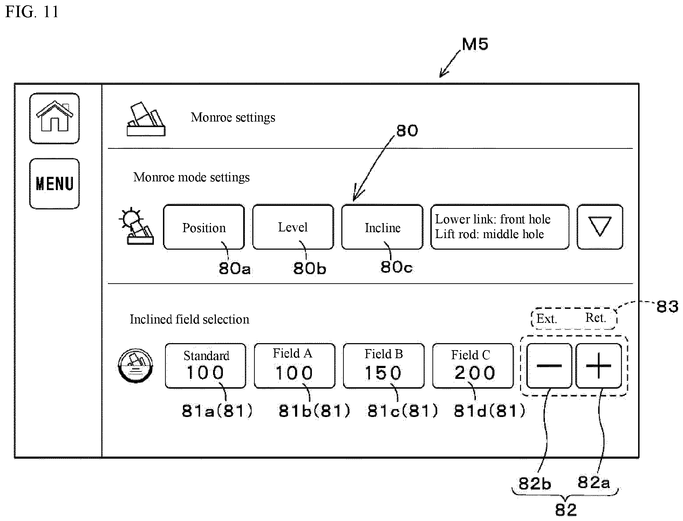

As illustrated in FIG. 11, when a predetermined operation is performed on the display device 50B, this display device 50B displays an attitude setting screen (fifth screen) M5. The display device 50B displays a mode setting portion 80 in the attitude setting screen M5.

The mode setting portion 80 includes a first mode button 80a, a second mode button 80b, and a third mode button 80c. The first mode button 80a, the second mode button 80b, and the third mode button 80c can be selected by a touch operation or an operation of the operation tool 57. When selected, the first mode button 80a sets to a position mode (fixed mode). When selected, the second mode button 80b sets to a level mode. When selected, the third mode button 80c sets to an incline mode.

In the position mode, the control device 40 outputs a control signal to the control valve 25b to fix a length of the changing cylinder 25a at a preestablished length. That is, it fixes an angle in a width direction of the work apparatus 2 set by the attitude changing apparatus 25 (angle of a line connecting the lower link 8a and the lower link 8b relative to horizontal). In the level mode, the control device 40 outputs a control signal to the control valve 25b to extend and retract the changing cylinder 25a and maintain the work apparatus 2 set by the attitude changing apparatus 25 to be level. In the incline mode, the control device 40 outputs a control signal to the control valve 25b to extend and retract the changing cylinder 25a and maintain the work apparatus 2 set by the attitude changing device 25 to be parallel to a field (the ground).

The display device 50B displays a plurality of field selection portions 81 in the attitude setting screen M5. The plurality of field selection portions 81 is also selectable by a touch operation or an operation of the operation tool 57 and has setting information (setting values) indicated therein. The setting values in the plurality of field selection portions 81 are values indicating a responsiveness when extending and retracting the changing cylinder 25a and are, for example, values of a responsiveness (control gain) of an extending and retracting operation. **In** the plurality of field selection portions 81, the greater the setting value, the higher the responsiveness of the changing cylinder 25a (the more sensitively it moves), and the lower the setting value, the lower the responsiveness of the changing cylinder 25a (the less sensitively it moves).

The plurality of field selection portions 81 is a first field selection portion 81a, a second field selection portion 81b, a third field selection portion 81c, and a fourth field selection portion 81d. The setting value of the first field selection portion 81a is a default value; when this first field selection portion 81a is selected, the default value is set. The second field selection portion 81b indicates a setting value corresponding to a first field (field A), the third field selection portion 81c indicates a setting value corresponding to a second field (field B), and the fourth field selection portion 81d indicates a setting value corresponding to a third field (field C). Selecting any among the second field selection portion 81b, the third field selection portion 81c, and the fourth field selection portion 81d applies the setting value of the selected field selection portion 81.

The display device 50B displays a setting input portion 82 in the attitude setting screen M5. The setting input portion 82 is a portion that changes (inputs) the setting values of the plurality of field selection portions 81. The setting input portion 82 has an increasing input portion 82a and a decreasing input portion 82b. The increasing input portion 82a is a portion that increases the setting values in the plurality of field selection portions 81. The decreasing input portion 82b is a portion that decreases the setting values in the plurality of field selection portions 81. Specifically, when the increasing input portion 82a is selected in a state wherein any among the second field selection portion 81b, the third field selection portion 81c, and the fourth field selection portion 81d is selected, the setting value of the selected field selection portion 81 increases. Moreover, when the decreasing input portion 82b is selected in a state wherein any among the second field selection portion 81b, the third field selection portion 81c, and the fourth field selection portion 81d is selected, the setting value of the selected field selection portion 81 decreases.

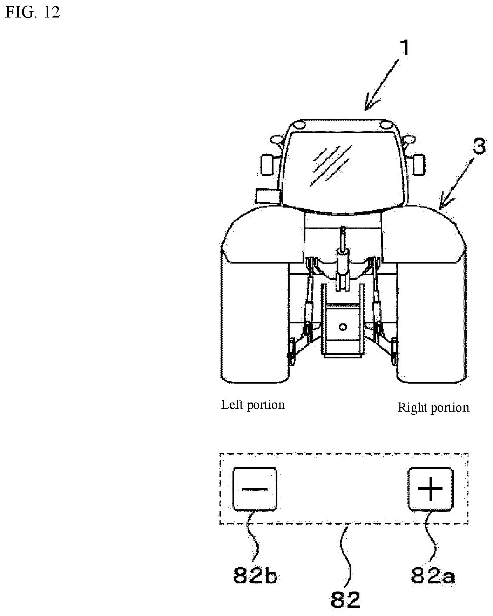

Furthermore, as illustrated in FIG. 12, the setting input portion 82 corresponds to a width direction of the tractor 1 (machine body 3); a left portion of this setting input portion 82 corresponds to a left portion of the tractor 1 (machine body 3), and a right portion of this setting input portion 82 corresponds to a right portion of the tractor 1 (machine body 3). Specifically, the increasing input portion 82a of the setting input portion 82 corresponds to the right portion of the tractor 1, and the decreasing input portion 82b corresponds to the left portion of the tractor 1. In other words, the increasing input portion 82a corresponds to a right portion of the work apparatus 2, and the decreasing input portion 82b corresponds to a left portion of the work apparatus 2.

The display device 50B displays an actuation display portion 83 in the attitude setting screen M5. The actuation display portion 83 is provided in correspondence with the setting input portion 82 and changes display of an operation aspect of the attitude changing apparatus 25 based on a status of the tractor 1. The actuation display portion 83 changes the display based on an operation aspect computed by a computation device. In one or more embodiments, the control device 40 also serves as the computation device. Note that the computation device and the control device 40 may be separate.

Hereinbelow, the computation and display of the operation aspect are described under the assumption that the control device 40 also serves as the computation device.

The control device 40 (computation device) computes the operation aspect based on a detection value of an incline detection device 41k that is one of the detection devices 41. The incline detection device 41k is provided to the machine body 3 and detects an incline of the machine body 3 relative to the horizontal direction. The control device 40 (computation device) computes the operation aspect of the attitude changing apparatus 25 when this attitude changing apparatus 25 is actuated in a state of the incline detected by the incline detection device 41k. That is, the control device 40 (computation device) finds, as the operation aspect, either direction among extension and retraction of the changing cylinder 25a when an incline of the work apparatus 2 is changed to a preestablished direction in a state of the incline detected by the incline detection device 41k.

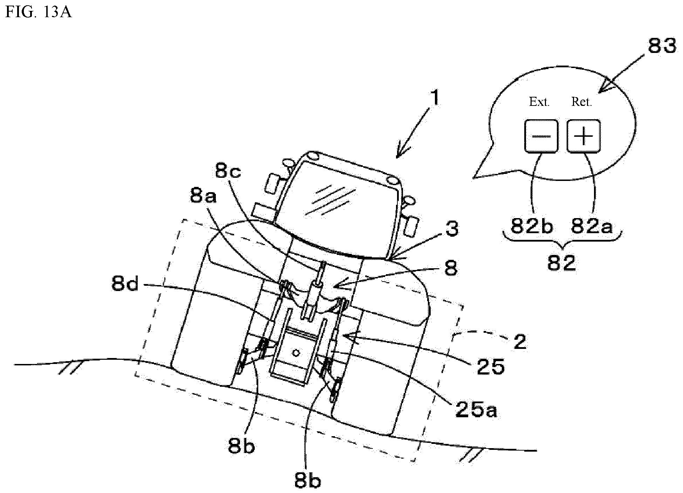

As illustrated in FIG. 13A, in a state wherein the right portion of the tractor 1 is lower than the left portion of the tractor 1, the work apparatus 2 is also in a state wherein the right portion is lower than the left portion. Here, when maintaining the work apparatus 2 to be level in the level mode, the changing cylinder 25a of the attitude changing apparatus 25 is retracted to raise the right portion of the work apparatus 2. When, as in FIG. 13A, the incline detection device 41k detects that the right portion of the tractor 1 is low (lowered to the right) and the level mode is set, the control device 40 (computation device) finds an operation aspect in a direction of retracting the changing cylinder 25a.

Therefore, the control device 40 displays "Ret." indicating retracting the changing cylinder 25a-that is, "Ret." indicating a retracting direction-in the actuation display portion 83 on an increasing-input-portion 82a side corresponding to the right portion of the tractor 1 (work apparatus 2). Moreover, the control device 40 displays "Ext.", which is the opposite of "Ret." of the changing cylinder 25a, in the actuation display portion 83 on a decreasing-force-portion 82b side corresponding to the left portion of the tractor 1 (work apparatus 2).

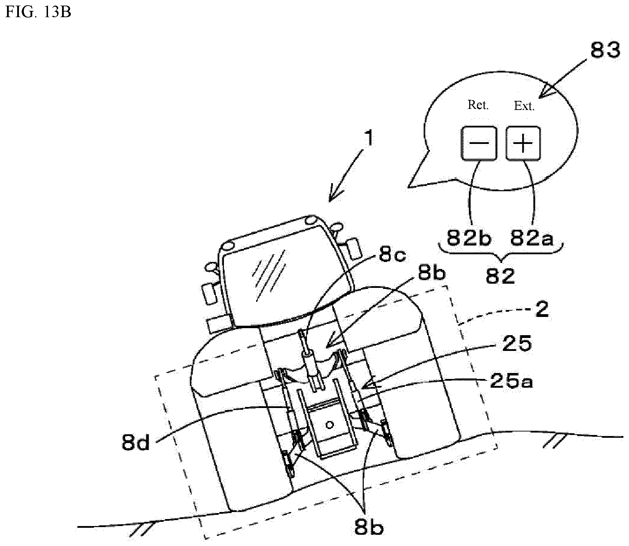

Furthermore, as illustrated in FIG. 13B, when the level mode is entered into in a state wherein the left portion of the tractor 1 (work apparatus 2) is lower than the right portion of the tractor 1 (work apparatus 2), the changing cylinder 25a of the attitude changing apparatus 25 is extended to raise the left portion of the work apparatus 2. As in FIG. 13B, when the incline detection device 41k detects that the left portion of the tractor 1 (work apparatus 2) is low (lowered to the left) and the level mode is set, the control device 40 (computation device) finds an operation aspect in a direction of extending the changing cylinder 25a.

Therefore, the control device 40 displays "Ext." indicating extending the changing cylinder 25a-that is, "Ext." indicating an extending direction-in the actuation display portion 83 on the decreasing-input-portion 82b side. Moreover, the control device 40 displays "Ret.", which is the opposite of "Ext." of the changing cylinder 25a, in the actuation display portion 83 on the increasing-input-portion 82a side corresponding to the right portion of the tractor 1 (work apparatus 2). That is, as above, the actuation display portion 83 performs display by switching between the extending and retracting directions according to an incline of the tractor 1.

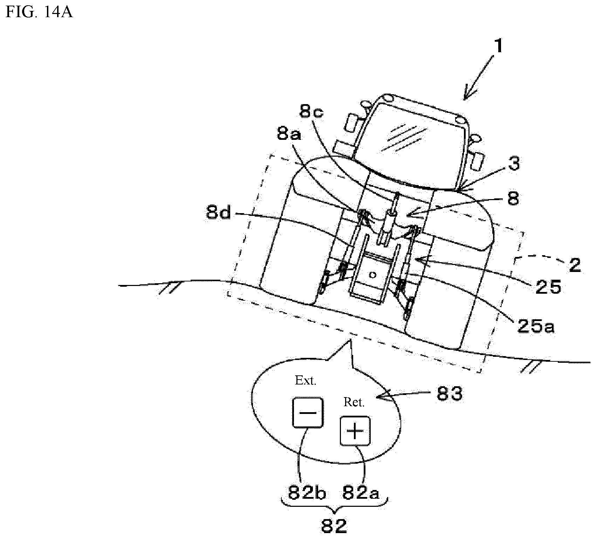

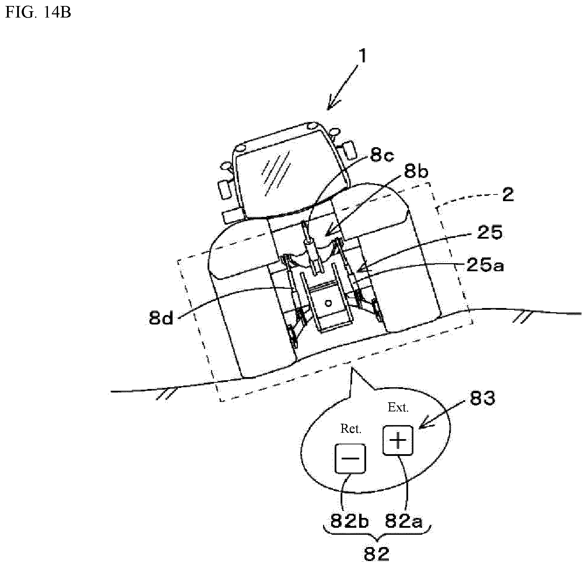

Now, the setting input portion 82 may change a display position of displaying on the attitude setting screen M5 according to a status of the tractor 1. As illustrated in FIG. 14A, when the right portion of the tractor 1 is low, a display position of the increasing input portion 82a corresponding to the right portion of this tractor 1 is positioned lower than the decreasing input portion 82b corresponding to the left portion of the tractor 1. Moreover, as illustrated in FIG. 14B, when the left portion of the tractor 1 is low, a display position of the decreasing input portion 82b corresponding to the left portion of this tractor 1 is positioned lower than the increasing input portion 82a corresponding to the right portion of the tractor 1. That is, the incline of the tractor 1 may be indicated by the display position of the setting input portion 82 (increasing input portion 82a, decreasing input portion 82b) in the attitude setting screen M5.

The work machine 1 is provided with the machine body 3, the actuation unit (first actuation unit) that is provided to the machine body 3 and actuates based on setting information, and the display device 50B that has the setting input portion 82, which inputs setting information, and the actuation display portion 83, which is provided in correspondence with the setting input portion 82 and displays an operation aspect of the actuation unit. The actuation display portion 83 changes the displayed operation aspect based on a status of the machine body 3. Accordingly, because the operation display portion 83 provided in correspondence with the setting input portion 82 changes the operation aspect based on the status of the machine body 3, an operation aspect of when setting information is input to the setting input portion 82 can be easily grasped.

The work machine 1 is provided with the incline detection device 41k, which detects the incline of the machine body 3 as a status of the machine body 3, and the computation device (control device 40) that computes an operation aspect based on the incline detected by the incline detection device 41k. Accordingly, an operation aspect of an operation unit when, for example, setting information is input in a situation wherein the machine body 3 is inclined can be easily grasped.

The work machine 1 is provided with the work apparatus 2 coupled to the machine body 3. The actuation unit has the attitude changing apparatus 25 that can change the incline of the work apparatus 2. The computation device (control device 40) computes an operation aspect of the attitude changing apparatus 25 of when this attitude changing apparatus 25 is actuated in a state of the incline detected by the incline detection device 41k. Accordingly, movement of the attitude changing apparatus 25 when, for example, setting information of this attitude changing apparatus 25 is changed in a situation wherein the machine body 3 is inclined can be grasped.

The attitude changing apparatus 25 has a hydraulic cylinder (changing cylinder 25a) that changes at least the incline of the work apparatus 2 relative to the machine body 3. The computation apparatus (control device 40) finds, as an operation aspect, either direction among extension and retraction of the hydraulic cylinder (changing cylinder 25a) of when the incline of the work apparatus 2 is changed in a preestablished direction in a state of the incline detected by the incline detection device 41k. Accordingly, it can be easily grasped whether the hydraulic cylinder (changing cylinder 25a) will extend in the extension direction or extend in the retraction direction when the setting information is changed in a situation wherein the machine body 3 is inclined.

The display device 50B changes a display aspect of either among the setting input portion 82 and the actuation display portion 83 according to the inline of the machine body 3.

The setting input portion 82 is provided with the increasing input portion 82a that increases a setting value that is setting information and with the decreasing input portion 82b that decreases a setting value. The display device 50B changes the positions of the increasing input portion 82a and the decreasing input portion 82b according to the incline of the machine body 3. Accordingly, the increasing input portion 82a and the decreasing input portion 82b can facilitate increasing and decreasing a setting value. Moreover, an inclined state of the machine body 3 can be easily grasped by viewing the positions of the increasing input portion 82a and the decreasing input portion 82b displayed on the display device 50.

The setting input portion 82 is provided with the increasing input portion 82a that increases a setting value that is setting information and with the decreasing input portion 82b that decreases a setting value. The actuation display portion 83 switches display between an operation aspect of when a setting value is input to the increasing input portion 82a and an operation aspect of when a setting value is input to the decreasing input portion 82b. Accordingly, the increasing input portion 82a and the decreasing input portion 82b can facilitate increasing and decreasing a setting value. Moreover, an inclined state of the machine body 3 can be easily grasped by viewing the actuation display portion 83 displayed on the display device 50.

Now, the tractor 1 can automatically raise the coupled work apparatus 2 when this tractor 1 travels in reverse. For example, when reverse travel of the tractor 1 (machine body 3) is detected by the velocity sensor 41, the control device 40 causes the raising and lowering apparatus 8 to undergo the raising operation by outputting a control signal to the control valve 34.

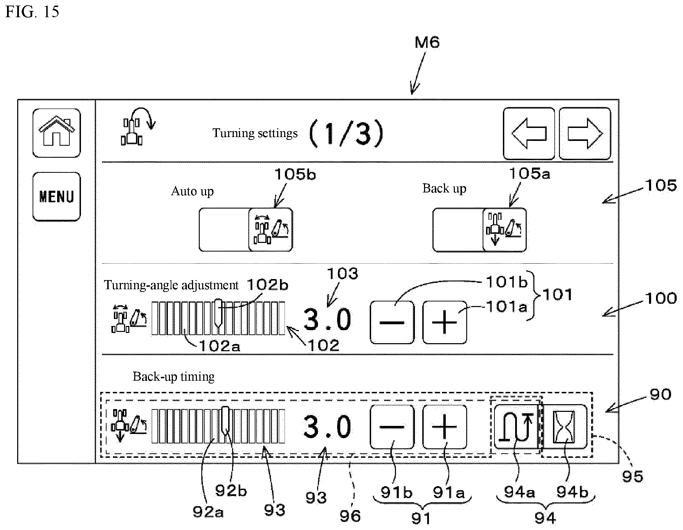

As illustrated in FIG. 15, when a predetermined operation is performed on the display device 50B, this display device 50B displays a raising settings screen (sixth screen) M6. The raising settings screen M6 is a screen that sets conditions for causing the raising and lowering apparatus 8 to automatically undergo the raising operation.

The display device 50B displays a condition input portion 90 in the raising settings screen M6. The condition input portion 90 is a portion that inputs conditions for the raising and lowering apparatus 8 to automatically transition to the raising operation (automatic raising operation) after the tractor 1 (machine body 3) travels in reverse. More specifically, the condition input portion 90 is a portion that inputs, as a condition, a timing of starting the automatic raising operation (backup timing) after the tractor 1 starts to travel in reverse.

The condition input portion 90 has a button input portion 91, a slide input portion 92, and a number-value display portion 93. The button input portion 91 is a portion that inputs a condition by a pressing operation and includes an increasing input portion 91a that increases a condition setting value indicating a condition and a decreasing input portion 91b that decreases a condition setting value. The slide input portion 92 is a portion that inputs a condition by a sliding operation and includes a graduation portion 92a and an indicator portion 92b.

The graduation portion 92a is a graduation indicating a magnitude of a condition setting value in setting information and is configured by, for example, lining up a plurality of vertical bars (gauges) in the horizontal direction. **In** the graduation portion 92a, one side in a lining-up direction of the vertical bars-for example, a left side-is a minimum value, and another direction in the lining-up direction-for example, a right side-is a maximum value. The indicator portion 92b is a portion that indicates a condition setting value on the graduation portion 92a and can move along the lining-up direction of the vertical bars. The indicator portion 92b can be moved along the graduation portion 92a by a touch operation or the like. Moreover, the indicator portion 92b moves along the graduation portion 92a in conjunction with the condition setting value input by the button input portion 91.

For example, when a condition setting value is increased by the increasing input portion 91a, the indicator portion 92b moves in an increasing direction along the graduation portion 92a. Moreover, when a condition setting value is decreased by the decreasing input portion 91b, the indicator portion 92b moves in a decreasing direction along the graduation portion 92a. The number-value display portion 93 displays the condition setting values set by the button input portion 91 and the slide input portion 92 as a number.

The condition setting portion 90 has a unit setting portion 94 that sets a unit of a condition setting value. The unit setting portion 94 has a distance setting portion 94a that sets the condition setting value to be a distance and a time setting portion 94b that sets the condition setting value to be a time. The distance setting portion 94a and the time setting portion 94b can be selected by a touch operation or an operation of the operation tool 57. When the distance setting portion 94a is selected, the condition setting value becomes distance, and when the time setting portion 94b is selected, the condition setting value becomes time.

For example, when either among the button input portion 91 and the slide input portion 92 is operated in a state wherein the time setting portion 94b is selected, the condition setting value is set as a time from the machine body 3 traveling in reverse to the automatic raising operation starting (raising starting time). Moreover, when either among the button input portion 91 and the slide input portion 92 is operated in a state wherein the distance setting portion 94a is selected, the condition setting value is set as a distance from the machine body 3 traveling in reverse to the automatic raising operation starting (raising starting distance).

That is, the input setting portion 90 has a distance input portion 95 that inputs the raising starting distance and a time input portion 96 that inputs the raising starting time. In other words, in the state wherein the distance setting portion 94a is selected, the button input portion 91, the slide input portion 92, and the number-value display portion 93 are switched to the distance input portion 95, and in the state wherein the time setting portion 94b is selected, the button input portion 91, the slide input portion 92, and the number-value display portion 93 are switched to the time input portion 96.

For example, when the raising starting distance is set to "3.0 m" by the input setting portion 90, the work apparatus 2 can be automatically raised by the raising and lowering apparatus 8 from its current position when the tractor 1 (machine body 3) reaches a position 3.0 m from a starting position of starting reverse travel. Moreover, when the raising starting time is set to "3.0 seconds" by the input setting portion 90, the work apparatus 2 can be automatically raised by the raising and lowering apparatus 8 from its current position when 3.0 seconds is elapsed from a starting point when the tractor 1 starts reverse travel.

Furthermore, the display device 50B displays a steering-angle input portion 100 in the raising settings screen M6. The steering-angle input portion 100 is a portion that inputs a steering angle as a condition of the raising and lowering apparatus 8 transitioning to the automatic raising operation. In the raising settings screen M6, the steering-angle input portion 100 is positioned in a separate region from the input setting portion 90.

The steering-angle input portion 100 has a button input portion 101, a slide input portion102, and a number-value display portion 103. The button input portion 101 is a portion that inputs a steering angle (set steering angle) by a pressing operation and includes an increasing input portion 101a that increases the set steering angle and a decreasing input portion 101b that decrease the set steering angle. The slide input portion 102 is a portion that inputs the set steering angle by a sliding operation and includes a graduation portion 102a and an indicator portion 102b.

The graduation portion 102a is a graduation indicating a magnitude of the set steering angle in the setting information and is configured by, for example, lining up a plurality of vertical bars (gauges) in the horizontal direction. In the graduation portion 102a, one side in a lining-up direction of the vertical bars-for example, a left side-is a minimum value, and another side in the lining-up direction-for example, a right side-is a maximum value. The indicator portion 102b is a portion that indicates the set steering angle on the graduation portion 102a and can move along the lining-up direction of the vertical bars. The indicator portion 102b can be moved along the graduation portion 102a by a touch operation or the like.

Furthermore, the indicator portion 102b moves along the graduation portion 102a in conjunction with the set steering angle input by the button input portion 101. For example, when the set steering angle is increased by the increasing input portion 101a, the indicator portion 102b moves in an increasing direction along the graduation portion 102a.

Furthermore, when the set steering angle is decreased by the decreasing input portion 101b, the indicator portion 102b moves in a decreasing direction along the graduation portion 102a. The number-value display portion 103 displays the set steering angle set by the button input portion101 and the slide input portion 102 as a number.

For example, when the set steering angle is set to "15 degrees (deg)" by the steering-angle input portion 100, the work apparatus 2 can be automatically raised by the raising and lowering apparatus 8 from its current position when a steering angle of the tractor 1 (machine body 3) becomes no less than the set steering angle.

Furthermore, the display device 50B displays a switching portion 105 in the raising settings screen M6. This is a portion that switches between enabling and disabling the automatic raising operation of the raising and lowering apparatus 8 and is configured in a shape indicating a switch. The switching portion 105 can be operated to be switched ON or OFF. When ON, the automatic raising operation is set to be enabled, and when OFF, the automatic raising operation is set to be disabled.

The switching portion 105 includes a first switch 105a, which switches between enabling and disabling an automatic raising operation performed based on a condition setting value (first automatic raising operation), and a second switch 105b, which switches between enabling and disabling an automatic raising operation performed based on the set steering angle (second automatic raising operation).

The first switch 105a can be switched ON/OFF by sliding a shape such as an icon (symbol) in the raising settings screen M6. When this first switch 105a is ON and the first automatic raising operation is switched to be enabled, the distance input portion 95 and the time input portion 96 enter an active state wherein input can be accepted. In the active state, the button input portion 91 and the slide input portion 92 can input a condition setting value; operating the increasing input portion 91a and the decreasing input portion 91b can input (change) a condition setting value, and sliding the indicator portion 92b can input (change) a condition setting value.

Meanwhile, when the first switch 105a is OFF and the first automatic raising operation is switched to be disabled, the distance input portion 95 and the time input portion 96 enter an inactive state wherein input cannot be accepted. In the inactive state, the button input portion 91 and the slide input portion 92 cannot input a condition setting value; the increasing input portion 91a and the decreasing input portion 91b cannot be operated, and the indicator portion 92b cannot be slid.

Furthermore, the second switch 105b can also switch between ON/OFF by sliding a shape such as an icon (symbol) in the raising settings screen M6. When this second switch 105b is ON and the second automatic raising operation is switched to be enabled, the steering-angle input portion 100 enters an active state wherein input can be accepted. In the active state, the button input portion 101 and the slide input portion 102 can input the set steering angle; operating the increasing input portion 101a and the decreasing input portion 101b can input (change) the set steering angle, and sliding the indicator portion 102b can input (change) the set steering angle.

Meanwhile, when the second switch 105b is OFF and the second automatic raising operation is switched to be disabled, the steering-angle input portion 100 enters an inactive state wherein input cannot be accepted. In the inactive state, the button input portion 101 and the slide input portion 102 cannot input the set steering angle; the increasing input portion 101a and the decreasing input portion 101b cannot be operated, and the indicator portion102b cannot be slid.

The work machine 1 is provided with the machine body 3, the work apparatus 2, the raising and lowering apparatus 8 that performs the raising operation of automatically raising the work apparatus 2 when reverse travel of the machine body 3 is detected, and the display device 50B that can display the condition input portion 90 that inputs a condition of the raising and lowering apparatus 8 transitioning to the raising operation after the machine body 3 travels in reverse. Accordingly, because a condition of the raising and lowering apparatus 8 transitioning to the raising operation can be input to the condition input portion 90, the work apparatus 2 can be automatically raised by the raising and lowering apparatus 8 at any timing after the machine body 3 travels in reverse. That is, a timing of raising the work apparatus 2 can be freely changed according to a type of the work apparatus 2 at a time of reverse travel of the machine body 3. That is, the work apparatus 2 can be raised at an appropriate position at the time of reverse travel of the machine body 3 according to the type of the work apparatus 2. For example, when the work apparatus 2 is a plow, at a time of forward travel, a tip of this plow is in a state of being thrust into a field. When travel is switched to reverse travel from this state, the machine body 3 can be made to travel a predetermined distance after traveling in reverse, and raising can be performed at a point when the plow is no longer in a thrust-in state.

The condition input portion 90 has either among the distance input portion 95 that inputs the distance from reverse travel to starting the raising operation and the time input portion 96 that inputs the time from the machine body 3 traveling in reverse to starting the raising operation. Accordingly, the distance input portion 95 can set the distance from starting reverse travel to undergoing the raising operation, and the time input portion 96 can easily set the time from starting reverse travel to undergoing the raising operation.

The work machine 1 is provided with the steering apparatus 11 that steers the machine body 3. The raising and lowering apparatus 8 performs the raising operation based on the steering angle of the steering apparatus 11. The display device 50B is provided with the steering-angle input portion 100 that inputs the steering angle whereat the raising and lowering apparatus 8 transitions to the raising operation. Accordingly, a timing from operating the machine body 3 to undergoing the raising operation can be freely changed by the steering angle input to the steering-angle input portion 100.

The display device 50B has the switching portion 105 that switches between enabling and disabling the raising operation. The distance input portion 95 and the time input portion 96 enter the active state wherein input can be accepted when the switching portion 105 is switched to enabling and enter the inactive state wherein input cannot be accepted when the switching portion 105 is switched to disabling. Accordingly, the switching portion 105 can reflect a state of the raising operation being enabled or disabled at the time of reverse travel in the distance input portion 95 and the time input portion 96, and the operator can easily grasp whether the raising operation at the time of reverse travel is enabled by viewing the distance input portion 95 and the time input portion 96.

The steering-angle input portion 100 enters the active state wherein input can be accepted when the switching portion 105 is switched to enabling and enters the inactive state wherein input cannot be accepted when the switching portion 105 is switched to disabling. Accordingly, a state of the raising operation being enabled or disabled at a steering angle can be easily grasped by viewing the steering-angle input portion 100.

Now, the display device 50B can configure a setting of associating, on one hand, a raising and lowering height by the raising and lowering apparatus 8 (height of the lift arm 8a) and, on the other, driving of the PTO shaft 16-that is, a PTO setting relating to the PTO shaft 16.

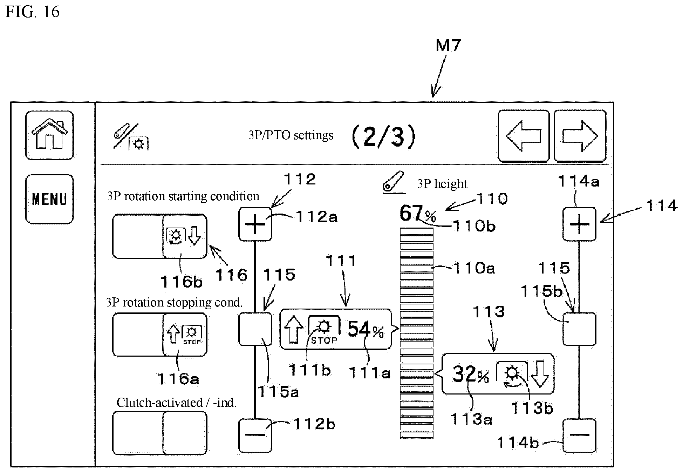

As illustrated in FIG. 16, when a predetermined operation is performed on the display device 50B, this display device 50B displays a PTO settings screen (seventh screen) M7 that configures PTO settings.

The display device 50B displays a height display portion 110 in the PTO settings screen M7. The height display portion 110 is a portion displaying the raising and lowering height by the raising and lowering apparatus 8 (height of the lift arm 8a). The height display portion 110 has a graduation portion 110a and a number-value display portion 110b. The graduation portion 110a is a graduation indicating a magnitude of the height of the lift arm 8a and is configured by, for example, lining up a plurality of vertical bars (gauges) in the horizontal direction. In the graduation portion 110a, one side in a lining-up direction of the vertical bars-for example, a lower end-is a minimum value, and another side in the lining-up direction-for example, an upper end-is a maximum value. An interior of the graduation portion 110a is colored according to a current height of the lift arm 8a. The number-value display portion 110b displays the current height of the lift arm 8a as a number value.

Furthermore, the display device 50B displays a raising indicator portion 111, a first change display portion 112, a lowering indicator portion 113, and a second change display portion 114 in the PTO settings screen M7.

The raising indicator portion 111 is a portion that indicates, in the height display portion 110, a height whereat rotation of the PTO shaft 16 is stopped (rotation stopping height) when manually raising the lift arm 8a. The raising indicator portion 111 is disposed on one side-for example, a left side-in an orthogonal direction orthogonal to the lining-up direction of the graduation portion 110a. The raising indicator portion 111 includes a number-value display portion 111a, which displays the height indicated by this raising indicator portion 111 (rotation stopping height) as a number, and an icon 111b, which indicates stopping rotation of the PTO shaft 16 when manually raising the lift arm 8a.

The first change display portion 112 is a portion that changes a position of the raising indicator portion 111 on the height display portion 110-that is, the rotation stopping height. The first change display portion 112 is disposed on a left side of the raising indicator portion 111. The first change display portion 112 includes an increasing input portion 112a that increases the rotation stopping height and a decreasing input portion 112b that decreases the rotation stopping height. The increasing input portion 112a is disposed on a maximum-value side in the graduation portion 110a of the height display portion 110, and the decreasing input portion 112b is disposed on a minimum-value side in the graduation portion 110a of the height display portion 110. When the rotation stopping height is increased by operating the increasing input portion 112a, the raising indicator portion 111 moves to the maximum-value side along the graduation portion 110a. When the rotation stopping height is decreased by operating the decreasing input portion 112b, the raising indicator portion 111 moves to the minimum-value side along the graduation portion 110a.

According to the above, after setting the rotation stopping height, in a situation wherein the lift arm 8 is raised by manually operating the pumper switch 42g and the like, rotation of the PTO shaft 16 is stopped, as controlled by the control device 40, at a point when the current height of the lift arm 8a exceeds the rotation stopping height indicated by the raising indicator portion 111.

The lowering indicator portion 113 is a portion that indicates, in the height display portion 110, the rotation starting height whereat rotation of the PTO shaft 16 is started when manually lowering the lift arm 8a. The lowering indicator portion 113 is disposed on another side-for example, a right side-in the orthogonal direction orthogonal to the lining-up direction of the graduation portion 110a. The lowering indicator portion 113 includes a number-value display portion 113a, which displays the height indicated by this lowering indicator portion 113 (rotation starting height) as a number, and an icon 113b, which indicates starting rotation of the PTO shaft 16 when manually lowering the lift arm 8a.

The second change display portion 114 is a portion that changes a position of the lowering indicator portion 113 on the height display portion 110-that is, the rotation starting height. The second change display portion 114 is disposed on a right side of the lowering indicator portion 113. The second change display portion 114 includes an increasing input portion 114a that increases the rotation starting height and a decreasing input portion 114b that decreases the rotation starting height. The increasing input portion 114a is disposed on the maximum-value side in the graduation portion 110a of the height display portion 110, and the decreasing input portion 114b is disposed on the minimum-value side in the graduation portion 110a of the height display portion 110. When the rotation starting height is increased by operating the increasing input portion 114a, the lowering indicator portion 113 moves to the maximum-value side along the graduation portion 110a. When the rotation starting height is decreased by operating the decreasing input portion 114b, the lowering indicator portion 113 moves to the minimum-value side along the graduation portion 110a.

According to the above, after setting the rotation starting height, in a situation wherein the lift arm 8 is lowered by manually operating the pumper switch 42g and the like, rotation of the PTO shaft 16 is started, as controlled by the control device 40, at a point when the current height of the lift arm 8a falls below the rotation starting height indicated by the lowering indicator portion 113.

Now, the display device 50B displays a PTO setting button 115. The PTO setting button 115 is a button that associates the current height of the lift arm 8a with the PTO settings. The PTO setting button 115 is a button that is displayed on the PTO settings screen M7 and is selectable. When selected, the PTO setting button 115 can set the rotation stopping height indicated by the raising indicator portion 111 to the current height of the lift arm 8a. Moreover, when selected, the PTO setting button 115 can set the rotation starting height indicated by the lowering indicator portion 113 to the current height of the lift arm 8a.

Specifically, the PTO setting button 115 has a first height setting button 115a and a second height setting button 115b. The first height setting button 115a is disposed on the left side of the raising indicator portion 111 and between the increasing input portion 112a and the decreasing input portion 112b. The first height setting button 115a sets the current height of the lift arm 8a to the rotation stopping height indicated by the raising indicator portion 111. When the current height of the lift arm 8a is set to the rotation stopping height by the first height setting button 115a, the raising indicator portion 111 moves to a position corresponding to the rotation stopping height in the graduation portion 110a. Moreover, the first height setting button 115a may move along the graduation portion 110a in correspondence with the current height of the lift arm 8a or be fixed in a predetermined position.

The second height setting button 115b is disposed on the right side of the lowering indicator portion 113 and between the increasing input portion 114a and the decreasing input portion 114b. The second height setting button 115b sets the current height of the lift arm 8a to the rotation starting height indicated by the lowering indicator portion 113. When the current height of the lift arm 8a is set to the rotation starting height by the second height setting button 115b, the lowering indicator portion 113 moves to a position corresponding to the rotation stopping height in the graduation portion 110a. Moreover, the second height setting button 115b may move along the graduation portion 110a in correspondence with the current height of the lift arm 8a or be fixed in a predetermined position.

Furthermore, the display device 50B displays a switching portion 116 in the PTO settings screen M7. The switching portion 116 is a portion that switches between enabling and disabling an operation of the PTO shaft 16 relative to the height of the lift arm 8a and is constituted by a shape indicating a switch. The operation of the PTO shaft 16 relative to the height of the lift arm 8a is, as above, a "first PTO operation of stopping rotation of the PTO shaft 16 when manually raising the lift arm 8a" and a "second PTO operation of starting rotation of the PTO shaft 16 when manually lowering the lift arm 8a".

The switching portion 116 includes a first switch 116a that switches between enabling and disabling the first PTO operation and a second switch 116b that switches between enabling and disabling the second PTO operation.

The first switch 116a can be switched ON/OFF by sliding a shape such as an icon (symbol) in the PTO settings screen M7. When this first switch 116a is ON and the first PTO operation is switched to be enabled, in a situation wherein the lift arm 8a is manually raised, rotation of the PTO shaft 16 is automatically stopped when the height of this lift arm 8a exceeds the rotation stopping height. When the first switch 116a is OFF and the first PTO operation is switched to be disabled, in a situation wherein the lift arm 8a is manually raised, rotation of the PTO shaft 16 is not automatically stopped even when the height of this lift arm 8a exceeds the rotation stopping height.

Furthermore, the second switch 116b can be switched ON/OFF by sliding a shape such as an icon (symbol) in the PTO settings screen M7. When this second switch 116b is ON and the second PTO operation is switched to be enabled, in a situation wherein the lift arm 8 is manually lowered, rotation of the PTO shaft 16 is automatically started when the height of this lift arm 8a falls below the rotation stopping height. When the second switch 116b is OFF and the second PTO operation is switched to be disabled, in a situation wherein the lift arm 8 is manually lowered, rotation of the PTO shaft 16 is not automatically started even when the height of this lift arm 8a falls below the rotation stopping height.

The work machine 1 is provided with the machine body 3, the motor 4, the raising and lowering apparatus 8 that is provided to the machine body 3 and has the lift arm 8a that raises and lowers the work apparatus 2, the PTO shaft 16 that rotates due to the power from the motor 4 and transmits the rotational power to the work apparatus 2, and the display device that configures PTO settings relating to the PTO shaft 16 in correspondence with the height of the lift arm 8a. The display device 50B displays the PTO setting button 115 that associates the current height of the lift arm 8a with the PTO settings. Accordingly, when the PTO setting button 115 is operated, an actual position (current height) of the lift arm 8a is associated with the PTO settings. As such, simply operating the PTO setting button 115 can reflect the current height of the lift arm 8a in the PTO settings.

The display device 50B is provided with the height display portion 110 that displays the height of the lift arm 8a and with the raising indicator portion 111 that indicates, in the height display portion 110, the height whereat rotation of the PTO shaft 16 is stopped when raising the lift arm 8a. Moreover, when the PTO setting button 115 is selected, the height indicated by the raising indicator portion 111 on the height display portion 110 is made to be the current height of the lift arm 8a. Accordingly, the current height of the lift arm 8a at a point when the PTO setting button 115 is selected can be set to the height whereat rotation of the PTO shaft 16 is stopped when raising the lift arm 8a.

The display device 50B is provided with the height display portion 110 that displays the height of the lift arm 8a and with the lowering indicator portion 113 that indicates, in the height display portion 110, the height whereat rotation of the PTO shaft 16 is started when lowering the lift arm 8a. Moreover, when the PTO setting button 115 is selected, the height indicated by the lowering indicator portion 113 on the height display portion 110 is made to be the current height of the lift arm 8a. Accordingly, the current height of the lift arm 8a at the point when the PTO setting button 115 is selected can be set to be the height whereat rotation of the PTO shaft 16 is started when lowering the lift arm 8a.

The display device 50B is provided with the height display portion 110 that displays the height of the lift arm 8a and with the lowering indicator portion 113 that indicates, in the height display portion 110, the height whereat rotation of the PTO shaft 16 is started when lowering the lift arm 8a. The PTO setting button 115 is provided with the first height setting button 115a that makes the height indicated by the raising indicator portion 111 on the height display portion 110 the current height of the lift arm 8a and with the second height setting button 115b that makes the height indicated by the lowering indicator portion 113 on the height display portion 110 the current height of the lift arm 8a. Accordingly, when the first height setting button 115a is selected, the current height of the lift arm 8a can be set to the height whereat rotation of the PTO shaft 16 is stopped when raising the lift arm 8a. When the second height setting button 115b is selected, the current height of the lift arm 8a can be set to the height whereat rotation of the PTO shaft 16 is started when lowering the lift arm 8a. Moreover, by viewing the raising indicator portion 111 and the lowering indicator portion 113, the set heights can be grasped visually.

The display device 50B has the first change display portion 112 that changes the height of the raising indicator portion 111 on the height display portion 110. Accordingly, the height whereat rotation of the PTO shaft 16 is stopped when raising the lift arm 8a can be easily set by an operation of the first change display portion 112.

The display device 50B has the second change display portion 114 that changes the height of the lowering indicator portion 113 on the height display portion 110. The height whereat rotation of the PTO shaft 16 is started when lowering the lift arm 8a can be easily set by an operation of the second change display portion 114.

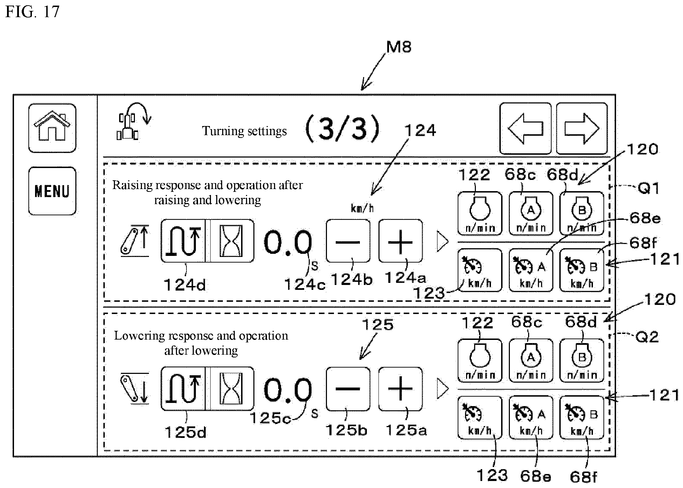

Now, the display device 50B can set an operation after raising and lowering in the raising and lowering apparatus 8. As illustrated in FIG. 17, when a predetermined operation is performed on the display device 50B, this display device 50B displays a raising and lowering settings screen (eighth screen) M8 that can set an operation after raising and lowering.

In the raising and lowering settings screen M8, a setting can be configured for an operation after raising and lowering for when an operation member operating the raising and lowering of the raising and lowering apparatus 8-for example, the pumper switch 42g-is operated. The raising and lowering settings screen M8 is divided into a first setting area Q1 and a second setting area Q2. The first setting area Q1 is an area that configures a setting of an operation of when the pumper switch 42g is operated to a side of raising the raising and lowering apparatus 8 (raising side). The second setting area Q2 is an area that configures a setting of an operation of when the pumper switch 42g is operated to a side of lowering the raising and lowering apparatus 8 (lowering side). Specifically, in the first setting area Q1, a motor rotation speed and a vehicle velocity of when the raising and lowering apparatus 8 is raised by an operation of the pumper switch 42g can be set. Moreover, in the second setting area Q2 as well, a motor rotation speed and a vehicle velocity of when the raising and lowering apparatus 8 is lowered by an operation of the pumper switch 42g can be set.

The display device 50B displays in the raising and lowering settings screen M8 a rotation-speed setting portion 120 that sets the motor rotation speed and a velocity setting portion 121 that sets the vehicle velocity. Specifically, the rotation-speed setting portion 120 and the velocity setting portion 121 are displayed in both the first setting area Q1 and the second setting area Q2.

The rotation-speed setting portion 120 includes a plurality of motor icons. The plurality of motor icons is icons that can be selected by a touch operation or an operation of the operation tool 57 in the raising and lowering settings screen M8 and is icons associated with the motor rotation speed stored in the storage unit 51. In one or more embodiments, the plurality of motor icons is the third setting icon 68c associated with the first motor rotation speed and the fourth setting icon 68d associated with the second motor rotation speed. Therefore, when the third setting icon 68c is selected, the rotation speed can be set to the first motor rotation speed, and when the fourth setting icon 68d is selected, the rotation speed can be set to the second motor rotation speed.

Furthermore, the rotation-speed setting portion 120 includes a motor manual icon 122 separately from the plurality of motor icons. The motor manual icon 122 is also selectable and is an icon that sets to a motor rotation speed changed by a first change operation member. The first change operation member is the accelerator 42f, which is an acceleration pedal, an acceleration lever, or the like. Therefore, when the motor manual icon 122 is selected, the rotation speed can be set to the motor rotation speed set by the accelerator 42f (manual motor rotation speed).

The velocity setting portion 121 includes a plurality of velocity icons. The plurality of velocity icons is icons that can be selected by a touch operation or an operation of the operation tool 57 in the raising and lowering settings screen M8 and is icons associated with the vehicle velocity stored in the storage unit 51. In one or more embodiments, the plurality of velocity icons is the fifth setting icon 68e associated with the first vehicle velocity and the sixth setting icon 68f associated with the second vehicle velocity. Therefore, when the fifth setting icon 68e is selected, the velocity can be set to the first vehicle velocity, and when the sixth setting icon 68f is selected, the velocity can be set to the second vehicle velocity.

Furthermore, the velocity setting portion 121 includes a velocity manual icon 123 separately from the plurality of velocity icons. The velocity manual icon 123 is also selectable and is an icon that sets to a velocity changed by a second change operation member. The second change operation member can set to a vehicle velocity set by the vehicle velocity lever 42i (manual vehicle velocity).

Now, the display device 50B displays a raising-condition input portion 124 in the first setting area Q1. The raising-condition input portion 124 is a portion that inputs a condition of executing a change in the motor rotation speed or a change in the vehicle velocity (operation condition) when the pumper switch 42g is operated to the raising side. The raising-condition input portion 124 is a portion that sets a time and a distance from operating the pumper switch 42g to the raising side to executing the change in the motor rotation speed and the change in the vehicle velocity.

The raising-condition input portion 124 includes an increasing input portion 124a that increases a raising-condition setting value of time or distance, a decreasing input portion 124b that decreases the raising-condition setting value, and a number display portion 124c that displays the raising-condition setting value as a number. Moreover, the raising-condition input portion 124 includes a setting switching portion 124d that switches the raising-condition setting value to either among time and distance. Therefore, by inputting a time or distance that is the raising-condition setting value to the raising-condition input portion 124, a time and a distance from operating the pumper switch 42g to the raising side to changing an actual rotation speed of the motor to any among the first motor rotation speed, second motor rotation speed, and the manual motor rotation speed set by the rotation-speed setting portion 120 can be set. Moreover, by inputting a time or distance that is the raising-condition setting value to the raising-condition input portion 124, a time and a distance from operating the pumper switch 42g to the raising side to changing an actual vehicle velocity of the tractor 1 (machine body 3) to any among the first vehicle velocity, the second vehicle velocity, and the manual vehicle velocity set by the velocity setting portion 121 can be set.

Furthermore, the display device 50B displays a lowering-condition input portion 125 in the second setting area Q2. The lowering-condition input portion 125 is a portion that inputs a condition of executing a change in the motor rotation speed or a change in the vehicle velocity (operation condition) when the pumper switch 42g is operated to the lowering side. The lowering-condition input portion 125 is a portion that sets a time and a distance from operating the pumper switch 42g to the lowering side to executing the change in the motor rotation speed and the change in the vehicle velocity.

The lowering-condition input portion 125 includes an increasing input portion 125a that increases a lowering-condition setting value that is time or distance, a decreasing input portion 125b that decreases the lowering-condition setting value, and a number display portion 125c that displays the lowering-condition setting value as a number. Moreover, the lowering-condition input portion 125 includes a setting switching portion 125d that switches the lowering-condition setting value to either among time and distance. Therefore, by inputting a time or distance that is the lowering-condition setting value to the lowering-condition input portion 125, a time and a distance from operating the pumper switch 42g to the lowering side to changing the actual rotation speed of the motor to any among the first motor rotation speed, the second motor rotation speed, and the manual motor rotation speed set by the rotation-speed setting portion 120 can be set. Moreover, by inputting a time or distance that is the lowering-condition setting value to the lowering-condition input portion 125, a time and a distance from operating the pumper switch 42g to the lowering side to changing the actual vehicle velocity of the tractor 1 (machine body 3) to any among the first vehicle velocity, the second vehicle velocity, and the manual vehicle velocity set by the velocity setting portion 121 can be set.

Now, as above, by selecting a plurality of motor icons had by the rotation-speed setting portion 120 and selecting a plurality of velocity icons had by the velocity setting portion 121, a setting can be configured for a combination of a plurality of motor rotation speeds and a plurality of vehicle velocities. Here, when no combination of a predetermined motor rotation speed among the plurality of motor rotation speeds and a predetermined vehicle velocity among the plurality of vehicle velocities is established, the display device 50B prevents icons for which no combination can be established from being selected.

Specifically, when a first selection icon that is at least one motor icon among the plurality of motor icons is selected, the display device 50B places in an active state a velocity icon that can be set in correspondence with the first selection icon from among the plurality of velocity icons. Moreover, the display device 50B places in an inactive state a velocity icon that cannot be set in correspondence with the first selection icon.

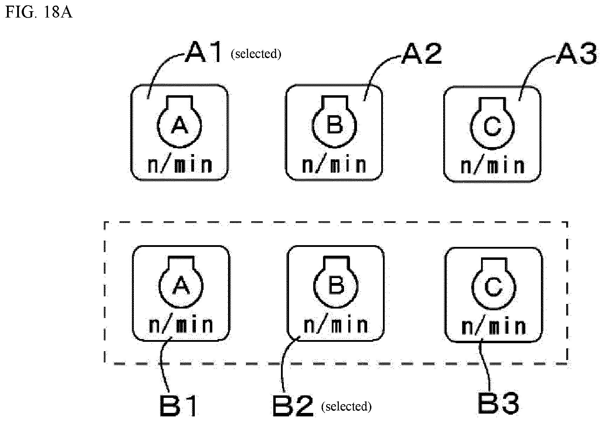

As illustrated in FIG. 18A, the display device 50B displays motor icons A1, A2, A3 as motor icons whose motor rotation speeds are to be set and displays velocity icons B1, B2, B3 as velocity icons whose vehicle velocities are to be set. Here, when the motor icon A1 is the selected first selection icon, when any among the velocity icons B1, B2, B3 can be set, the display device 50B places the velocity icons B1, B2, B3 in the active state and thereby accepts selection of any among the velocity icons B1, B2, B3.

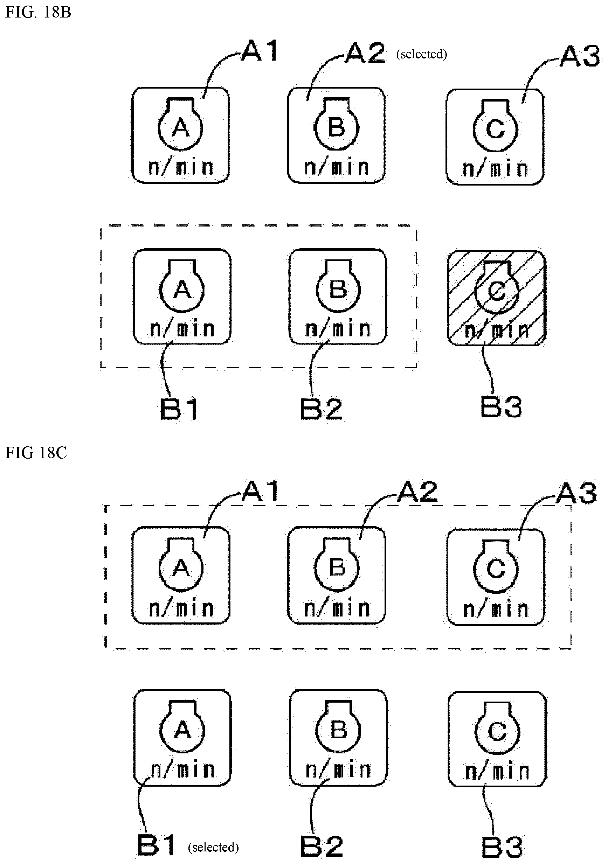

As illustrated in FIG. 18B, when the motor icon A2 is the selected first selection icon, when the velocity icons B1, B2 can be set and the velocity icon B3 cannot be set, the display device 50B places the velocity icons B1, B2 in the active state. Meanwhile, it places the velocity icon B3 in the inactive state and does not accept selection of the velocity icon B3.

Furthermore, when a second selection icon that is at least one velocity icon among the plurality of velocity icons is selected, the display device 50B places in the active state a motor icon that can be set in correspondence with the second selection icon from among the plurality of motor icons. Moreover, the display device 50B places in the inactive state a motor icon that cannot be set in correspondence with the second selection icon.

As illustrated in FIG. 18C, the display device 50B, when the velocity icon B1 is the selected second selection icon, when any among the motor icons A1, A2, A3 can be set, the display device 50B places the motor icons A1, A2, A3 in the active state and thereby accepts selection of any among the motor icons A1, A2, A3.

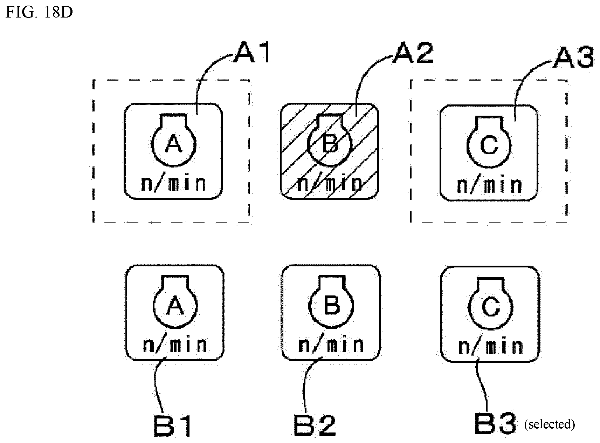

As illustrated in FIG. 18D, when a velocity icon C3 is the selected second selection icon, when the motor icons A1, A3 can be set and the motor icon A2 cannot be set, the display device 50B places the motor icons A1, A3 in the active state. Meanwhile, it places the motor icon A2 in the inactive state and does not accept selection of the motor icon A2.

In the above embodiments, when a predetermined motor icon is set, a velocity icon that cannot be set is placed in the inactive state. However, a reason why the velocity icon that cannot be set cannot be set may be displayed in the raising and lowering settings screen M8. Moreover, when a predetermined velocity icon is set, a motor icon that cannot be set is placed in the inactive state. However, a reason why the motor icon that cannot be set cannot be set may be displayed in the raising and lowering settings screen M8.

The work machine 1 is provided with the machine body 3, the motor 4 provided to the machine body 3, the work apparatus 2, the raising and lowering apparatus 8 that raises and lowers the work apparatus 2, the operation member (pumper switch 42g) that operates the raising and lowering of the raising and lowering apparatus 8, and the display device 50B that displays the rotation-speed setting portion 120, which sets the rotation speed of the motor 4 of when the operation member (pumper switch 42g) is operated, and the velocity setting portion 121, which sets the velocity of the machine body 3 of when the operation member (pumper switch 42g) is operated. Accordingly, when raising and lowering (a raising and lowering operation) of the raising and lowering apparatus 8 is performed by the operation member (pumper switch 42g), the rotation speed of the motor 4 can be made to be that set by the rotation-speed setting portion 120, and the velocity (vehicle velocity) can be made to be that set by the velocity setting portion 121. That is, when raising and lowering the raising and lowering apparatus 8 by an operation of the operation member, a change can be automatically made to the set motor 4 rotation speed, vehicle speed, and the like. This can mitigate an operation load of the operator.

The work machine 1 is provided with the storage unit 51 that stores rotation speeds of the motor 4 and velocities of the machine body 3. The rotation-speed setting portion 120 includes the plurality of motor icons that is associated with the motor speeds of the motor 4 stored in the storage unit 51, is displayed on the screen, and is selectable. The velocity setting portion 121 includes the plurality of velocity icons that is associated with the vehicle velocities of the machine 3 stored in the storage unit 51, is displayed on the screen, and is selectable. Accordingly, simply selecting a motor icon and a velocity icon can change a rotation speed of the motor 4 and a vehicle velocity of when the raising and lowering apparatus 8 is raised and lowered by an operation of the operation member.

When the first selection icon that is at least one motor icon among the plurality of motor icons is selected, the display device 50B places in the active state a velocity icon that can be set in correspondence with the first selection icon from among the plurality of velocity icons and places in the inactive state a velocity icon that cannot be set in correspondence with the first selection icon. Accordingly, when a predetermined motor icon (first selection icon) is selected, according to the rotation speed of the motor 4 corresponding to this predetermined motor icon, a velocity icon whose vehicle velocity can be set is placed in the active state, and a velocity icon whose vehicle speed cannot be set is placed in the inactive state. As such, the operator can easily grasp a vehicle velocity that can be set for a set rotation speed of the motor 4 after the rotation speed of the motor 4 is set.

When the second selection icon that is at least one velocity icon among the plurality of velocity icons is selected, the display device 50B places in the active state a motor icon that can be set in correspondence with the second selection icon from among the plurality of motor icons and places in the inactive state a motor icon that cannot be set in correspondence with the second selection icon. Accordingly, when a predetermined velocity icon (second selection icon) is selected, according to the vehicle velocity corresponding to this predetermined velocity icon, a motor icon whose motor 4 rotation speed can be set is placed in the active state, and a motor icon whose motor 4 rotation speed cannot be set is placed in the inactive state. As such, the operator can easily grasp a motor 4 rotation speed that can be set for a set vehicle speed after the vehicle speed is set.

The display device 50B can display the first setting area Q1 that configures a setting of an operation of when the operation member (pumper switch 42g) is operated to the raising side of the raising and lowering apparatus 8 and the second setting area Q2 that configures a setting of an operation of when the operation member (pumper switch 42g) is operated to the lowering side of the raising and lowering apparatus 8. The rotation-speed setting portion 120 and the velocity setting portion 121 are displayed in the first setting area Q1 and the second setting area Q2. Accordingly, a motor 4 rotation-speed setting and a vehicle-velocity setting can be configured at either among raising and lowering the raising and lowering apparatus 8.

The display device 50B can display the raising-condition input portion 124 that inputs a condition of executing an operation after operating the operation member (pumper switch 42g) to the raising side and a lowering-condition input portion 125 that inputs a condition of executing an operation after operating the operation member (pumper switch 42g) to the lowering side. Accordingly, when either among the raising operation and the lowering operation is performed manually by the operation member (pumper switch 42g), a condition of performing the operation to executing a change in the rotation speed of the motor 4 and a condition of performing the operation to executing a change in the vehicle velocity can be easily set by the raising-condition input portion 124 and the lowering-condition input portion 125.

The raising-condition input portion 124 can input a time or distance whereat an actual rotation speed of the motor is set as the rotation speed of the motor set by the rotation-speed setting portion 120 and a time or distance whereat an actual velocity of the machine body 3 is set as the velocity of the machine body 3 set by the velocity setting portion 121. The lowering-condition input portion 125 can input a time or distance whereat an actual rotation speed of the motor is set as the rotation speed of the motor set by the rotation-speed setting portion 120 and a time or distance whereat an actual velocity of the machine body 3 is set as the velocity of the machine body 3 set by the velocity setting portion 121. Accordingly, after either among the raising operation and the lowering operation is performed manually by the operation member (pumper switch 42g), a time or distance until executing a change in the rotation speed of the motor 4 and a time or distance until executing a change in the vehicle velocity can be easily changed.

The work machine 1 is provided with the first change operation member that changes the rotation speed of the motor separately from the rotation-speed setting portion 120 and with the second change operation member that changes the velocity of the machine body 3 separately from the velocity setting portion 121. The rotation-speed setting portion 120 has, separately from the plurality of motor icons, the motor manual icon that sets to the rotation speed of the motor changed by the first change operation member. The velocity setting portion 121 has, separately from the plurality of velocity icons, the velocity manual icon that sets to the velocity of the machine body 3 set by the second change operation member. Accordingly, other than the motor icon associated in advance with the rotation speed of the motor 4 and the velocity icon associated in advance with the vehicle velocity, changes can be made to the rotation speed of the motor 4 set manually by the operator using the first change operation member and the vehicle velocity set manually by the operator using the second change operation member.

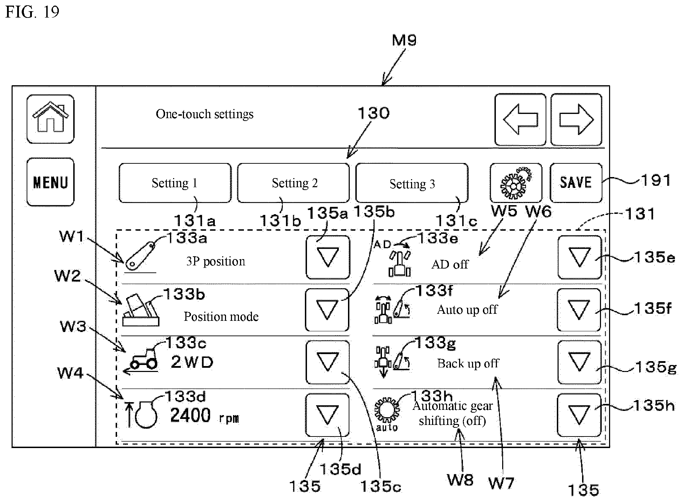

Now, as illustrated in FIG. 19, when a predetermined operation is performed on the display device 50B, this display device 50B displays a one-touch settings screen (ninth screen) M9. In the one-touch settings screen M9, a plurality of units of setting information assigned to preestablished groups is read from the storage unit 51, and the screen is one that can display the read plurality of units of setting information.

First, a plurality of setting items and the plurality of units of setting information in the one-touch settings screen M9 are described. The plurality of setting items illustrated in the one-touch settings screen M9 is, for example, items necessary to perform work by the work apparatus 2 and includes a "raising and lowering setting item W1" indicating an operation setting of the raising and lowering apparatus 8 during forward travel, an "attitude setting item W2" indicating an operation setting of the attitude changing apparatus 25, a "travel setting item W3" indicating an operation setting in travel of the machine body 3, a "rotation upper-limit setting item W4" indicating the upper-limit value of the motor rotation speed, a "speed multiplier setting item W5" indicating a presence or absence of an increase in a rotation speed of the front wheel 7F during turning or the like, an "auto up item W6" indicating an operation setting of the second automatic raising operation, a "back up item W7" indicating an operation setting of the first automatic raising operation, and an "automatic gearshift setting item W8" indicating an operation setting of automatic gear shifting of the gearshift apparatus. It is sufficient for the setting items displayed in the one-touch settings screen M9 to be items wherein the work apparatus 2 performs the work, and the setting items are not limited to the above items. In the one-touch settings screen M9, it is sufficient for at least one or more among the raising and lowering setting item W1, the attitude setting item W2, the travel setting item W3, the rotation upper-limit setting item W4, the speed multiplier setting item W5, the auto up item W6, the back up item W7, and the automatic gearshift setting item W8 to be displayed, and not all setting items need to be displayed.

Setting information corresponding to the raising and lowering setting item W1 is, for example, a manually raising and lowering mode (3P position) and an automatically raising and lowering 3P mode (3P auto). Setting information corresponding to the attitude setting item W2 is a position mode, a level mode, and an incline mode. Setting information corresponding to the travel setting item W3 is 4WD, 4WD accelerated, and 2WD. Setting information corresponding to the rotation upper-limit setting item W4 is the upper-limit value of the motor rotation speed. Setting information corresponding to the speed multiplier setting item W5 is a speed multiplier enabled (on) and disabled (off). Setting information corresponding to the auto up item W6 is the second automatic raising operation enabled (on) and disabled (off). Setting information corresponding to the back up item W7 is the first automatic raising operation enabled (on) and disabled (off). Setting information corresponding to the automatic gearshift setting item W8 is automatic gear shifting enabled (on) and disabled (off).

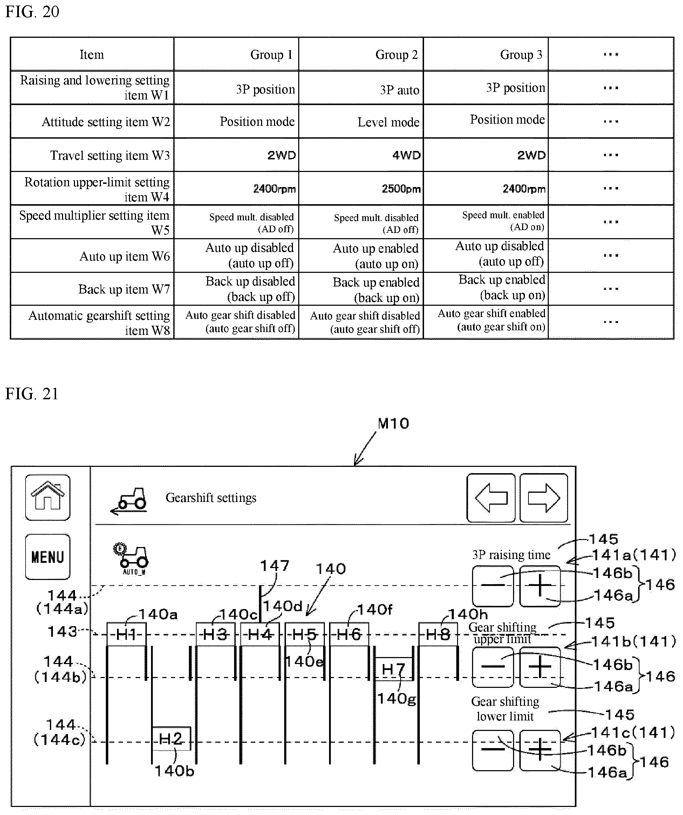

As illustrated in FIG. 20, the storage unit 51 stores, for each group, a relationship between the plurality of setting items (raising and lowering setting item W1, attitude setting item W2, travel setting item W3, rotation upper-limit setting item W4, speed multiplier setting item W5, auto up item W6, back up item W7, automatic gearshift setting item W8) and the plurality of units of setting information (3P position, 3P auto, position mode, level mode, incline mode, 4WD, 4WD accelerated, 2WD, upper-limit value of motor rotation speed, speed multiplier enabled and disabled, second automatic raising operation (auto up) enabled and disabled, first automatic raising operation (back up) enabled and disabled, automatic gear shifting enabled and disabled).

The display device 50B displays a group display portion 130 and a list display portion 131 in the one-touch settings screen M9. The group display portion 130 is a portion that displays a plurality of preestablished groups. The group display portion 130 includes a plurality of name display portions 132, and each of the plurality of name display portions 132 indicates a group name. In one or more embodiments, the plurality of name display portions 132 includes a name display portion 132a indicating a first group, a name display portion 132b indicating a second group, and a name display portion 132c indicating a third group. Each among the name display portions 132a, 132b, and 132c can be selected by a touch operation or an operation of the operation tool 57.

The list display portion 131 displays the plurality of setting items and the plurality of units of setting information corresponding to the selected group among the plurality of groups displayed in the group display portion 130. For example, when the name display portion 132a is selected, the list display portion 131 reads the plurality of setting items and the plurality of units of setting information corresponding to the first group from the storage unit 51 and displays icons 133 indicating the plurality of read setting items corresponding to the first group in order on the one-touch settings screen M9. Moreover, it displays the setting information read from the storage unit 51 next to the icons 133 in order on the one-touch settings screen M9. That is, the list display portion 131 displays an icon 133a indicating the raising and lowering setting item W1, an icon 133b indicating the attitude setting item W2, an icon 133c indicating the travel setting item W3, an icon 133d indicating the rotation upper-limit setting item W4, an icon 133e indicating the speed multiplier setting item W5, an icon 133f indicating the auto up item W6, an icon 133g indicating the back up item W7, and an icon 133h indicating the automatic gearshift setting item W8. Moreover, the setting information corresponding to each of the icons 133a to 133h is displayed.

Therefore, by the operator (operator) selecting a group corresponding to the work of the work apparatus 2 from the plurality of groups displayed in the group display portion 130, a plurality of units of setting information can be displayed on the one-touch settings screen M9, and the displayed plurality of units of setting information can be confirmed.

The list display portion 131 includes a change display portion 135. The change display portion 135 is a portion that can change the setting information. The change display portion 135 can change setting information for each setting item and includes a change portion 135a corresponding to the raising and lowering setting item W1, a change portion 135b corresponding to the attitude setting item W2, a change portion 135c corresponding to the travel setting item W3, a change portion 135d corresponding to the rotation upper-limit setting item W4, a change portion 135e corresponding to the speed multiplier setting item W5, a change portion 135f corresponding to the auto up item W6, a change portion 135g corresponding to the back up item W7, and a change portion 135h corresponding to the automatic gearshift setting item W8.

Each of the change portions 135a to 135h can be selected by a touch operation or an operation of the operation tool 57 and, by being selected, can change the setting information displayed in the list display portion 131. For example, when the change portion 135d is selected, the upper-limit value of the motor rotation speed can be changed. Moreover, when the change portion 135h is selected, automatic gear shifting being on or off can be changed. Therefore, at least the setting information set in correspondence with the group-that is, the setting information displayed on the one-touch settings screen M9-can be changed.

As illustrated in FIG. 1C, the tractor 1 is provided with a setting switch 137. The setting switch 137 is a switch that can be switched ON or OFF. The setting switch 137 is provided around the driver seat 10. When the setting switch 137 is turned ON in a state wherein a plurality of units of setting information is displayed in the list display portion 131 in the one-touch settings screen M9, the plurality of units of setting information displayed in this list display portion 131 is set in the control device 40 of the tractor 1 as enabled setting information.

That is, at a point when it is turned ON, the setting switch 137 permits the plurality of units of setting information indicated in the list display portion 131 to be used as information to be used by the control device 40. In other words, at a point when it is turned ON, the setting switch 137 notifies the control device 40 of the plurality of units of setting information indicated in the list display portion 131. When the plurality of units of setting information is set, the control device 40 executes control based on the set plurality of units of setting information.

Prior to setting the plurality of units of setting information in the control device 40 via the setting switch 137, the display device 50B executes switching of the list display portion 131, and after setting the plurality of units of setting information, it stops switching of the list display portion 131. For example, in a state wherein a plurality of units of setting information is displayed in the list display portion 131 in the one-touch settings screen M9 and the setting switch 137 is turned OFF (prior to setting), the display device 50B switches display of the plurality of units of setting information displayed in the list display portion 131 each time the selection of the group displayed in the group display portion 130 is changed.

Meanwhile, in a state wherein the plurality of units of setting information is displayed in the list display portion 131 in the one-touch settings screen M9 and the setting switch 137 is turned ON (after setting), the display device 50B cannot change the selection of the group displayed in the group display portion 130, and the set plurality of units of setting information is displayed in the list display portion 131.

As illustrated in FIG. 1C, the tractor 1 is provided with an operation switch 190. The operation switch 190 is a switch that is provided around the driver seat 10 and can set setting information of a predetermined setting item. The operation switch 190 is a switch that can configure, for example, a setting of setting information corresponding to the attitude setting item W2 (position mode, level mode, incline mode) and a setting of setting information corresponding to the travel setting item W3 (4WD, 4WD accelerated, 2WD).

After acquiring the plurality of units of setting information indicated in the list display portion 131, the control device 40 accepts, from among the acquired plurality of units of setting information, setting information of the predetermined setting item changed by the operation switch 190 and executes control using the accepted setting information.

After the plurality of units of setting information displayed in the list display portion 131 is output to the control device 40 by the setting switch 137, when, for example, the setting information corresponding to the travel setting item W3 is switched from 2WD to 4WD by the operation switch 190, the control device 40 accepts the setting information changed by the operation switch 190 and changes the tractor 1 from 2WD to 4WD.

Furthermore, when the setting information corresponding to the attitude setting item W2 is switched from the position mode to the level mode by the operation switch 190, the control device 40 accepts the setting information changed by the operation switch 190, performs switching from the position mode to the level mode, and controls the attitude changing apparatus 25 in the level mode.

The display device 50B has a setting command portion 191. The setting command portion 191 commands storing, in the storage unit 51, current setting information set by the operation switch 190. Specifically, the display device 50B displays a switch indicating the setting command portion 191 on the one-touch settings screen M9. When the setting command portion (switch) 191 is operated, it commands storing the current setting information in the storage unit 51.

For example, it is supposed that in a situation wherein the plurality of units of setting information of the first group is transmitted to at least the control device 40 and the control device 40 is controlling the tractor 1 based on the setting information of the first group, as above, the operation switch 190 is operated, a predetermined setting item-for example, the travel setting item W3-is changed to 4WD, and the attitude setting item W2 is changed to the level mode.

In such a situation, when the setting command portion 191 is operated, "4WD", which is the setting information of the travel setting item W3 set by the operation switch 190, and "level mode", which is the setting information the attitude setting item W2 set by the operation switch 190, can be updated as the setting information of the first group.

The work machine 1 is provided with the storage unit 51 that stores, in preestablished group units, a plurality of setting items relating to the work machine and a plurality of units of setting information corresponding to the setting items, and the display device 50B that displays on a screen the group display portion 130, which displays a plurality of groups, and a list display portion 131, which displays a plurality of setting items and a plurality of units of setting information corresponding to a group selected from among the plurality of groups displayed by the group display portion 130. Accordingly, when, for example, the operator operates the work machine 1 to perform work, they can confirm the plurality of setting items and the plurality of units of setting information of each preestablished group. That is, the plurality of setting items and the plurality of units of setting information corresponding to the work or the like can be easily confirmed.

The list display portion 131 is provided with the change display portion 135 that changes setting information according to an operation. Accordingly, the setting information displayed in the list display portion 131 can be changed by the change display portion 135.

Provided is the setting switch 137 that sets, in the control device 40, the plurality of units of setting information indicated in the list display portion 131 on the screen. Accordingly, the operator operating the setting switch 137 after the operator confirms the plurality of units of setting information corresponding to the plurality of setting items in the list display portion 131 can set in (output to) the control device 40 the plurality of units of setting information corresponding to the plurality of setting items confirmed by the operator.

Prior to the plurality of units of setting information being set, the display device 50B executes switching of the list display portion 131 displayed on the screen by selection of the group display portion 130, and after the plurality of units of setting information is set, it stops switching of the list display portion 131. Accordingly, prior to the plurality of units of setting information being set, the setting information of each group can be confirmed by selection of the group display portion 130. Meanwhile, after the plurality of units of setting information is output to the control device 40, stopping switching enables the output plurality of units of setting information to be fixedly displayed on the display device 50B, and the operator can confirm via the display device 50B at least what the plurality of units of setting information output to the control device 40 was.

The work machine is provided with the operation switch 190 that is provided around the driver seat 10 and can set setting information of a predetermined setting item. The control device 40 acquires the plurality of units of setting information indicated in the list display portion 131 and afterward accepts, from among the acquired plurality of units of setting information, the setting information of the predetermined setting item changed by the operation switch 190. Accordingly, when setting information of a predetermined setting item needs to be changed due to work circumstances or the like after setting information of a predetermined group is read on a control-device 40 side, the setting information can be easily changed by the operation switch 190.

The display device 50B has the setting command portion 191 that commands storing, in the storage unit 51, current setting information of the predetermined setting item set by the operation switch 190. Accordingly, when a setting more suited to the work is found while the work is actually being performed, the current setting information whose setting is changed by the operation switch 190 can be stored in the storage unit 51, and this can be read in a group unit starting from the next time.

The work machine 1 is provided with the motor 4 and the gearshift apparatus 5. The plurality of setting items includes the rotation upper-limit setting item indicating the upper-limit value of the rotation speed of the motor 4 and the automatic gearshift setting item indicating automatic gear shifting of the gearshift apparatus 5. The plurality of units of setting information includes the upper-limit value of the rotation speed of the motor and automatic gear shifting being turned on and off. Accordingly, in the work of the work machine 1, the upper-limit value of the rotation speed of the motor 4 can be set in work units. Moreover, when the rotation speed of the motor 4-that is, the rotation speed of the PTO shaft-is limited in the work apparatus 2, work is easier to perform when, for example, there is an appropriate rotation speed. Additionally, because automatic gear shifting being turned on and off can be changed according to the work, an operation load of the operator can be mitigated.

Now, as illustrated in FIG. 21, when a predetermined operation is performed on the display device 50B, this display device 50B displays a box settings screen (tenth screen) M10. The box settings screen M10 is a screen that moves a box (candidate box) 140 displaying setting information of a candidate (candidate setting information) and can thereby configure a predetermined setting. In the box settings screen M10, this is, for example, a gearshift settings screen that sets setting information relating to gear shifting.

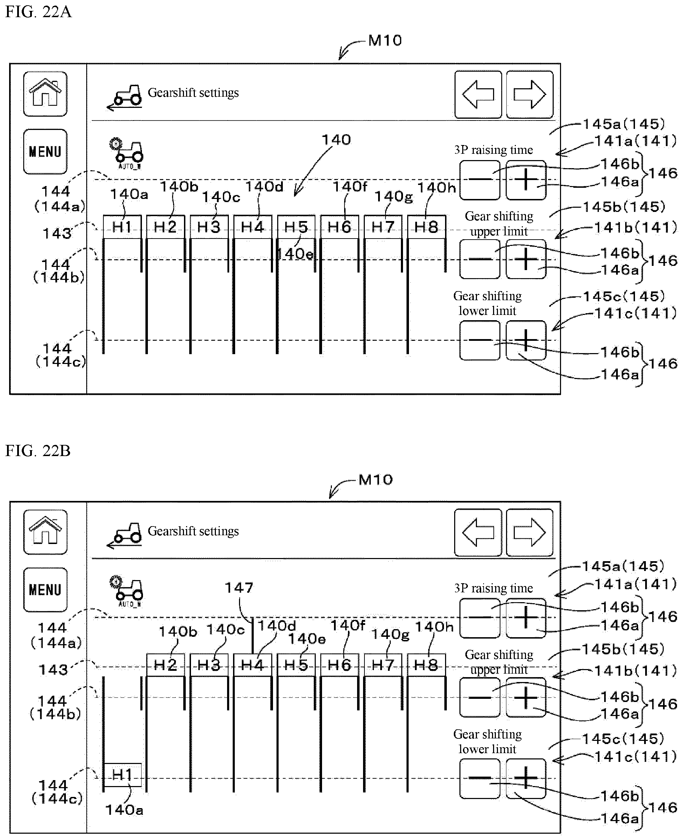

The display device 50B displays a plurality of candidate boxes 140 in the box settings screen M10. Each of the plurality of candidate boxes 140 indicates a gearshift level as setting candidate information. The plurality of candidate boxes 140 includes a first candidate box 140a indicating a gearshift level of first gear, a second candidate box 140b indicating a gearshift level of second gear, a third candidate box 140c indicating a gearshift level of third gear, a fourth candidate box 140d indicating a gearshift level of fourth gear, a fifth candidate box 140e indicating a gearshift level of fifth gear, a sixth candidate box 140f indicating a gearshift level of sixth gear, a seventh candidate box 140g indicating a gearshift level of seventh gear, and an eighth candidate box 140h indicating a gearshift level of eighth gear. As illustrated in FIG. 22A, in the box settings screen M10, in a state wherein no gearshift level is set (default state), each of the plurality of candidate boxes 140 (140a, 140b, 140c, 140d, 140e, 140f, 140g) is aligned in a horizontal direction of the box settings screen M10.

The display device 50B displays a plurality of content display portions 141 in the box settings screen M10. The plurality of content display portions 141 displays setting items. In one or more embodiments, the plurality of content display portions 141 displays setting items relating to gear shifting using characters or the like.

The plurality of content display portions 141 is disposed on one side (left side) or another side (right side) of the plurality of candidate boxes 140. The plurality of content display portions 141 is arranged in an orthogonal direction orthogonal to the aligning direction wherein the plurality of candidate boxes 140 is aligned. Specifically, when a position whereat the plurality of candidate boxes 140 is aligned in the default state is defined as a reference line 143, the content display portions 141 are disposed on a plurality of setting lines 144 parallel to this reference line 143. Note that the setting lines 144 do not need to be displayed on the box settings screen M10.

The plurality of content display portions 141 includes a first content display portion 141a, a second content display portion 141b, and a third content display portion 141c. The first content display portion 141a, the second content display portion 141b, and the third content display portion 141c each have an item display portion 145 that displays a setting item and a box selection portion 146 that selects a candidate box 140. That is, each of the plurality of content display portions 141 has an item display portion 145 and a box selection portion 146.

Specifically, an item display portion 145a of the first content display portion 141a indicates, as the setting item, setting the gearshift level during raising and lowering of the raising and lowering apparatus 8. An item display portion 145b of the second content display portion 141b indicates setting a gearshift-level upper limit. An item display portion 145c of the third content display portion 141c indicates setting a gearshift-level lower limit.

The box selection portion 146 is a portion that selects, from among the plurality of candidate boxes 140, a predetermined candidate box-that is, a candidate box whose setting is wanting to be configured (display box). The box selection portion 146 has an increasing input portion 146a and a decreasing input portion 146b.

The increasing input portion 146a is a button that selects, as the display box, a candidate box 140 positioned on a right side of a predetermined position when selecting the display box from among the plurality of candidate boxes 140. For example, as illustrated in FIG. 22A, when the increasing input portion 146a is operated in a state wherein no gearshift level is set (default state), as illustrated in FIG. 22B, the first candidate box 140a is selected as the display box.

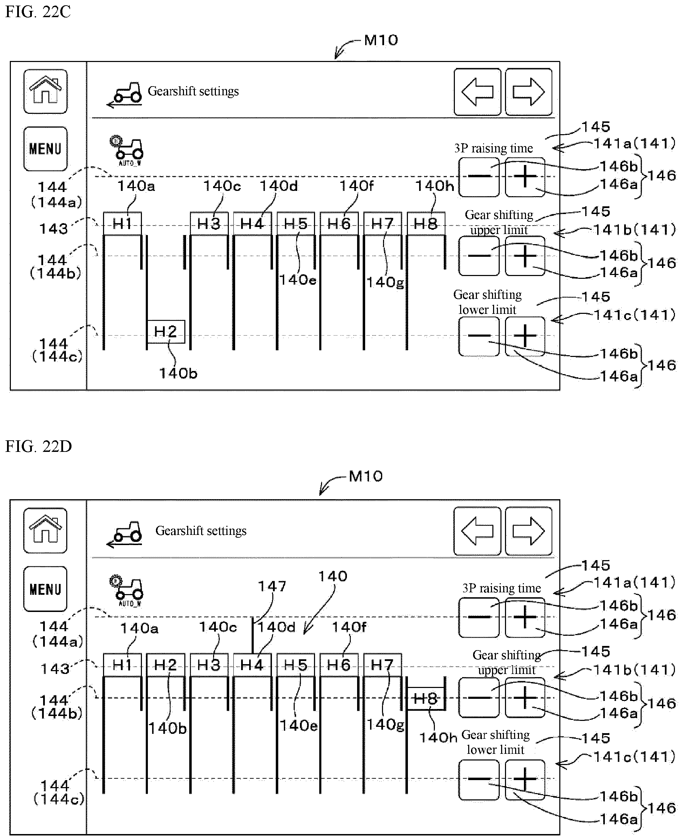

Furthermore, as illustrated in FIG. 22B, when the increasing input portion 146a is operated when the first candidate box 140a is selected as the display box, as illustrated in FIG. 22C, the second candidate box 140b, which is a candidate box 140 positioned on a right side of the first candidate box 140a, is selected as the display box. Note that when the second candidate box 140b is selected as the display box, the display-box selection of the first candidate box 140a is canceled.

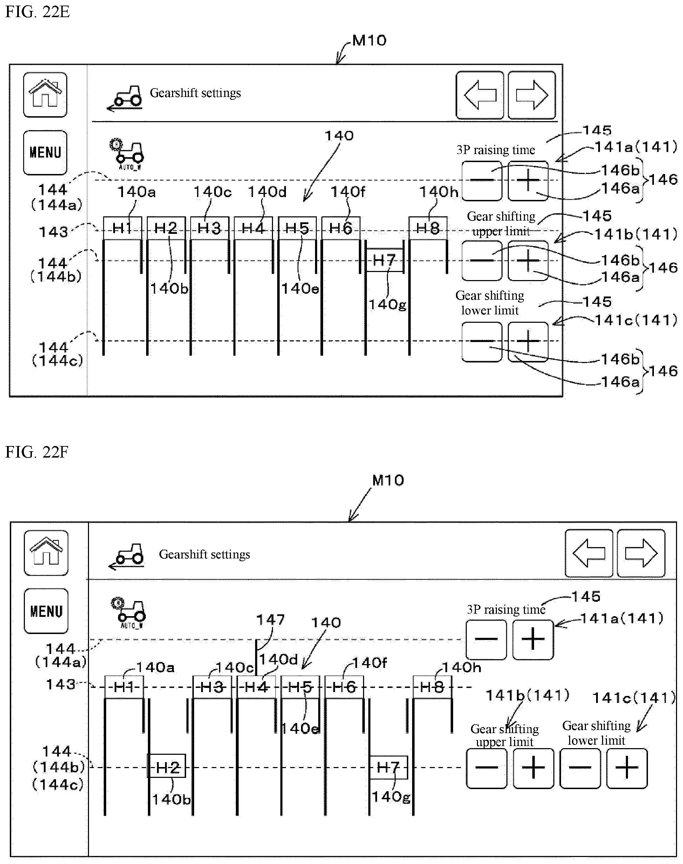

The decreasing input portion 146b is a button that selects, as the display box, a candidate box 140 positioned on a left side of a predetermined position when selecting the display box from among the plurality of candidate boxes 140. For example, as illustrated in FIG. 22A, when the decreasing input portion 146b is operated in the default state, as illustrated in FIG. 22D, the eighth candidate box 140h is selected as the display box. Moreover, as illustrated in FIG. 22D, when the decreasing input portion 146b is operated when the eighth candidate box 140h is selected as the display box, as illustrated in FIG. 22E, the seventh candidate box 140g, which is a candidate box 140 positioned on a left side of the eighth candidate box 140h, is selected as the display box. Note that when the seventh candidate box 140g is selected as the display box, the display-box selection of the eighth candidate box 140h is canceled.

When configuring a setting of the tractor 1, the display device 50B (display control unit 56) moves, from among the plurality of candidate boxes 140, a display box that is a predetermined candidate box to a position corresponding to a content display portion 141.

For example, as illustrated in FIG. 22B and FIG. 22C, when the increasing input portion 146a of the third content display portion 141c is selected in a state wherein the display box is set as the first candidate box 140a, the second candidate box 140b set as the display box is moved from the reference line 143 to be on a setting line 144c that is a position corresponding to the third content display portion 141c.

That is, when the display box is changed from the first candidate box 140a to the second candidate box 140b, the second candidate box 140b is positioned on a setting line 144b by moving the second candidate box 140b in a direction orthogonal to the reference line 143, and the first candidate box 140a is returned to the reference line 143. Therefore, the lower limit of gear shifting can be set to second gear as indicated by the second candidate box 140b.

Furthermore, as illustrated in FIG. 22D and FIG. 22E, when the decreasing input portion 146b of the second content display portion 141b is selected in a state wherein the display box is set as the eighth candidate box 140h, the seventh candidate box 140g set as the display box is moved from the reference line 143 to be on the setting line 144b that is the position corresponding to the second content display portion 141b.

That is, when the display box is changed from the eighth candidate box 140h to the seventh candidate box 140g, the seventh candidate box 140g is positioned on the setting line 144b by moving this seventh candidate box 140g in a direction orthogonal to the reference line 143, and the eighth candidate box 140h is returned to the reference line 143. Therefore, the upper limit of gear shifting can be set to seventh gear as indicated by the seventh candidate box 140g.

Note that in the above embodiments, the setting is configured by moving, from among the plurality of candidate boxes 140, a candidate box set as the display box to a position corresponding to a content display portion 141. However, the display device 50B (display control unit 56) may display a setting bar 147, indicating that a setting is being configured, from the display box toward the position corresponding to the content display portion 141.

For example, as illustrated in FIG .22A, in the default state, the plurality of candidate boxes 140 is aligned, and a state is such that no setting bar 147 is extended from this plurality of candidate boxes 140. As illustrated in FIG. 22B and FIG. 22D, when the increasing input portion 146a of the first content display portion 141a is selected in a state wherein the display box is set as the third candidate box 140c, the setting bar 147 is extended from the fourth candidate box 140d set as the display box toward a setting line 144a that is a position corresponding to the first content display portion 141a. That is, when the display box is changed from the third candidate box 140c to the fourth candidate box 140d, the setting bar 147 is extended from this fourth candidate box 140d, and the setting bar 147 of the third candidate box 140c is deleted. Therefore, the gearshift level during raising of the raising and lowering apparatus 8 can be set to fourth gear as indicated by the fourth candidate box 140d.

Note that although the gearshift level is set in the above embodiments by moving the plurality of candidate boxes 140, a gear shifting method of the gearshift apparatus 5 is not limited. For example, this may be applied to setting a gearshift level of a stepped main gearshift unit (main gearshift mechanism), and this may be applied to setting a gearshift level of a stepped auxiliary gearshift unit (auxiliary gearshift mechanism). Alternatively, in a stepless gearshift mechanism, a setting may be configured by indicating gearshift levels (gearshift magnitudes) by dividing these using the plurality of candidate boxes 140 (displaying these by demarcating a range from a minimum value to a maximum value as a predetermined range) and moving this plurality of candidate boxes 140.

In the above embodiments, as illustrated in FIG. 21, a setting is configured by moving, among the plurality of candidate boxes 140, the second candidate box 140b and the seventh candidate box 140g to different vertical positions. However, as illustrated in FIG. 22F, a setting may be configured by moving the second candidate box 140b and the seventh candidate box 140g to the same horizontal position. That is, a setting may be configured by lining up, on the same line, candidate boxes 140 to be set among the plurality of candidate boxes 140.

Furthermore, although a setting is configured by extending the setting bar 147 to a content display portion 141, when setting, a setting may be configured by changing a color of a predetermined candidate box (display box) 140 selected as a setting target from among the plurality of candidate boxes 140 to a different color than another candidate box 140 and making a color of the content display portion 141 corresponding to the content set by the display box 140 the same color as the display box 140. For example, a color of the fourth candidate box 141d and a color of the first content display portion 141a corresponding to a 3P raising time are made to be the same color.

The display device 50B of the work machine is provided with the plurality of candidate boxes 140 that is displayed on the screen and indicates candidate setting information that can be set in the work machine, the content display portions 141 displaying setting items relating to the work machine, and the display control unit 56 that, when configuring a setting of the work machine, moves the display box-this being a candidate box 140, among the plurality of candidate boxes 140, displaying candidate setting information corresponding to the setting-to a position corresponding to a content display portion 141. Accordingly, by moving, among the plurality of candidate boxes 140, the predetermined candidate box (display box) 140, displaying the candidate setting information corresponding to the setting, to a position corresponding to a content display portion 141, the candidate setting information of the display box 140 can be set. That is, because a setting can be configured by moving a plurality of units of candidate setting information to another location corresponding to a content display portion 141, it can be grasped more visually what the predetermined candidate setting information selected for setting from among the plurality of units of candidate setting information is.

The content display portion 141 has the box selection portion 146 that selects the display box from among the plurality of candidate boxes 140. The display control unit 56 moves the display box selected by the box selection portion 146 to a position corresponding to a content display portion 141. Accordingly, a setting can be easily configured by using the box selection portion 146 to select a box that is the display box from among the plurality of candidate boxes 140.

The display control unit 56 aligns the plurality of candidate boxes 140 in the screen when no setting of the work machine is configured and moves the display box from the aligned position to a position corresponding to a content display portion 141 when a setting of the work machine is configured. Accordingly, the candidate setting information can be visually grasped because the predetermined candidate box that is the display box is moved from among the plurality of candidate boxes 140.

When a setting of the work machine is configured, the display control unit 56 moves the display box in a direction intersecting the alignment direction wherein the plurality of candidate boxes 140 is aligned. Accordingly, it is easy to grasp, from among the plurality of candidate boxes 140, candidate boxes 140 not contributing to the setting and the display box contributing to the setting.

The display device of the work machine is provided with the plurality of candidate boxes 140 that is displayed on the screen and indicates candidate setting information that can be set in the work machine, the content display portions 141 displaying setting items relating to the work machine, and the display control unit 56 that, when configuring a setting of the work machine, displays the setting bar 147, indicating that a setting is being configured, from the display box, which is a candidate box 140, among the plurality of candidate boxes 140, displaying candidate setting information corresponding to the setting, toward a position corresponding to a content display portion 141. Accordingly, candidate setting information can be grasped by the setting bar 147 as well from among the plurality of units of candidate setting information.

The content display portion 141 has the box selection portion 146 that selects the display box from among the plurality of candidate boxes 140. The display control unit 56 displays the setting bar 147 that extends from the display box selected by the box selection portion 146 toward a content display portion 141. Accordingly, by selecting the display box by the box selection portion 146, a setting bar 147 corresponding to the selected candidate setting information can be displayed.

When no setting of the work machine is configured, the display control unit 56 aligns the plurality of candidate boxes 140 on the screen. When a setting of the work machine is configured, the setting bar 147 is extended in a direction intersecting the alignment direction wherein the plurality of candidate boxes 140 is aligned. Accordingly, by viewing the setting bar 147, it is easy to grasp, from among the plurality of candidate boxes 140, candidate boxes 140 not contributing to the setting and the display box contributing to the setting.

The plurality of candidate boxes 140 is boxes indicating a gearshift level of the work machine as candidate setting information. The display item is any among a gearshift-level upper limit and lower limit and a gearshift level during raising of the work apparatus 2. Accordingly, the gearshift-level upper limit and lower limit in the gearshift apparatus and the gearshift level during raising of the work apparatus 2 can be easily set.

Now, the operation tool 57 that can operate the display device 50B can operate another display device. For example, the operation tool 57 can operate the display device 50A and the display device 50C. That is, the operation tool 57 can operate a plurality of display devices 50 (display devices 50A, 50B, 50C). Note that display devices 50 able to be operated by the operation tool 57 are not limited to the above display devices 50A, 50B, 50C. It is sufficient for these to be, for example, display devices 50 provided to the tractor 1.

Registration (setting) of the setting information of the plurality of setting items of the work machine 1 is performed according to the configuration and method above using the display device 50B and control device 40. Details of the setting items and the setting information are as above.

Hereinbelow, a work memory registration system according to one or more embodiments is described. The work memory registration system is a system that creates a preset and a patch that are described below and stores (registers) the created preset and patch as a work memory in the storage unit 51.

The storage unit 51 of the display device 50B according to one or more embodiments can create and store a group associated with one setting item or a plurality of setting items freely selected by, for example, the operator of the work machine 1 from among the plurality of setting items. In one or more embodiments, this group associated with the freely selected setting item is referred to as a preset (lower group). The display device 50B can create and store a plurality of lower groups-that is, a plurality of presets.

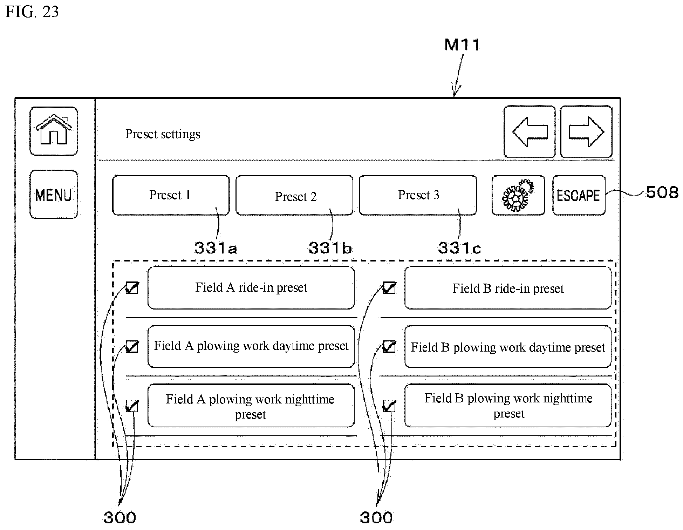

For example, in the one-touch settings screen M9 illustrated in FIG. 19, a plurality of setting items is assigned to each preestablished group. The display device 50B creates and stores presets by displaying, for example, the preset settings screen M11 illustrated in FIG. 23.

Like the one-touch settings screen M9, the preset settings screen M11 illustrated in FIG. 23 reads a plurality of setting items from the storage unit 51 and displays such. From this plurality of setting items, the operator selects a setting item to be associated as the lower group. This selection is realized by, for example, inputting a check mark to an item selection field (so-called check box) 300 of the preset settings screen M11 illustrated in FIG. 23. Input of the check mark can be operated by a touch operation by a finger or an operation-tool operation by an operation tool 57 such as a selector switch. A selection method of the setting item is not limited to input of a check mark. Instead of input of a check mark, a display brightness or color of the selected setting item may be changed, or a shape of a character or symbol may be changed.

The operator selects the setting item having the check mark input thereto and, by an operation similar to the operation on the one-touch settings screen M9 illustrated in FIG. 19, inputs setting information for the setting item. Upon ending input of setting information for all selected setting items, the operator designates any among a plurality of preset buttons 331a to 331c displayed on the preset settings screen M11 and determines the selected setting item as the preset (lower group) corresponding to this designated preset button. In FIG. 23, three preset buttons 331a to 331c are illustrated, but a number of preset buttons can be freely increased.

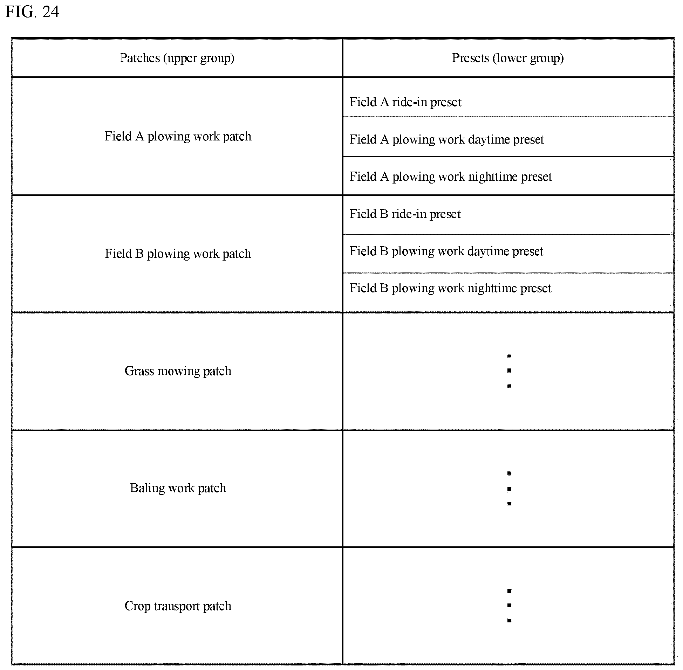

In this determination, the display device 50B may have a configuration of imparting any name (title) to the determined preset. The display device 50B stores the determined preset, together with the imparted name (title), in the storage unit 51. The name (title) imparted to the preset is, as illustrated in FIG. 24 for example, "Field A ride-in preset", "Field A plowing work daytime preset", "Field A plowing work nighttime preset", or the like.

The setting item of the preset stored in the storage unit 51 in this manner can be read by designating the corresponding preset button in the preset settings screen M11 illustrated in FIG. 23. That is, designating the corresponding preset button in the preset settings screen M11 illustrated in FIG. 23 displays a screen of when this preset is created by selecting a selection item.

At this time, by selecting the displayed setting item, the setting information can be changed by the same operation as that at the time of the above preset creation. When the corresponding preset button is selected after the setting information is changed, the display device 50B stores the preset whose setting information is changed in the storage unit 51.

Furthermore, the display device 50B comprises a preset reading unit (or preset reader) 500 that is controlled by the control device 40 and reads the plurality of presets stored in the storage unit 51 and displays these on the display device 50B. Upon receiving from the display device 50B a command (signal) instructing reading the presets, the preset reading unit 500 reads the plurality of presets stored in the storage unit 51 and, as illustrated in the Presets column in FIG. 24 for example, displays a list of the plurality of presets on the display device 50B.

The display device 50B displays a preset reading switch 501, which instructs the preset reading unit 500 to read the presets, on, for example, a home screen of the display device 50B. This screen displaying the preset reading switch 501 may be a home screen or any screen display time by the display device 50B. When the operator touches the preset reading switch 501 displayed on the screen or presses this preset reading switch 501, the preset reading switch 501 outputs a command (signal) instructing the preset reading unit 500 to read the presets.

Note that when changing the setting item included in the preset, it is sufficient to read the setting item by designating the corresponding preset button in the preset settings screen M11 illustrated in FIG. 23 and change the check mark of the item selection field 300. The above preset creation method is one example, and the method is not limited thereto. A different creation method may be adopted as long as a lower group associated with one setting item or a plurality of setting items that is freely selected can be created and stored as a preset.

The storage unit 51 of the display device 50B can also create and store a group associated with one preset or a plurality of presets, among the plurality of presets (lower groups), freely selected by, for example, the operator of the work machine 1. In one or more embodiments, this group associated with the freely selected preset is referred to as a patch (upper group). The display device 50B can create and store a plurality of upper groups-that is, a plurality of patches.

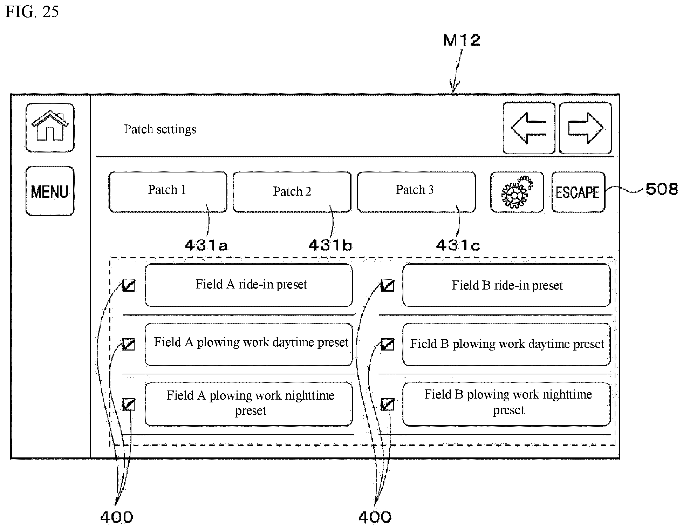

For example, the display device 50B creates and stores a patch by displaying the patch settings screen M12 illustrated in FIG. 25. The patch settings screen illustrated in FIG. 25 reads the plurality of presets from the storage unit 51 and displays this. The operator selects from among this plurality of presets a preset to be associated as the upper group. This selection is realized by, for example, inputting a check mark to an item selection field (so-called check box) 400 of the patch settings screen illustrated in FIG. 25. Input of the check mark can be operated by a touch operation by a finger or an operation-tool operation by an operation tool 57 such as a selector switch. A selection method of the preset is not limited to input of a check mark. Instead of input of a check mark, a display brightness or color of the selected preset may be changed, or a shape of a character or symbol may be changed.

Next, the operator designates any among a plurality of patch buttons 431a to 431c displayed on the patch settings screen and determines the selected preset as the patch (upper group) corresponding to this designated patch button. In FIG. 25, three patch buttons 431a to 431c are illustrated, but a number of patch buttons can be freely increased.

In this determination, the display device 50B may have a configuration of imparting any name (title) to the determined patch. The display device 50B stores the determined patch, together with the imparted name (title), in the storage unit 51. The name (title) imparted to the patch is, as illustrated in FIG. 24 for example, "Field A plowing work patch", "Grass mowing patch", "Baling work patch", or the like.

The patch stored in the storage unit 51 in this manner can be read by designating the corresponding patch button in the patch settings screen M12 illustrated in FIG. 25. That is, designating the corresponding patch button in the patch settings screen M12 illustrated in FIG. 25 displays a screen of when this patch is created by selecting the preset.

In this screen, changing the selection of the preset can change the preset associated with this patch by the same operation as that at the time of the above patch creation. When the corresponding patch button is selected after the preset is changed, the display device 50B stores the patch whose preset is changed in the storage unit 51.

Furthermore, the display device 50B comprises a patch reading unit (or patch reader) 502 that is controlled by the control device 40 and reads the plurality of patches stored in the storage unit 51 and displays these on the display device 50B. Upon receiving a command (signal) instructing reading the patches, the patch reading unit 502 reads the plurality of patches stored in the storage unit 51 and, as illustrated in the Patches column in FIG. 24 for example, displays a list of the plurality of patches on the display device 50B.

The display device 50B displays a patch reading switch 503, which instructs the patch reading unit 502 to read the patches, on, for example, a home screen of the display device 50B. This screen displaying the patch reading switch 503 may be a home screen or any screen displayed by the display device 50B. When the operator touches the patch reading switch 503 displayed on the screen or presses this patch reading switch 503, the patch reading switch 503 outputs a command (signal) instructing the patch reading unit 502 to read the patches.

Note that when changing the preset included in the patch, it is sufficient to read the preset by designating the corresponding patch button in the patch settings screen illustrated in FIG. 25 and change the check mark of the item selection field 400. The above patch creation method is one example, and the method is not limited thereto. A different creation method may be adopted as long as an upper group associated with one preset or a plurality of presets that is freely selected can be created and stored as a patch.

The storage unit 51 comes to have, for example, the database illustrated in FIG. 24 via the preset creation and patch creation described above. FIG. 24 is a diagram illustrating a database representing relationships between the patches, which are the upper group, and the presets, which are the lower group.

In the database illustrated in FIG. 24, three presets are associated as one patch. For example, three presets named "Field A ride-in preset", "Field A plowing work daytime preset", and "Field A plowing work nighttime preset" are associated as a patch named "Field A plowing work patch". Moreover, three presets named "Field B ride-in preset", "Field B plowing work daytime preset", and "Field B plowing work nighttime preset" are associated as a patch named "Field B plowing work patch".

The display device 50B comprises a patch selection unit (or patch selector) 504 that is an upper-group selection unit and a preset selection unit (or preset selector) 505 that is a lower-group selection unit, which are controlled by the control device 40, and access the above database indicating the relationships between the patches and the presets.

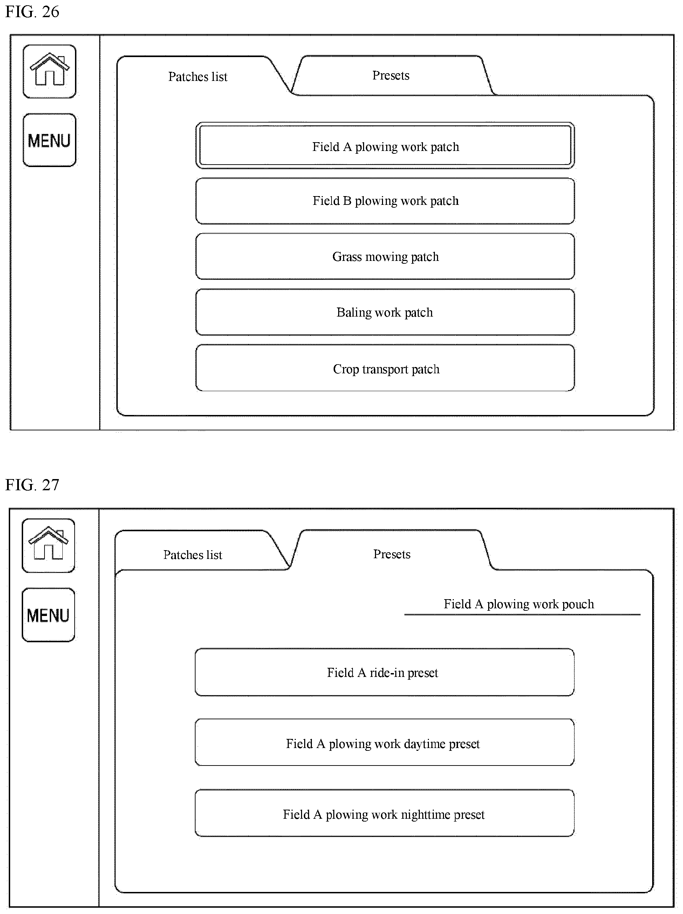

The patch selection unit 504 displays the patches list illustrated in FIG. 26 and makes any patch among the displayed patches selectable. Upon accepting a command (signal) instructing startup (operation), the patch selection unit 504 refers to the database indicating the relationships between the patches and the presets illustrated in FIG. 24 and displays the patches list illustrated in FIG. 26. The patch selection unit 504 accepts any patch selection (designation) from among the plurality of patches displayed in the patches list.

In this patch selection (designation), it is possible to, for example, select a patch name displayed in the patches list by a touch operation by a finger of the operator or an operation-tool operation by an operation tool 57 such as a selector switch.

The display device 50B has a patch selection switch 506 that is an upper-group selection switch that outputs a command (signal) that starts up (operates) the patch selection unit 504. The display device 50B displays the patch selection switch 506 instructing startup (operation) of the patch selection unit 504 on, for example, a home screen of the display device 50B. This screen displaying the patch selection switch 506 may be a home screen or any screen display time by the display device 50B. When the operator touches the patch selection switch 506 displayed on the screen or presses this patch selection switch 506, the patch selection switch 506 outputs a command (signal) instructing display of the patches list to the patch selection unit 504.

The preset selection unit 505 displays the list of presets associated with the selected patch based on the database illustrated in FIG. 24 when a patch is selected (designated) by the patch selection unit 504 and makes any preset among the displayed presets selectable. Upon accepting a command (signal) instructing startup (operation), the preset selection unit 505 refers to the database indicating the relationships between the patches and the presets illustrated in FIG. 24 and displays the presets list illustrated in FIG. 27. The preset selection unit 505 accepts selection (designation) of any preset from among the plurality of presets displayed in the presets list.

In this preset selection (designation), it is possible to, for example, select a preset name displayed in the presets list by a touch operation by a finger of the operator or an operation-tool operation by an operation tool 57 such as a selector switch.

The display device 50B has a preset selection switch 507 that is a lower-group selection switch that outputs a command (signal) that starts up (operates) the preset selection unit 505. The preset selection switch 507 starts up (operates) when a patch is selected (designated) by the patch selection unit 504 and outputs a command (signal) instructing display of the presets list to the preset selection unit 505.

Note that the display device 50B has an escape switch 508. The escape switch 508 is displayed on the preset selection screen M11 and the patch settings screen M12. When the operator touches the escape switch 508 on the preset selection screen M11 or presses this escape switch 508, the escape switch 508 outputs to the preset selection unit 505 a signal canceling preset selection. Upon receiving this signal, the preset selection unit 505 cancels the current preset selection.

Furthermore, when the operator touches the escape switch 508 on the patch selection screen M12 or presses this escape switch 508, the escape switch 508 outputs to the patch selection unit 504 a signal canceling patch selection. Upon receiving this signal, the patch selection unit 504 cancels the current patch selection.

After preset or patch selection is canceled by the escape switch 508, the display device 50B may stay on the preset settings screen M11 or the patch settings screen M12 or transition to any screen such as a home screen.

The display device 50B that has such a patch selection switch 506, patch selection unit 504, preset selection switch 507, and preset selection unit 505 notifies the control device 40 of the setting information of at least one setting item included in the preset selected (designated) by the preset selection unit 505. Upon receiving the setting information of the at least one setting item, the control device 40 executes control of the work machine 1 according to the received setting-item setting information.

In this manner, the work memory registration system according to one or more embodiments sets the presets as an upper hierarchy of the plurality of setting items and sets the patches as an upper hierarchy of the plurality of presets. The work memory registration system of one or more embodiments has characteristic features of, on one hand, being able to set patches and, on the other, a configuration having a database of presets associated under patches. This setting of patches facilitates searches of work-machine presets, which are said to normally number in the tens. As such, a work efficiency of the operator of the work machine 1 can be greatly improved.

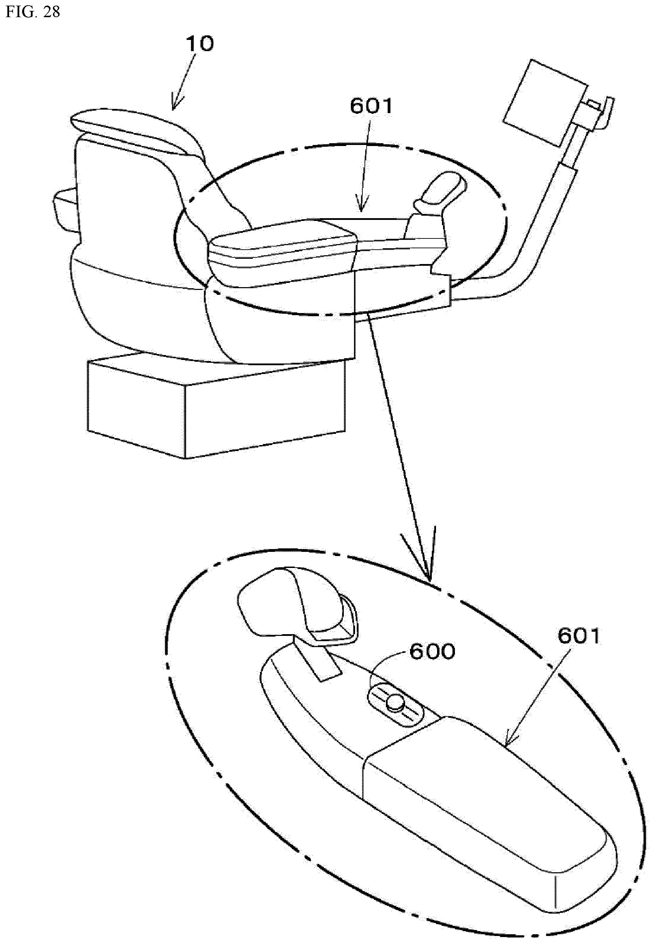

A work memory registration controller (or control panel) 600 according to one or more embodiments is described with reference to FIG. 28 to FIG. 31. The work memory registration controller 600 is a device for executing the above work memory registration system. The work memory registration controller 600 has physical switches corresponding to, among the functions of the work memory registration system above, which is configured as computer software, at least the patch reading switch 503, the patch selection switch 506, the preset reading switch 501, and the preset selection switch 507.

A disposition of the work memory registration controller 600 is described with reference to FIG. 28. FIG. 28 is a diagram illustrating a disposition of the driver seat 10, an arm rest 601, and the work memory registration controller 600, which are provided in the cabin 9.

As illustrated in the upper part of FIG. 28, the work machine 1 has the arm rest 601 on one side of the driver seat 10 enclosed in the dot-dash line. The arm rest 601 is disposed so its long direction is oriented in a front-rear direction and its short direction is oriented in a car-body width direction.

The lower part of FIG. 28 illustrates the arm rest 601 enclosed in the dot-dash line in the upper part and illustrates a configuration viewed by the operator seated in the driver seat 10. As illustrated in the lower part of FIG. 28, the work memory registration controller 600 is provided on an upper face of the arm rest 601 in, for example, a position in front of a central portion. However, the work memory registration controller 600 may be provided in any position as long as the operator seated in the driver seat 10 can easily operate the work memory registration controller 600.

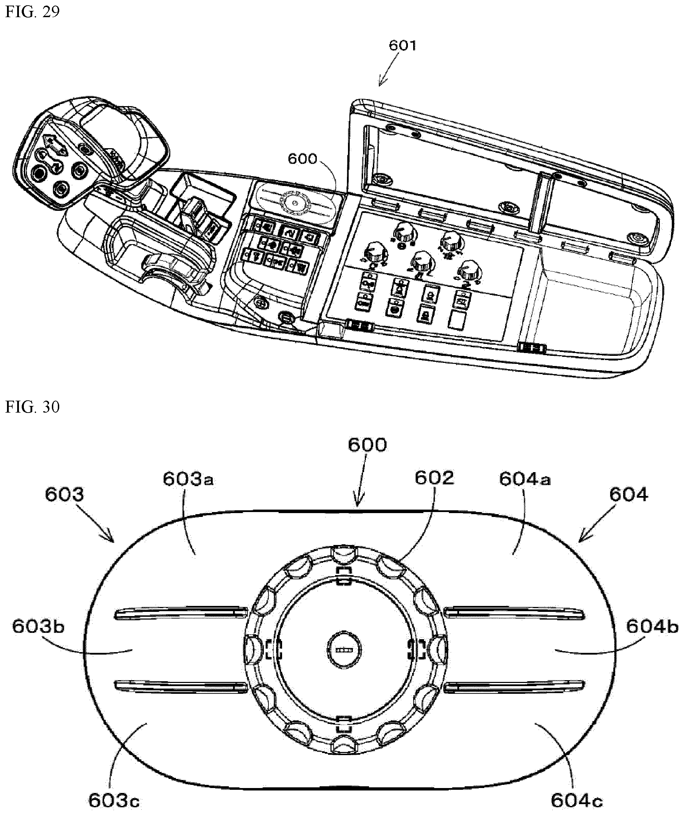

The disposition of the work memory registration controller 600 according to one or more embodiments is described with reference to FIG. 29. FIG. 29 is a diagram illustrating details of the arm rest 601 illustrated in the lower part of FIG. 28. A leftward direction on the page in FIG. 29 corresponds to frontward relative to the driver seat 10. Moreover, an upward direction on the page in FIG. 29 corresponds to outward relative to the driver seat 10. The work memory registration controller 600 is disposed on the upper face of the arm rest 601 in a position that is in front of a central portion in the long direction of the arm rest 601 and opposite the driver seat 10. The work memory registration controller 600 has an operation face touched by the operator oriented upward. The work memory registration controller 600 may be disposed having its operation face oriented toward the operator seated in the driver seat 10.

A configuration of the work memory registration controller 600 is described in detail with reference to FIGS. 30, 31. FIG. 30 is a diagram illustrating a top view of the work memory registration controller 600. FIG. 31 is a side view of a jog dial 602. The work memory registration controller 600 is provided with the jog dial 602, which is a rotary selector; a first switch group 603; and a second switch group 604. The jog dial 602, the first switch group 603, and the second switch group 604 had by the work memory registration controller 600 are all configured as physical switches.

As illustrated in FIG. 30, the first switch group 603 is disposed in a position in front of the jog dial 602. The second switch group 604 is disposed in a position behind the jog dial 602 and near the driver seat 10. That is, the second switch group 604 is disposed in a position that is opposite of the first switch group 603 relative to the jog dial 602.

The first switch group 603 has a physical preset reading button 603a (preset reading switch) that is a lower-group reading switch, a physical patch reading button 603b (patch reading switch) that is an upper-group reading switch, and an escape button 603c that is an escape switch. The preset reading button 603a outputs, upon being operated, a preset reading command causing the control device 40 to read (or cause the preset reading unit 500 to read) the presets stored as the lower groups. The patch reading button 603b outputs, upon being operated, a patch reading command causing the control device 40 to read (or cause the patch reading unit 502 to read) the patches stored as the upper groups. The buttons constituting the first switch group 603 are configured as a button switch such as a pressable push button or a touch-sensor touch button. Each button has a configuration of outputting a signal when operated.

In the first switch group 603, the preset reading button 603a is provided the furthest outward relative to the driver seat 10. The escape button 603c is provided the furthest inward relative to the driver seat 10. The patch reading button 603b is disposed between the preset reading button 603a and the escape button 603c.

The preset reading button 603a corresponds to the preset reading switch 501. When pressed or touched, the preset reading button 603a outputs, via the display device 50B, a command (signal) instructing preset reading to the preset reading unit 500.

The patch reading button 603b corresponds to the patch reading switch 503. When pressed or touched, the patch reading button 603b outputs, via the display device 50B, a command (signal) instructing patch reading to the patch reading unit 502.

The escape button 603c corresponds to the escape switch 508. When pressed or touched, the escape switch 508 outputs, via the display device 50B, a signal canceling preset selection to the preset selection unit 505 or outputs, via the display device 50B, a signal canceling patch selection to the patch selection unit 504.

The jog dial 602 is a switch member having a dial member that can be rotated and pressed and contact points corresponding to the rotating and pressing of the dial member. As illustrated in FIG. 31, the dial member can rotate in a rotation direction R1 and a rotation direction R2 and be pressed in a pressing direction D1.

The jog dial 602 corresponds to the patch selection unit 504 and the preset selection unit 505 and corresponds to a function of the operation tool 57, which is a rotary selector switch. Operation of the jog dial 602 is enabled when, for example, the display device 50B is displaying the patches list illustrated in FIG. 26 or displaying the presets list illustrated in FIG. 27.

When the display device 50B is displaying the patches list illustrated in FIG. 26, the jog dial 602 functions as the patch selection unit 504. By rotating the jog dial 602 in the rotation direction R1 or the rotation direction R2, a target patch is selected from among the displayed plurality of patches. Upon doing so, the jog dial 602 is pressed in the pressing direction D1, thereby confirming patch selection. This selection method is similar to the selection by the touch operation by a finger of the operator and the operation-tool operation by an operation tool 57 such as a selector switch described above.

When patch selection is confirmed, as illustrated in FIG. 27, the display device 50B displays the presets associated with the selected patch. When the display device 50B is displaying the presets list illustrated in FIG. 27, the jog dial 602 functions as the preset selection unit 505. Rotating the jog dial 602 in the rotation direction R1 or the rotation direction R2 selects a target preset from among the displayed plurality of presets. Upon doing so, the jog dial 602 is pressed in the pressing direction D1, thereby confirming preset selection. This selection method is similar to the selection by the touch operation by a finger of the operator and the operation-tool operation by an operation tool 57 such as a selector switch described above.

When preset selection is confirmed by the jog dial 602, the display device 50B notifies the control device 40 of the setting information of at least one setting item included in the selected preset. Upon receiving the setting information of the at least one setting item, the control device 40 executes control of the work machine 1 according to the received setting-item setting information.

The second switch group 604 is constituted by a plurality of switches that is enabled when the display device 50B is displaying the presets list illustrated in FIG. 27. Specifically, the second switch group 604 has the same number of buttons (switches) as the number of presets displayed in the presets list illustrated in FIG. 27. The buttons constituting the second switch group 604 are configured as a button switch such as a pressable push button or a touch-sensor touch button. Each button has a configuration of outputting a signal when operated.

In one or more embodiments, the display device 50B limits the number of presets that can be associated as one patch to three or less. As such, the second switch group 604 is constituted by three buttons: a first preset designation button 604a, a second preset designation button 604b, and a third preset designation button 604c.

In the second switch group 604, the first preset designation button 604a is provided in a position that is opposite of the preset reading button 603a relative to the jog dial 602 and the furthest outward relative to the driver seat 10. The third preset designation button 604c is provided in a position that is opposite of the escape button 603c relative to the jog dial 602 and the furthest inward relative to the driver seat 10. The second preset designation button 604b is disposed in a position that is opposite of the patch reading button 603b relative to the jog dial 602 and between the preset reading button 603a and the escape button 603c.

The first preset designation button 604a to the third preset designation button 604c correspond to the preset selection function of the preset selection unit 505. Specifically, the first preset designation button 604a corresponds to, for example, "Field A ride-in preset", which is the preset displayed first from the top (the highest) in the presets list illustrated in FIG. 27. When the first preset designation button 604a is pressed, the preset displayed the highest in the presets list can be directly selected.

The second preset designation button 604b corresponds to, for example, "Field A plowing work daytime preset", which is the preset displayed second from the top (in the middle) in the presets list illustrated in FIG. 27. When the second preset designation button 604b is pressed, the preset displayed second from the top in the presets list can be directly selected.

The third preset designation button 604c corresponds to, for example, "Field A plowing work nighttime preset", which is the preset displayed third from the top (the lowest) in the presets list illustrated in FIG. 27. When the third preset designation button 604c is pressed, the preset displayed third from the top in the presets list can be directly selected.

In this manner, an order of disposing the first preset designation button 604a to the third preset designation button 604c corresponds to a display order of the presets indicated in the presets list of FIG. 27. Therefore, the operator can accurately press or touch the first preset designation button 604a to the third preset designation button 604c corresponding to a preset wanting to be selected without viewing the work memory registration controller 600.

When a preset is directly selected by the first preset designation button 604a to the third preset designation button 604c, the display device 50B notifies the control device 40 of the setting information of at least one setting item included in the selected preset. Upon receiving the setting information of the at least one setting item, the control device 40 executes control of the work machine 1 according to the received setting-item setting information.

In this manner, the work memory registration controller 600 according to one or more embodiments is constituted by switches and buttons corresponding to operations of the work memory registration system. Therefore, the operator can easily search presets of the work machine by operating the work memory registration controller 600 at hand, without reaching their hand to the screen of the display device 50B.

Furthermore, the second switch group is disposed in a position that is behind the first switch group and near the driver seat 10. Therefore, the operator can more accurately and reliably press or touch the first preset designation button 604a to the third preset designation button 604c corresponding to a preset wanting to be selected, without viewing the work memory registration controller 600.

In this manner, using the work memory registration controller 600 to operate the work memory registration system can provide an even greater improvement of a work efficiency of the operator of the work machine 1.

Although the invention has been described with respect to only a limited number of embodiments, those skilled in the art, having benefit of this invention, will appreciate that various other embodiments may be devised without departing from the scope of the present invention. Accordingly, the scope of the invention should be limited only by the attached claims.

### [Description of Reference Signs]

- 1: Work machine
- 50B: Display device
- 53: Item display portion
- 61: Setting box
- 62: Setting display portion
- 67: Setting input portion
- 500: Preset reading unit
- 501: Preset reading switch
- 502: Patch reading unit
- 503: Patch reading switch
- 504: Patch selection unit
- 505: Preset selection unit
- 506: Patch selection switch
- 507: Preset selection switch
- 508: Escape switch
- 600: Work memory registration controller
- 601: Arm rest
- 602: Jog dial
- 603: First switch group
- 604: Second switch group
- 603a: Preset reading button
- 603b: Patch reading button
- 603c: Escape button
- 604a: First preset designation button
- 604b: Second preset designation button
- 604c: Third preset designation button

## Claims

1. A work machine (1), comprising:
a control device (40) configured to control the work machine (1) and:
store, in a storage (51), a plurality of types of setting information that are set for setting items relating to functions of the work machine (1);
the control device is further configured to:
among the plurality of types of setting information, associate one or more types of selected setting information with one another, as one lower group, and store, in the storage (51), a plurality of the lower groups; and
among the plurality of lower groups stored in the storage (51), associate one or more selected lower groups with one upper group, and store, in the storage (51), a plurality of the upper groups,
wherein the work machine (1) further comprises:
an upper-group selector (504) controlled by the control device (40) and configured to select one of the upper groups stored in the storage (51); and
a lower-group selector (505) controlled by the control device (40) and configured to select one of the lower groups associated with the one of the upper groups, wherein
the control device (40) is configured to control the work machine (1) based on the one or
more types of selected setting information associated with one another as the one of the lower groups.

2. The work machine (1) of claim 1, further comprising:
an upper-group reader (502) controlled by the control device (40) and configured to read the upper groups stored in the storage (51);
a lower-group reader (500) controlled by the control device (40) and configured to read the lower groups stored in the storage (51); and
a display controller (56) configured to display, on a display (55), the upper groups read by the upper-group reader (502) or the lower groups read by the lower-group reader (500), based on signals output from the control device (40).

3. The work machine (1) of claim 1 or claim 2, further comprising:
an upper-group reading switch (503) configured to output, upon receiving a user operation, a signal that instructs the control device (40) to cause the upper-group reader to operate; and
a lower-group reading switch (501) configured to output, upon receiving a user operation, a signal that instructs the control device (40) to cause the lower-group reader to operate.

4. The work machine (1) of claim 3, further comprising:
an upper-group selection switch (506) configured to output, upon receiving a user operation, a signal that instructs the control device (40) to cause the upper-group selector to operate; and
a lower-group selection switch (507) configured to output, upon receiving a user operation, a signal that instructs the control device (40) to cause the lower-group selector to operate.

5. The work machine (1) of claim 4, wherein
while the work machine (1) is traveling, the control device (40) is configured to disable the signals output by the upper-group selection switch (506) and the lower-group selection switch (507).

6. The work machine (1) of claim 4 or claim 5, wherein
the upper-group reading switch (503), the lower-group reading switch (501), the upper-group selection switch (506), and the lower-group selection switch (507) are physical switches, and
the lower-group selection switch (507) is disposed in a position adjacent to the upper-group selection switch (506).

7. The work machine (1) of claim 6, wherein
the upper-group reading switch (503) and the lower-group reading switch (501) are
disposed in positions opposite of the lower-group selection switch (507) relative to the upper-group selection switch (506).

8. The work machine (1) of claim 6 or claim 7, wherein
the upper-group selection switch (506) is configured as a rotary selector.

9. The work machine (1) of any one of claims 6-8, further comprising:
a driver seat (10); and
an arm rest (601) disposed at a side of the driver seat (10); wherein
the upper-group reading switch (503), the lower-group reading switch (501), the upper-group selection switch (506), and the lower-group selection switch (507) are disposed in the arm rest (10).

10. The work machine (1) of any one of claims 1-9, further comprising:
an operation panel (50B) configured to display preset buttons (331a-331c) and receive a user operation to:
select one or more of the setting items, and
specify one of the preset buttons, wherein
once the one of the preset buttons is specified by the user operation, the control device (40) determines the one or more of the setting items as a preset corresponding to the one of the preset buttons,
upon receiving a user operation on the one of the preset buttons, the operation panel (50B) displays the one or more of the setting items determined as the preset, and
once the operation panel (50B) receives a user operation to add or remove a setting item to or from the one or more of the setting items, the control device (40) adds or removes the setting item to or from the preset.

11. The work machine (1) of claim 10, wherein
the operation panel(50B) is configured to further display patch buttons and receive a user operation to:
select one or more of presets each corresponding to the one or more of the setting items, and
specify one of the patch buttons, and
once the one of the patch buttons is specified by the user operation, the control device (40) determines the one or more of presets as a patch corresponding to the one of the patch buttons.

12. The work machine (1) of claim 11 when dependent on any one of claims 1-8, further comprising:
a driver seat (10); and
an arm rest (601) disposed at a side of the driver seat (1) and comprising:
a control panel (600) disposed between a front end and a center in a longitudinal direction of the arm rest (601), wherein
the control panel (600) comprises:
a physical preset reading button (603a) configured to output, upon being operated, a preset reading command causing the control device (40) to read the presets stored as the lower groups; and
a physical patch reading button (603b) configured to output, upon being operated, a patch reading command causing the control device (40) to read the patches stored as the upper groups.

## Patentansprüche

1. Eine Arbeitsmaschine (1), aufweisend:
eine Steuerungsvorrichtung (40), die konfiguriert ist, um die Arbeitsmaschine (1) zu steuern und:
in einem Speicher (51), einer Vielzahl von Arten von Einstellungsinformationen, die zum Einstellen von Elementen betreffend Funktionen der Arbeitsmaschine (1) eingestellt sind, zu speichern;
die Steuerungsvorrichtung ferner konfiguriert ist, um:
aus der Vielzahl von Typen von Einstellungsinformationen einen oder mehrere Typen von ausgewählten Einstellungsinformationen miteinander als eine untere Gruppe zu assoziieren und in dem Speicher (51) eine Vielzahl der unteren Gruppen zu speichern; und
aus der Vielzahl der in dem Speicher (51) gespeicherten unteren Gruppen eine oder mehrere ausgewählte untere Gruppen mit einer oberen Gruppe zu assoziieren, und in dem Speicher (51) eine Vielzahl der oberen Gruppen zu speichern,
wobei die Arbeitsmaschine (1) ferner aufweist:
einen Obergruppen-Selektor (504), der von der Steuerungsvorrichtung (40) gesteuert wird und konfiguriert ist, um eine der in dem Speicher (51) gespeicherte obere Gruppe auszuwählen; und
einen Untergruppen-Selektor (505), der durch die Steuerungsvorrichtung (40) gesteuert wird und konfiguriert ist, um eine der unteren Gruppen auszuwählen, die mit der einen der oberen Gruppen assoziiert ist, wobei
die Steuerungsvorrichtung (40) konfiguriert ist, um die Arbeitsmaschine (1) auf der Grundlage der einen oder mehreren Arten von ausgewählten Einstellungsinformationen, die miteinander als die eine der unteren Gruppen assoziiert sind, zu steuern.

2. Die Arbeitsmaschine (1) nach Anspruch 1, ferner aufweisend:
einen Obergruppen-Leser (502), der von der Steuerungsvorrichtung (40) gesteuert wird und konfiguriert ist, um die in dem Speicher (51) gespeicherten oberen Gruppen zu lesen;
einen Untergruppen-Leser (500), der von der Steuerungsvorrichtung (40) gesteuert wird und konfiguriert ist, um die in dem Speicher (51) gespeicherten unteren Gruppen zu lesen; und
eine Anzeigesteuerung (56), die konfiguriert ist, um auf einer Anzeige (55) die von dem Obergruppen-Leser (502) gelesenen oberen Gruppen oder die von dem Untergruppen-Leser (500) gelesenen unteren Gruppen anzuzeigen, basierend auf Signalen, die von der Steuerungsvorrichtung (40) ausgegeben werden.

3. Die Arbeitsmaschine (1) nach Anspruch 1 oder Anspruch 2, ferner aufweisend:
einen Obergruppen-Leseschalter (503), der konfiguriert ist, um bei Empfang einer Benutzeroperation ein Signal auszugeben, das die Steuerungseinheit (40) anweist, den Obergruppen-Leser zu betreiben; und
einen Untergruppen-Leseschalter (501), der konfiguriert ist, um bei Empfang einer Benutzeroperation ein Signal auszugeben, das die Steuerungsvorrichtung (40) anweist, den Untergruppen-Leser zu betreiben.

4. Die Arbeitsmaschine (1) nach Anspruch 3, ferner aufweisend:
einen Obergruppen-Selektorschalter (506), der konfiguriert ist, um beim Empfang einer Benutzeroperation ein Signal auszugeben, das die Steuerungsvorrichtung (40) anweist, den Obergruppen-Selektor zu betreiben; und
einen Untergruppen-Selektorschalter (507), der konfiguriert ist, um beim Empfang einer Benutzeroperation ein Signal auszugeben, das die Steuerungsvorrichtung (40) anweist, den Untergruppen-Selektor zu betreiben.

5. Die Arbeitsmaschine (1) nach Anspruch 4, wobei
während die Arbeitsmaschine (1) fährt, die Steuerungsvorrichtung (40) konfiguriert ist, um die von dem Obergruppen-Selektorschalter (506) und dem Untergruppen-Selektorschalter (507) ausgegebenen Signale zu deaktivieren.

6. Die Arbeitsmaschine (1) nach Anspruch 4 oder Anspruch 5, wobei
der Obergruppen-Leseschalter (503), der Untergruppen-Leseschalter (501), der Obergruppen-Selektorschalter (506) und der Untergruppen-Selektorschalter (507) physikalische Schalter sind, und
der Untergruppen-Selektorschalter (507) in einer Position angrenzend an den Obergruppen-Selektorschalter (506) angeordnet ist.

7. Die Arbeitsmaschine (1) nach Anspruch 6, wobei
der Obergruppen-Selektorschalter (503) und der Untergruppen-Selektorschalter (501) in Positionen gegenüber dem Untergruppen-Selektorschalter (507) relativ zum Obergruppen-Selektorschalter (506) angeordnet sind.

8. Die Arbeitsmaschine (1) nach Anspruch 6 oder Anspruch 7, wobei
der Obergruppen-Selektorschalter (506) als Drehselektor konfiguriert ist.

9. Die Arbeitsmaschine (1) nach einem der Ansprüche 6 bis 8, ferner aufweisend:
einen Fahrersitz (10); und
eine Armlehne (601), die an einer Seite des Fahrersitzes (10) angeordnet ist, wobei
der Obergruppen-Leseschalter (503), der Untergruppen-Leseschalter (501), der Obergruppen-Selektorschalter (506) und der Untergruppen-Selektorschalter (507) in der Armlehne (10) angeordnet sind.

10. Die Arbeitsmaschine (1) nach einem der Ansprüche 1 bis 9, ferner aufweisend:
ein Bedienfeld (50B), das konfiguriert ist, um voreingestellte Tasten (331a-331c) anzuzeigen und eine Benutzerbedienung zu empfangen, um:
einen oder mehrere der Einstellelemente auszuwählen, und
eine der voreingestellten Tasten zu spezifizieren, wobei
sobald die eine der voreingestellten Tasten durch die Benutzerbedienung bestimmt wird, die Steuerungsvorrichtung (40) das eine oder die mehreren Einstellelemente als eine Voreinstellung bestimmt, die der einen der voreingestellten Tasten entspricht,
bei Empfang einer Benutzerbetätigung auf der einen der voreingestellten Tasten zeigt das Bedienfeld (50B) das eine oder die mehreren der Einstellelemente an, die als die Voreinstellung bestimmt sind, und
sobald das Bedienfeld (50B) eine Benutzerbedienung empfängt, um ein Einstellelement zu dem einen oder den mehreren Einstellelementen hinzuzufügen oder daraus zu entfernen, die Steuerungsvorrichtung (40) das Einstellelement zu der Voreinstellung hinzufügt oder daraus entfernt.

11. Die Arbeitsmaschine (1) nach Anspruch 10, wobei
das Bedienfeld (50B) konfiguriert ist, um ferner Patch-Tasten anzuzeigen und eine Benutzerbedienung zu empfangen, um:
eine oder mehrere Voreinstellungen auszuwählen, die jeweils dem einen oder den mehreren Einstellelementen entsprechen, und
eine der Patch-Tasten zu spezifizieren, und
sobald die eine der Patch-Tasten durch die Benutzerbedienung spezifiziert ist, bestimmt die Steuerungsvorrichtung (40) die eine oder mehrere der Voreinstellungen als ein Patch, der der einen der Patch-Tasten entspricht.

12. Die Arbeitsmaschine (1) nach Anspruch 11, wenn sie von einem der Ansprüche 1 bis 8 abhängig ist, ferner aufweisend:
einen Fahrersitz (10); und
eine Armlehne (601), die an einer Seite des Fahrersitzes (1) angeordnet ist und Folgendes aufweist:
ein Bedienfeld (600), das zwischen einem vorderen Ende und einer Mitte in einer longitudinalen Richtung der Armlehne (601) angeordnet ist, wobei das Bedienfeld (600) aufweist:
eine physikalische voreingestellte Lesetaste (603a), die konfiguriert ist, um bei Betätigung einen voreingestellten Lesebefehl auszugeben, der die Steuerungsvorrichtung (40) veranlasst, die Voreinstellungen zu lesen, die als die unteren Gruppen gespeichert sind; und
eine physikalische Patch-Lesetaste (603b), die konfiguriert ist, um bei Betätigung einen Patch-Lesebefehl auszugeben, der die Steuerungsvorrichtung (40) veranlasst, die Patches zu lesen, die als die oberen Gruppen gespeichert sind.

## Revendications

1. Machine de travail (1), comprenant :
un dispositif de commande (40) configuré pour commander la machine de travail (1) et :
stocker, dans une mémoire (51), une pluralité de types d'informations de réglage qui sont définies pour régler des éléments relatifs aux fonctions de la machine de travail (1) ;
le dispositif de commande est en outre configuré pour :
parmi la pluralité de types d'informations de réglage, associer un ou plusieurs types d'informations de réglage sélectionnées les uns aux autres, en tant que groupe inférieur, et stocker, dans la mémoire (51), une pluralité des groupes inférieurs ; et
parmi la pluralité de groupes inférieurs stockés dans la mémoire (51), associer un ou plusieurs groupes inférieurs sélectionnés à un groupe supérieur, et stocker, dans la mémoire (51), une pluralité des groupes supérieurs,
dans laquelle la machine de travail (1) comprend en outre :
un sélecteur de groupe supérieur (504) commandé par le dispositif de commande (40) et configuré pour sélectionner l'un des groupes supérieurs stockés dans la mémoire (51) ; et
un sélecteur de groupe inférieur (505) commandé par le dispositif de commande (40) et configuré pour sélectionner l'un des groupes inférieurs associés audit un des groupes supérieurs, dans laquelle
le dispositif de commande (40) est configuré pour commander la machine de travail (1) sur la base desdits un ou plusieurs types d'informations de réglage sélectionnées associés les uns aux autres comme ledit un des groupes inférieurs.

2. Machine de travail (1) selon la revendication 1, comprenant en outre :
un lecteur de groupes supérieurs (502) commandé par le dispositif de commande (40) et configuré pour lire les groupes supérieurs stockés dans la mémoire (51) ;
un lecteur de groupes inférieurs (500) commandé par le dispositif de commande (40) et configuré pour lire les groupes inférieurs stockés dans la mémoire (51) ; et
un contrôleur d'affichage (56) configuré pour afficher, sur un écran (55), les groupes supérieurs lus par le lecteur de groupes supérieurs (502) ou les groupes inférieurs lus par le lecteur de groupes inférieurs (500), sur la base de signaux émis par le dispositif de commande (40).

3. Machine de travail (1) selon la revendication 1 ou la revendication 2, comprenant en outre :
un commutateur de lecture de groupes supérieurs (503) configuré pour émettre, sur réception d'une opération d'un utilisateur, un signal qui ordonne au dispositif de commande (40) de faire fonctionner le lecteur de groupes supérieurs ; et
un commutateur de lecture de groupes inférieurs (501) configuré pour émettre, sur réception d'une opération d'un utilisateur, un signal qui ordonne au dispositif de commande (40) de faire fonctionner le lecteur de groupes inférieurs.

4. Machine de travail (1) selon la revendication 3, comprenant en outre :
un commutateur de sélection de groupes supérieurs (506) configuré pour émettre, sur réception d'une opération d'un utilisateur, un signal qui ordonne au dispositif de commande (40) de faire fonctionner le sélecteur de groupes supérieurs ; et
un commutateur de sélection de groupes inférieurs (507) configuré pour émettre, sur réception d'une opération d'un utilisateur, un signal qui ordonne au dispositif de commande (40) de faire fonctionner le sélecteur de groupes inférieurs.

5. Machine de travail (1) selon la revendication 4, dans laquelle
lorsque la machine de travail (1) se déplace, le dispositif de commande (40) est configuré pour désactiver les signaux émis par le commutateur de sélection de groupes supérieurs (506) et le commutateur de sélection de groupes inférieurs (507).

6. Machine de travail (1) selon la revendication 4 ou la revendication 5, dans laquelle
le commutateur de lecture de groupes supérieurs (503), le commutateur de lecture de groupes inférieurs (501), le commutateur de sélection de groupes supérieurs (506) et le commutateur de sélection de groupes inférieurs (507) sont des commutateurs physiques, et
le commutateur de sélection de groupes inférieurs (507) est disposé dans une position adjacente au commutateur de sélection de groupes supérieurs (506).

7. Machine de travail (1) selon la revendication 6, dans laquelle
le commutateur de lecture de groupes supérieurs (503) et le commutateur de lecture de groupes inférieurs (501) sont disposés dans des positions opposées au commutateur de sélection de groupes inférieurs (507) par rapport au commutateur de sélection de groupes supérieurs (506).

8. Machine de travail (1) selon la revendication 6 ou la revendication 7, dans laquelle
le commutateur de sélection de groupes supérieurs (506) est configuré comme un sélecteur rotatif.

9. Machine de travail (1) selon l'une quelconque des revendications 6 à 8, comprenant en outre :
un siège de conducteur (10) ; et
un accoudoir (601) disposé sur un côté du siège de conducteur (10) ; dans laquelle
le commutateur de lecture de groupes supérieurs (503), le commutateur de lecture de groupes inférieurs (501), le commutateur de sélection de groupes supérieurs (506) et le commutateur de sélection de groupes inférieurs (507) sont disposés dans l'accoudoir (10).

10. Machine de travail (1) selon l'une quelconque des revendications 1 à 9, comprenant en outre :
un panneau de commande (50B) configuré pour afficher des boutons préréglés (331a-331c) et recevoir une opération d'un utilisateur pour :
sélectionner un ou plusieurs des éléments de réglage, et
spécifier l'un des boutons de préréglage, dans laquelle
une fois que l'un des boutons préréglés est spécifié par ladite opération d'un utilisateur, le dispositif de commande (40) détermine lesdits un ou plusieurs éléments de réglage comme étant un préréglage correspondant audit un des boutons de préréglage,
sur réception d'une opération d'un utilisateur sur ledit un des boutons de préréglage, le panneau de commande (50B) affiche lesdits un ou plusieurs éléments de réglage déterminés comme étant un préréglage, et
une fois que le panneau de commande (50B) reçoit une opération d'un utilisateur pour ajouter ou supprimer un élément de réglage auxdits ou desdits un ou plusieurs éléments de réglage, le dispositif de commande (40) ajoute ou supprime l'élément de réglage audit ou dudit préréglage.

11. Machine de travail (1) selon la revendication 10, dans laquelle
le panneau de commande (50B) est configuré pour afficher en outre des boutons de connexion et recevoir une opération d'un utilisateur pour :
sélectionner un ou plusieurs préréglages correspondant chacun auxdits un ou plusieurs éléments de réglage, et
spécifier l'un des boutons de connexion, et
une fois que ledit un des boutons de connexion est spécifié par ladite opération d'un utilisateur, le dispositif de commande (40) détermine lesdits un ou plusieurs préréglages en tant que connexion correspondant à l'un des boutons de connexion.

12. Machine de travail (1) selon la revendication 11 lorsqu'elle dépend de l'une quelconque des revendications 1 à 8, comprenant en outre :
un siège de conducteur (10) ; et
un accoudoir (601) disposé sur un côté du siège de conducteur (10) et comprenant :
un panneau de commande (600) disposé entre une extrémité avant et un centre dans une direction longitudinale de l'accoudoir (601), dans laquelle
le panneau de commande (600) comprend :
un bouton de lecture de préréglage physique (603a) configuré pour émettre, lorsqu'il est actionné, une commande de lecture de préréglage amenant le dispositif de commande (40) à lire les préréglages stockés en tant que lesdits groupes inférieurs ; et
un bouton de lecture de connexion physique (603b) configuré pour émettre, lorsqu'il est actionné, une commande de lecture de connexion amenant le dispositif de commande (40) à lire les connexions stockées en tant que lesdits groupes supérieurs.
